(19) Europäisches Patentamt
European Patent Office
Office européen des brevets

(11) EP 4 063 400 A1

(12) EUROPEAN PATENT APPLICATION
published in accordance with Art. 153(4) EPC

(43) Date of publication:
**28.09.2022 Bulletin 2022/39**

(21) Application number: **20889423.8**

(22) Date of filing: **18.03.2020**

(51) International Patent Classification (IPC):
***C08B 37/08*** *(2006.01)*

(52) Cooperative Patent Classification (CPC):
**C08B 37/003**

(86) International application number:
**PCT/CN2020/079821**

(87) International publication number:
**WO 2021/098098 (27.05.2021 Gazette 2021/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.11.2019 CN 201911130065**

(71) Applicant: **Blafar Biotechnology (Hangzhou) Ltd.**
**Zhejiang 310018 (CN)**

(72) Inventor: **WANG, Wenxin**
**Blackrock A94W1k6**
**Dublin (IE)**

(74) Representative: **Huang, Liwei**
**Cäcilienstraße 12**
**40597 Düsseldorf (DE)**

# (54) SULFHYDRYL MODIFIED HYALURONIC ACID, PREPARATION METHOD THEREFOR AND USE THEREOF

(57) The present invention relates to a sulfhydryl modified hyaluronic acid compound, a preparation method therefor and an application thereof. The sulfhydryl modified hyaluronic acid in the present invention has a high mercaptan content, and a small change in the molecular mass of the main chain molecule, and has a significantly improved viscosity, water retention, and oxidation resistance. According to the present invention, the compound is prepared from hyaluronic acid modified by acryl-based compounds and polysulfhydryl compounds by means of the Michael addition reaction of mercaptan and conjugated double bonds. The preparation method can flexibly control the structure and composition of a synthesized product, the type and content of the terminal functional group of a large number of compound molecules, etc. The use of a reagent having high biocompatibility effectively controls the production cost and reduces the toxicity during the synthesis. It can ensure under the conditions of the use of safe reagents and simple reaction steps, the sulfhydryl modified hyaluronic acid having the structure of raw materials and the biological activity maintained well, having the type and content of functional groups adjustable on demand, and used as the extracellular matrix material can be obtained to meet a plurality of clinical application requirements.

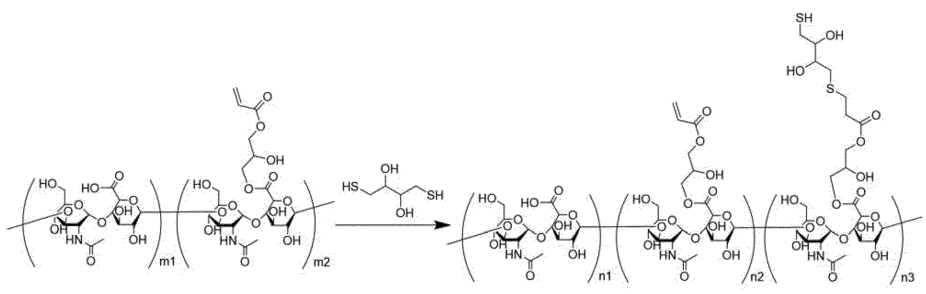

HA-A1

HA-A1-SH1

FIG. 9



Processed by Luminess, 75001 PARIS (FR)

## Description

The present application claims priority to Chinese Patent Application No. 201911130065.7 filed to China National Intellectual Property Administration on Nov. 18, 2019 and entitled "SULFHYDRYL MODIFIED HYALURONIC ACID, PREPARATION METHOD THEREFOR AND USE THEREOF", which is incorporated herein by reference in its entirety.

## TECHNICAL FIELD

The present disclosure relates to the field of biomaterials, in particular to a sulfhydryl-modified hyaluronic acid, a preparation method therefor and use thereof.

## BACKGROUND

Biocompatible polymers have many important physiological functions. Common biocompatible polymers include polysaccharides, proteins, synthetic polymers and the like, among which hyaluronic acid (HA) is representative.

In 1934, Professor Karl Mayer first extracted a natural hyaluronic acid, which is a natural heteropolysaccharide composed of alternating units of d-glucuronide and N-acetyl-d-glucosamine, from the lens of bovine eye. Followed by decades of research, hyaluronic acid was found to be widely present in connective tissues of humans and other vertebrates, for example, in tissues and organs such as the intercellular space, tissues of the deployable joints, umbilical cord, skin, cartilage, vascular wall, synovial fluid and cockscomb. Hyaluronic acid is a linear polymer polysaccharide with disaccharide repeating units in its structure. d-glucuronic acid in the repeating units is linked to N-acetyl-d-glucosamine through β-1,3 glycosidic bonds, and thousands of disaccharide repeating units are linked through β-1,4 glycosidic bonds to form a fully straight-chain and linear polymer structure. The chain length of HA varies from about 200 kDa to about 10 MDa, with the range from 2 MDa to 5 MDa being the most common. More than 50% of HA is present in skin, lung and intestinal tissue. In addition, it is also present in interstitial tissues such as synovial fluid, cartilage, umbilical cord, and vascular wall. HA in the human body mainly exerts physiological functions such as lubrication and buffering, filling and diffusion barrier, and free radical removal. Currently marketed HA products can be extracted from animal tissues such as cockscomb, lens of eye, cerebral cartilage and synovial fluid, or prepared by the fermentation of bacteria such as streptococcus and pseudomonas aeruginosa.

In recent years, with the in-depth research on HA, it has been widely used in the pharmaceutical field, such as for the preparation of drug delivery systems, for the treatment of orthopedic and ophthalmic diseases, and for the prevention of post-operative adhesions and the repairing of soft tissues, which has become a research hot spot in the fields of tissue engineering and regenerative medicine.

Although natural HA has excellent biocompatibility and anti-inflammatory effects, it has poor mechanical strength and degradability when in a pure state. Therefore, as a scaffold material for tissue engineering, HA must be chemically modified in a suitable way or used in combination with other materials to improve those deficiencies, to better exert its biological effects, and to provide a good environment for the survival and function of cells and the repairing and regeneration of tissues. HA can be temporarily physically cross-linked through intermolecular physical interactions such as hydrogen bonding, electrostatic interactions, hydrophobic interactions and inter-chain entanglement, which is a reversible cross-linking. Unmodified HA is hardly synergistic and cannot form stable hydrogels. High concentrations of unmodified HA with high molecular weight can form gel-like solutions without chemical cross-linking. Such gels do not need additional cross-linking agents, but has poor mechanical properties and rapid in vivo metabolism, and thus cannot meet the application requirements of most tissue engineering.

The natural HA which is easy to degrade can be chemically modified to obtain better physical stability and mechanical strength. The chemical cross-linking of HA can be realized by intramolecular or intermolecular cross-linking of HA using micromolecular cross-linking agents, or by chemical modification of HA to introduce reactive functional groups. HA has a large number of primary and secondary hydroxyl groups and carboxyl groups in its molecular structure, and thus can be cross-linked using bifunctional micromolecular cross-linking agents, such as epoxy compounds, glutaraldehyde, divinyl sulfone, and multifunctional hydrazide compounds. In addition, functional HA can be obtained by chemical modification of groups on the side chain of HA, such as aldehyde-modified HA, hydrazide-modified HA, thiolated HA (i.e., sulfhydrylated HA), and double-bonded HA. The functional HA is cross-linked by itself or with other components to obtain a class of hydrogels with excellent mechanical and degradation properties. HA can also be matched with other biological functional materials to make up for each other's deficiencies, thereby obtaining three-dimensional scaffold materials with excellent properties.

Among them, the sulfhydrylated HA is very suitable for the application in the fields such as antioxidation health care products, biopharmaceuticals, medical cosmetology and cosmetics due to its specific chemical properties.

The existing preparation methods for the sulfhydrylated HA mainly includes the following:
Prestwich and Shu, Xizozheng et al firstly reported a dithiodihydrazide method for synthesizing a sulfhydryl-modified

hyaluronic acid derivative, hereinafter referred to as HA-SH, the structure of which is shown in FIG. 1 (document 1: Biomacromolecules, 2002, 3, 1304 and Patent Publication No. CN101511875A). In this method, a dihydrazide compound containing disulfide bonds needs to be synthesized in advance through a reaction of multiple steps, in which the reagents used are high in toxicity, for example, hydrazine hydrate, which is a highly toxic compound with an oral LD50 of 129 mg/kg in rats. The hyaluronic acid was subsequently cross-linked with the dithiodihydrazide compound to form a gel by condensation reaction with EDCI, i.e., a carbodiimide dehydrating agent. It is not easy to obtain a uniform sulfhydryl derivative because the reaction system is gelled as a whole and cannot be continuously stirred to maintain an optimum reaction condition of pH 4.75. The resulting gel was subjected to dithiothreitol reduction reaction to obtain the sulfhydryl-modified hyaluronic acid derivative.

In 2008, Prestwich et al reported a method for synthesizing HA-SH by a thiocycloethane modification, as shown in FIG. 2 (document 2: Biomaterials, 2008, 29, 1388). In this method, a modifying reagent does not need to be synthesized in advance, but the modification ratio is relatively low due to the limitation on the low reactivity of primary alcohol of hyaluronic acid.

In 2007, Shimobouji et al reported a method for synthesizing HA-SH by a two-step modification involving dihydrazide and Traut's reagent, as shown in FIG. 3 (document 3: J Biomed Mater Res A., 2007, 80, 916). In the first step, the hyaluronic acid was modified by using an excess of an dihydrazide compound to obtain an intermediate product, which was then subjected to purification operations such as dialysis and lyophilization to obtain a hydrazide-modified hyaluronic acid derivative. In the second step, the hydrazide-modified hyaluronic acid derivative was modified by using Traut's reagent before subjected to a series of purification operations to obtain the sulfhydryl-modified hyaluronic acid derivative. The Traut's reagent used in the second step of the reaction is expensive, with the reference price of 374 €/g (Sigma, purity 98%). This greatly hinders the large-scale industrial production of HA-SH by this method.

In 2007, Tae Gwan Park et al reported a method for synthesizing HA-SH by a cystamine modification, as shown in FIG. 4 (document 4: Journal of Controlled Release, 2007, 119, 245). This method is similar to the dithiodihydrazide method, in which a cystamine containing disulfide bonds is used as a modification material, and dehydration condensation with EDCI and reduction of the disulfide bonds with dithiothreitol are performed to finally obtain the HA-SH derivative. Since the reactivity of the amino group is lower than that of the hydrazide, the degree of substitution in this method is lower than that in the dithiodihydrazide method for synthesizing HA-SH.

In 2012, C. Yan et al reported a method for synthesizing HA-SH by modifying the hyaluronic acid with β -mercaptoethylamine, as shown in FIG. 5 (document 5: Acta Biomaterialia, 2012, 8, 3643). In this method, a thiol-containing small molecule compound was used to directly modify the carboxyl of hyaluronic acid, and thiol groups were not protected in the reaction process. Since the sulfhydryl can also undergo an EDCI catalyzed coupling reaction with the carboxyl, the product obtained by this method is actually a mixture of sulfhydryl-modified and amino-modified hyaluronic acids, and has a degree of substitution of thiol far lower than that of HA-SH synthesized by the hydrazide method.

In 2015, Andreas Bernkop-Schunrch et al reported a method for synthesizing HA-SH using cysteine ethyl ester, as shown in FIG. 6 (document 6: International Journal of Pharmaceutics, 2015, 478, 383). This method is similar to the β-mercaptoethylamine method, in which the thiol in the reaction process also participates in the carboxyl coupling reaction, so that the substitution efficiency cannot be effectively improved.

Patent Publication No. CN101200504A discloses a method for synthesizing HA-SH by modifying hyaluronic acid with a modified dithiodihydrazide compound, as shown in FIG. 7. Since the modified dithiodihydrazide compound used in this method has a longer backbone structure, the reactivity of the sulfhydryl in the resulting HA-SH is higher than that of thiol obtained by a conventional dithiodihydrazide method. However, the modified dithiodihydrazide needs to be prepared by a multi-step synthesis method, thereby having a relatively high industrial cost.

Patent Publication No. CN103613686A discloses a series of methods for synthesizing HA-SH, which includes the structure of HA-SH in the conventional dithiodihydrazide method (i.e., document 1 and Patent Publication No. CN101511875A), as shown in FIG. 8.

The above methods for preparing the sulfhydryl-modified HA can be categorized into the following three types: 1, performing an amidation modification on a side chain carboxyl of a polymer compound to add a sulfhydryl-containing small molecule fragment; 2, performing an amidation modification or a hydrazidation modification on a side chain carboxyl of a polymer compound, then performing secondary functionalization through a reduction reaction or a ring-opening reaction to obtain a sulfhydryl-containing side chain structure; 3, performing a ring-opening reaction of ethylene sulfide on a side chain hydroxyl of a polymer compound under the strong alkaline condition to obtain a sulfhydryl-containing side chain structure. These methods have the following drawbacks: 1) the reagents, such as EDCI and Traut's reagent, are relatively expensive; 2) the reaction process involves the use of non-commercial reagents, such as a dithiodihydrazide compound, which requires an additional two-step chemical synthesis for preparation, thereby greatly increasing the industrialization cost; 3) the modification for carboxyl requires the use of EDCI with an optimal reaction pH of 4.75, which can cause the irreversible degradation of certain polymer compounds (e.g., hyaluronic acid); 4) the ethylene sulfide modification for hydroxyl involves a harsh reaction condition of pH = 10, and can also cause the irreversible degradation of certain polymer compounds; 5) the modifications for amino are limited by low reactivity, and generally have a low

degree of sulfhydrylation.

SUMMARY

In order to solve the above problems, the first object of the present disclosure is to provide a series of sulfhydryl-modified hyaluronic acid compounds with a novel structure, which have advantages of better viscosity, better water retention and stronger oxidation resistance, as well as high reactivity and high degree of sulfhydrylation, furthermore with controllable structure and excellent bioactivity, etc. Based on this, the sulfhydryl-modified hyaluronic acid is more suitable for use in the fields such as antioxidation health care products, biopharmaceuticals, medical cosmetology and cosmetics.

The second object of the present disclosure is to provide a preparation method for the series of sulfhydryl-modified hyaluronic acid compounds, which overcomes many disadvantages and shortcomings in the prior art and is highly promising for application. Specifically, the method overcomes the following disadvantages and shortcomings in the prior art: 1) the modifying reagent needs to be synthesized through a reaction of multiple steps, such as the dithiodihydrazide method and the modified dithiodihydrazide method; 2) in the synthesis of the modifying reagent, highly toxic organics such as hydrazine hydrate need to be applied, which does not meet the development requirement of green chemistry or environment-friendly society; 3) in the sulfhydryl modification method involving the EDCI coupling agent, the pH of the reaction system needs to be maintained at 4.75 in the activation stage, and the reaction system cannot be stabilized and homogenized through homogenization such as stirring in the gel stage, leading to highly difficult industrial operations; 4) the synthesis of HA-SH by the ethylene sulfide method needs to be performed at pH 10, so that the degradation reaction of the hyaluronic acid in the synthesis cannot be avoided; in addition, the thiocycloethane is a flammable and toxic hazardous article, and has low solubility in water, which limits the possibility of obtaining a high degree of substitution by this method; 5) the hydrazide modified hyaluronic acid derivative cannot be produced on an industrial scale as limited by the high cost of the Traut's reagent; 6) since the thiol and the amino are both highly active nucleophilic reagents, the direct modification process of thiols such as β-mercaptoethylamine and cysteine ethyl ester involves a main reaction of the condensation of the amino and the carboxyl, and a side reaction of the thiol with the carboxyl is difficult to completely avoid by changing reaction conditions.

In a first aspect, the present disclosure provides a sulfhydryl-modified hyaluronic acid, wherein part or all of -COOH and/or -OH comprised in a side chain of a repeating unit of the hyaluronic acid are modified to form a side chain with the following terminal group:

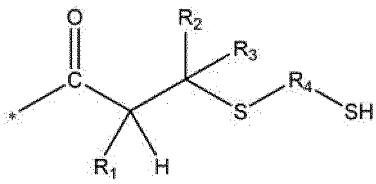

in the above group, * represents a linking site;

R1 is selected from hydrogen, halogen, an aliphatic group, an aromatic group, and the like;
R2 and R3 are the same or different and are independently selected from hydrogen, halogen, an aliphatic group, an aromatic group, and the like; and
R4 is a fragment of a polysulfhydryl compound.

In a second aspect, the present disclosure provides a preparation method for the sulfhydryl-modified hyaluronic acid, which comprises the following steps:

1) acryloylating the hyaluronic acid, namely linking at least one from the -COOH and the -OH comprised in the side chain of the repeating unit of the hyaluronic acid, directly or indirectly, to the following group:

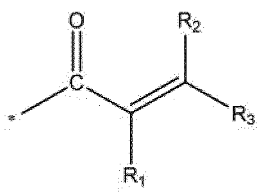

wherein R1, R2 and R3 are defined as above, and * represents a linking site;

2) reacting the acryloylated hyaluronic acid obtained in step 1) with a polysulfhydryl compound HS-R4-SH to obtain the sulfhydryl-modified hyaluronic acid, wherein R4 is defined as above.

In a third aspect, the present disclosure provides use of the sulfhydryl-modified hyaluronic acid for the fields such as antioxidation health care products, biopharmaceuticals, medical cosmetology and cosmetics (e.g., at least one selected from antioxidation cosmetics and water retention and moisture supplement cosmetics).

Beneficial Effects of Present Disclosure

The present disclosure proposes a brand-new sulfhydryl-modified hyaluronic acid, which unexpectedly has significant differences and improvements in viscosity, water retention and oxidation resistance in addition to the predictable or presumable increase in thiol content and little change in molecular weight of the main chain of the molecule, as compared to those of the hyaluronic acid and hyaluronic acid derivatives before modification.

Specifically, the present disclosure provides a series of sulfhydryl-modified hyaluronic acid compounds with a novel structure, which are hyaluronic acids modified by various side chains with thiol groups mentioned in the present disclosure, and has the following characteristics:

1. The new compound structure is generated by bonding a new side chain to an active site of hyaluronic acid through a synthesis reaction.
2. The synthetic process, as compared to the synthetic process of hyaluronic acid before modification, and to the synthetic process of the closest compound in the prior art, has the advantages that: 1) the main chain of the hyaluronic acid is not degraded substantially in the modification process; 2) the thiol content is significantly increased; 3) a polysulfhydryl compound (e.g., disulfhydryl compound, trisulfhydryl compound, tetrasulfhydryl compound and even polysulfhydryl compound with more sulfhydryls) is introduced, the structure of which is flexible and adjustable, and the length of the side chain fragment can be tailored and modified as desired, so that the activity of a sulfhydryl side chain can be controlled and the size and porosity of a microcosmic cross-linked three-dimensional structure pore channel can be adjusted freely; 4) the theoretical degree of substitution of sulfhydryl in sulfhydrylation methods in the prior art is only up to 100% (for polymer compounds with repeating units), while the theoretical degree of substitution of sulfhydryl can be increased to 200% and 300% by using a trisulfhydryl compound and a tetrasulfhydryl compound, respectively, in the present disclosure, which is a unique advantage that other methods in the prior art do not have.
3. As compared to hyaluronic acid before structural modification or the closest modified hyaluronic acid in the prior art, the series of compounds with the novel structure of the present disclosure have unexpected technical benefits, are significantly different from those in the prior art, and at least have different and unexpected physicochemical properties, specifically in terms of significant advantages in viscosity, water retention, oxidation resistance and other aspects.
4. The properties of the new series of compounds lead to advantages in potential application areas, or potential new uses.

Based on this, the sulfhydryl-modified hyaluronic acid is more suitable for use in the fields such as antioxidation health care products, biopharmaceuticals, medical cosmetology and cosmetics.

The present disclosure also proposes a brand-new method preparation method for the sulfhydryl-modified hyaluronic acid, specifically comprising: performing the Michael addition reaction of a thiol with a conjugated double bond using hyaluronic acid modified with an acryloyl compound and a polysulfhydryl compound to prepare a sulfhydryl-modified hyaluronic acid. The preparation method has the following advantages in addition to achieving the objective of obtaining the compounds with the novel structure described herein: capable of flexibly and effectively controlling the structure and composition of a synthetic product, the variety and content of a large number of terminal functional groups of the compounds and the like; adopting the highly biocompatible reagent to effectively control the production cost and reduce the toxicity in the synthetic process; ensuring the obtaining of the sulfhydryl-modified hyaluronic acid with good retention of the structure and bioactivity of the starting material and controllable type and content of functional groups as desired that can be used as extracellular matrix materials under the conditions of safe reagents and simple reaction steps, to meet the requirements of various clinical applications. Specifically, the method has the advantages that:

1) the reaction is mild and controllable, and can realize the modification under a neutral condition, so that the degradation of the main chain of the hyaluronic acid in a harsh pH environment is avoided;

2) the Michael addition reaction of the thiol with the conjugated double bond is extremely efficient without any by-products generated, which conforms to the atomic economic principle and the green chemical development condition;

3) a polysulfhydryl compound (e.g., disulfhydryl compound, trisulfhydryl compound, tetrasulfhydryl compound and even polysulfhydryl compound with more sulfhydryls) is selected from a wide range of commercial products, without the need for preparing a sulfhydryl modification reagent in advance through a synthesis reaction of multiple steps, thereby leading to a low industrialization cost;
4) the structure of the polysulfhydryl compound is flexible and adjustable, and the length of the side chain fragment can be tailored and modified as desired, so that the activity of a sulfhydryl side chain can be controlled and the size and porosity of a microcosmic cross-linked three-dimensional structure pore channel can be adjusted freely;
5) the theoretical degree of substitution of sulfhydryl in sulfhydryl modification methods in the prior art is only up to 100% (for polymer compounds with repeating units), while the theoretical degree of substitution of sulfhydryl can be increased to 200% and 300% by using a trisulfhydryl compound and a tetrasulfhydryl compound, respectively, in the present disclosure, which is a unique advantage that other methods in the prior art do not have.

## BRIEF DESCRIPTION OF THE DRAWINGS

FIG. 1 shows the main reaction processes reported in document 1 (synthesis of HA-SH by the dihydrazide method);
FIG. 2 shows the main reaction processes reported in document 2 (synthesis of HA-SH by the ethylene sulfide method);
FIG. 3 shows the main reaction processes reported in document 3 (synthesis of HA-SH by the post-hydrazide modification);
FIG. 4 shows the main reaction processes reported in document 4 (synthesis of HA-SH by the cystamine modification);
FIG. 5 shows the main reaction processes reported in document 5 (synthesis of HA-SH by the β-mercaptoethylamine method);
FIG. 6 shows the main reaction processes reported in document 6 (synthesis of HA-SH by the cysteine ethyl ester modification);
FIG. 7 shows the main reaction processes reported in document CN101200504A (synthesis of HA-SH by the dihydrazide method); wherein R1 and R2 are alkylenes, substituted alkylenes, aromatic groups, polyethers and the like (note: the definitions of R1 and R2 here are limited to only FIG. 7 and document CN101200504A); p represents a residue of a polymer compound containing a carboxyl group in a side chain;
FIG. 8 shows the main reaction processes reported in document CN103613686A (similar to document 1, synthesis of HA-SH by the dihydrazide method);
FIG. 9 shows the reaction equation of Example 1;
FIG. 10 shows the reaction equation of Example 2;
FIG. 11 shows the reaction equation of Example 3;
FIG. 12 shows the reaction equation of Example 4;
FIG. 13 shows the reaction equation of Example 5;
FIG. 14 shows the reaction equation of Example 6;
FIG. 15 shows the reaction equation of Example 7;
FIG. 16 shows the reaction equation of Example 8;
FIG. 17 shows the reaction equation of Example 9;
FIG. 18 shows the reaction equation of Example 10;
FIG. 19 shows the reaction equation of Example 11;
FIG. 20 shows the reaction equation of Example 12;
FIG. 21 shows the reaction equation of Example 13;
FIG. 22 shows the reaction equation of Example 14;
FIG. 23 shows the reaction equation of Example 15;
FIG. 24 shows the reaction equation of Example 16;
FIG. 25 shows the reaction equation of Example 17;
FIG. 26 shows the structural formula of HA-A1 and the 1H-NMR spectrum thereof;
FIG. 27 shows the structural formula of HA-A2 and the 1H-NMR spectrum thereof;
FIG. 28 shows the structural formula of HA-MA1 and the 1H-NMR spectrum thereof;
FIG. 29 shows the structural formula of HA-MA2 and the 1H-NMR spectrum thereof;
FIG. 30 shows the structural formula of HA-A1-SH1 and the 1H-NMR spectrum thereof;
FIG. 31 shows the structural formula of HA-A2-SH1 and the 1H-NMR spectrum thereof;
FIG. 32 shows the structural formula of HA-MA1-SH1 and the 1H-NMR spectrum thereof;
FIG. 33 shows the structural formula of HA-MA2-SH1 and the 1H-NMR spectrum thereof;

FIG. 34 shows the structural formula of HA-A1-SH2 and the 1H-NMR spectrum thereof;
FIG. 35 shows the structural formula of HA-A1-SH3 and the 1H-NMR spectrum thereof;
FIG. 36 shows the structural formula of HA-A2-SH2 and the 1H-NMR spectrum thereof;
FIG. 37 shows the structural formula of HA-A2-SH3 and the 1H-NMR spectrum thereof;
FIG. 38 shows the structural formula of HA-A2-SH4 and the 1H-NMR spectrum thereof;
FIG. 39 shows the structural formula of HA-A2-SH5 and the 1H-NMR spectrum thereof;
FIG. 40 shows the structural formula of HA-A2-SH6 and the 1H-NMR spectrum thereof;
FIG. 41 shows the structural formula of HA-A2-SH7 and the 1H-NMR spectrum thereof;
FIG. 42 shows the structural formula of HA-A2-SH8 and the 1H-NMR spectrum thereof;
FIG. 43 shows the structural formula of HA-MA1-SH5 and the 1H-NMR spectrum thereof;
FIG. 44 shows the structural formula of HA-MA1-SH6 and the 1H-NMR spectrum thereof;
FIG. 45 shows the structural formula of HA-MA2-SH7 and the 1H-NMR spectrum thereof;
FIG. 46 shows the structural formula of HA-MA2-SH8 and the 1H-NMR spectrum thereof;
FIG. 47 shows the standard curve of Ellman assay;
FIG. 48 shows the standard curve of DPPH free radical content detection;
FIG. 49 shows the percentage of DPPH free radical capture;
FIG. 50 shows the cellular biocompatibility experiments with HA-A1-SH1, HA-A2-SH1, HA-MA1-SH1 and HA-MA2-SH1.

## DETAILED DESCRIPTION

[Sulfhydryl-modified Hyaluronic Acid]

As described above, the present disclosure proves a series of sulfhydryl-modified hyaluronic acid compounds with a novel structure, wherein part or all of -COOH and/or -OH comprised in a side chain of a repeating unit of the hyaluronic acid are modified to form a side chain with the following terminal group:

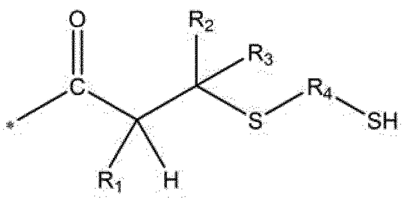

in the above group, * represents a linking site;

R1 is selected from hydrogen, halogen, an aliphatic group, an aromatic group, and the like; specifically, the halogen, the aliphatic group and the aromatic group are further defined as below; preferably, R1 is selected from hydrogen, halogen, and an aliphatic group; more preferably, R1 is selected from hydrogen, halogen and C1-6 alkyl (e.g., methyl and ethyl);

R2 and R3 are the same or different and are independently selected from hydrogen, halogen, an aliphatic group, an aromatic group, and the like; specifically, the halogen, the aliphatic group and the aromatic group are further defined as below;

R4 is a fragment of a polysulfhydryl compound.

In a specific embodiment, the terminal group is linked to the -COOH and/or the -OH through an R group or directly to the -COOH and/or the -OH to form a side chain of at least one of the following structures:

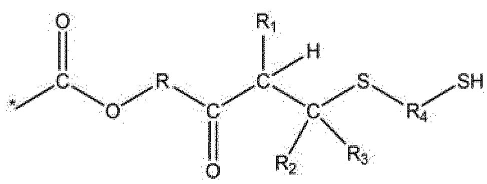 (structure a) 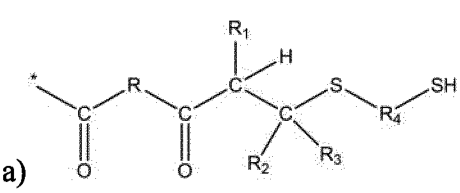 (structure b)

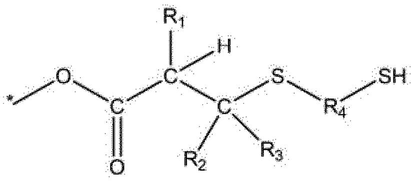

(structure c)

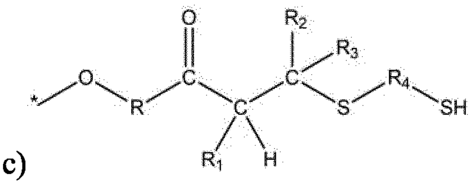

(structure d)

in the structures a, b, c and d, R is selected from

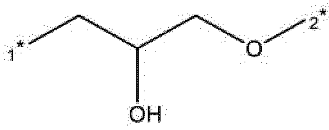 , 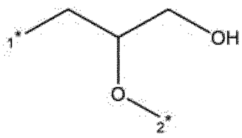 ,

hydrocarbylene, arylene, an amide residue, a hydrazide residue, and the like; * represents a linking site; 1* represents a linking site to a left-hand group of R; 2* represents a linking site to a right-hand group of R; R1, R2, R3 and R4 are defined as above.

The sulfhydryl-modified hyaluronic acid has a molecular weight ranging from 5 kDa to 20 MDa. The molecular weight of the sulfhydryl-modified hyaluronic acid changes little or remains substantially unchanged before and after modification.

A sulfhydryl content of the sulfhydryl-modified hyaluronic acid as determined by the Ellman method is 0.01-30 mmol/g, for example, 0.1-10.0 mmol/g, for another example, 0.3-5.0 mmol/g, and for yet another example, 0.5-3.0 mmol/g.

For example, the sulfhydryl-modified hyaluronic acid of the present disclosure comprises at least one of the following structures:

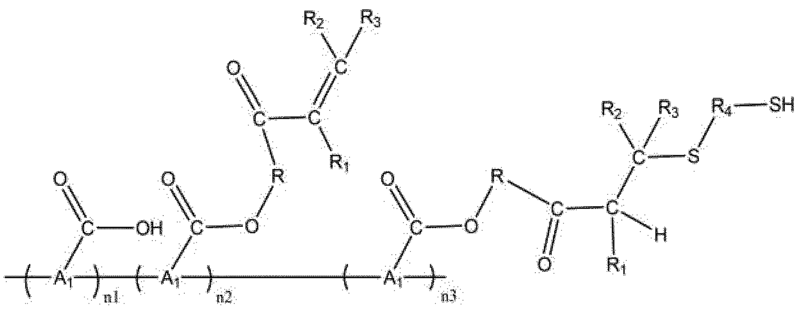

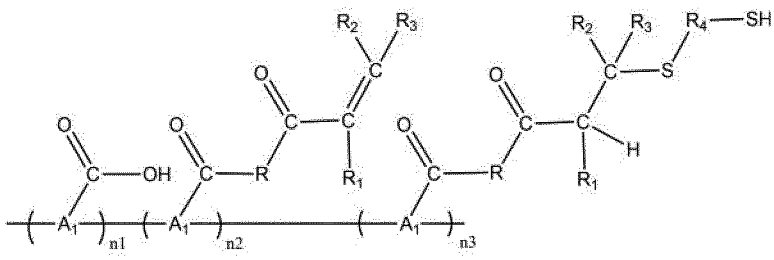

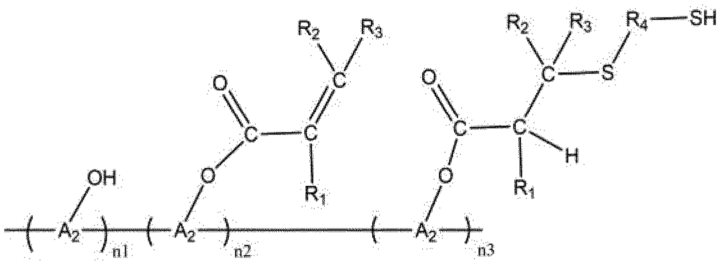

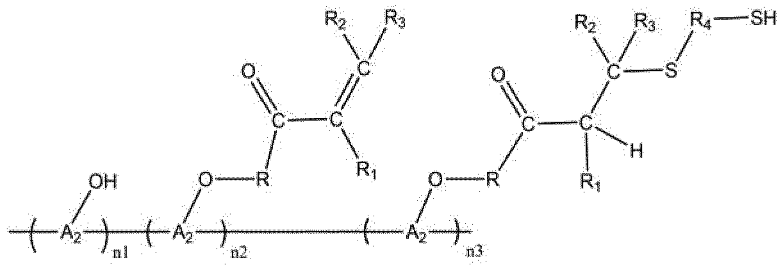

wherein in the above structures, R, R1, R2, R3 and R4 are defined as above; (n2+n3)/(n1+n2+n3) represents a degree of acryloylation; n3/(n1+n2+n3) represents a degree of sulfhydrylation corresponding to the above sulfhydryl content of the sulfhydryl-modified polymer compound as determined by the Ellman method; the n1 can be 0, and if it is 0, the degree of acryloylation is not limited, and n3/(n2+n3) alone represents the degree of sulfhydrylation corresponding to the above sulfhydryl content of the sulfhydryl-modified polymer compound as determined by the Ellman method; the n2 can be 0, and if it is 0, n3/(n1+n3) represents both the degree of acryloylation and the degree of sulfhydrylation corresponding to the above sulfhydryl content of the sulfhydryl-modified polymer compound as determined by the Ellman method;

the A1 is:

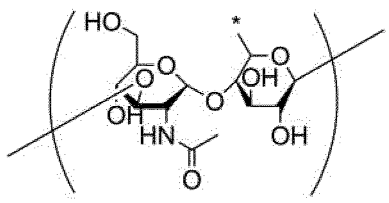

the A2 is one of the following structures:

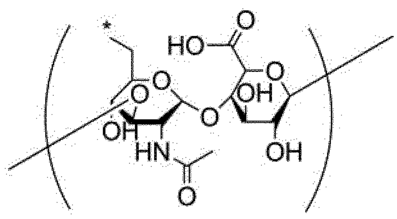

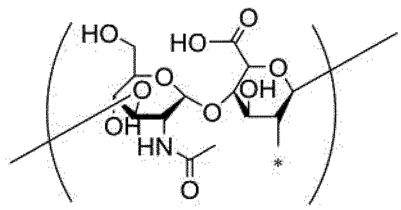

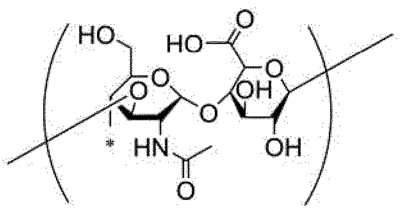

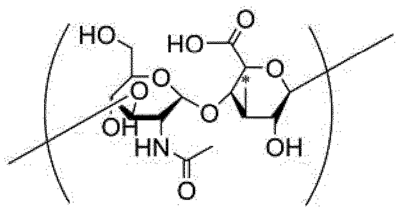

* in the structure of A1 and A2 represents a linking site to the COOH or the OH.

In the present disclosure, n1, n2, n3, n4, n5, n6, m1 and m2 are the number of repeating units in the structural formula unless otherwise specified. The range of values falls within conventional ranges known in the art.

As described above, R1 is selected from hydrogen, halogen, an aliphatic group, an aromatic group, and the like; R2 and R3 are the same or different and are independently selected from hydrogen, halogen, an aliphatic group, an aromatic group, and the like.

As described above, the R may be selected from hydrocarbylene, arylene, an amide residue, a hydrazide residue, and the like.

The halogen refers to fluorine, chlorine, bromine or iodine.

The aliphatic group is, for example, a straight-chain or branched saturated/unsaturated aliphatic group, specifically may be alkyl, alkenyl or alkynyl.

The "hydrocarbyl" used herein alone or as a suffix or prefix is, for example, a straight-chain or branched

saturated/unsaturated aliphatic group, specifically may be alkyl, alkenyl or alkynyl.

The "alkyl" used herein alone or as a suffix or prefix is intended to include both branched and straight-chain saturated aliphatic hydrocarbyl groups having 1-20, preferably 1-6, carbon atoms. For example, "C1-6 alkyl" refers to a straight-chain or branched alkyl group having 1, 2, 3, 4, 5 or 6 carbon atoms. Examples of alkyl include, but are not limited to, methyl, ethyl, n-propyl, isopropyl, n-butyl, isobutyl, sec-butyl, tert-butyl, pentyl, and hexyl.

The "alkenyl" used herein alone or as a suffix or prefix is intended to include both branched and straight-chain aliphatic hydrocarbyl groups comprising alkenyl or alkene having 2-20, preferably 2-6, carbon atoms (or the specific number of carbon atoms if provided). For example, "C2-6 alkenyl" refers to an alkenyl group having 2, 3, 4, 5 or 6 carbon atoms. Examples of alkenyl include, but are not limited to, ethenyl, allyl, 1-propenyl, 1-butenyl, 2-butenyl, 3-butenyl, 2-methylbut-2-enyl, 3-methylbut-1-enyl, 1-pentenyl, 3-pentenyl, and 4-hexenyl.

The "alkynyl" used herein alone or as a suffix or prefix is intended to include both branched and straight-chain aliphatic hydrocarbyl groups comprising alkynyl or alkyne having 2-20, preferably 2-6 carbon atoms (or the specific number of carbon atoms if provided). For example, ethynyl, propynyl (e.g., 1-propynyl, 2-propynyl), 3-butynyl, pentynyl, hexynyl and 1-methylpent-2-ynyl.

The "hydrocarbylene" used herein is a group obtained by removing one hydrogen from the "hydrocarbyl".

The aromatic group refers to an aromatic ring structure composed of 5-20 carbon atoms. For example, the aromatic ring structure containing 5, 6, 7 and 8 carbon atoms may be a monocyclic aromatic group, e.g., phenyl; the ring structure containing 8, 9, 10, 11, 12, 13 or 14 carbon atoms may be a polycyclic aromatic group, e.g., naphthyl. The aromatic ring may be substituted at one or more ring positions with substituents such as alkyl and halogen, e.g., tolyl. The term "aryl" also includes polycyclic ring systems having two or more rings in which two or more carbons are common to two adjacent rings (the rings are "fused rings"), and at least one of the rings is aromatic and the other rings may be, for example, cycloalkyl, cycloalkenyl, cycloalkynyl, aryl and/or heterocyclyl. Examples of polycyclic rings include, but are not limited to, 2,3-dihydro-1,4-benzodioxine and 2,3-dihydro-1-benzofuran.

The "arylene" used herein is a group obtained by removing one hydrogen from the "aromatic group".

The "amide group" used herein alone or as a suffix or prefix refers to the Ra-C(=O)-NH- group, wherein Ra is selected from the following groups unsubstituted or optionally substituted with one or more Rb: alkyl, cycloalkyl, alkenyl, cycloalkenyl, alkynyl, cycloalkynyl, heterocyclyl, aryl, heteroaryl, and the like; Rb is selected from the following groups unsubstituted or optionally substituted with one or more Rb1: halogen, hydroxyl, sulfhydryl, nitro, cyano, alkyl, alkoxy, cycloalkyl, alkenyl, alkynyl, heterocyclyl, aryl, heteroaryl, amino, carboxyl, an ester group, hydrazino, acyl, sulfinyl, sulfonyl, phosphoryl, and the like; each Rb1 is independently selected from halogen, hydroxy, alkyl and aryl.

The "hydrazide group" used herein alone or as a suffix or prefix refers to the Ra-C(=O)-NH- group, wherein Ra is defined as above.

The "amide residue" used herein is a group obtained by removing one hydrogen from the "amide group".

The "hydrazide residue" used herein is a group obtained by removing one hydrogen from the "hydrazide group".

The term "cycloalkyl" used herein is intended to include saturated cyclic groups having the specified number of carbon atoms. These terms may include fused or bridged polycyclic ring systems. The cycloalkyl has 3-40 carbon atoms in its ring structure. In one embodiment, the cycloalkyl has 3, 4, 5 or 6 carbon atoms in its ring structure. For example, "C3-6 cycloalkyl" refers to a group such as cyclopropyl, cyclobutyl, cyclopentyl or cyclohexyl.

The term "cycloalkenyl" used herein is intended to include cyclic groups comprising at least one alkenyl group having the specified number of carbon atoms. These terms may include fused or bridged polycyclic ring systems. The cycloalkenyl has 3-40 carbon atoms in its ring structure. In one embodiment, the cycloalkenyl has 3, 4, 5 or 6 carbon atoms in its ring structure. For example, "C3-6 cycloalkenyl" refers to a group such as cyclopropenyl, cyclobutenyl, cyclopentenyl or cyclohexenyl.

The term "cycloalkynyl" used herein is intended to include cyclic groups comprising at least one alkynyl group having the specified number of carbon atoms. These terms may include fused or bridged polycyclic ring systems. The cycloalkynyl has 6-40 carbon atoms in its ring structure. In one embodiment, the cycloalkynyl has 6 carbon atoms in its ring structure. For example, "C3-6 cycloalkynyl" refers to a group such as cyclopropynyl, cyclobutynyl, cyclopentynyl or cyclohexynyl.

The "heteroaryl" used herein refers to a heteroaromatic heterocycle having at least one ring heteroatom (e.g., sulfur, oxygen, or nitrogen). The heteroaryl include monocyclic ring systems and polycyclic ring systems (e.g., having 2, 3 or 4 fused rings). Examples of heteroaryl include, but are not limited to, pyridinyl, pyrimidinyl, pyrazinyl, pyridazinyl, triazinyl, furyl, quinolyl, isoquinolyl, thienyl, imidazolyl, thiazolyl, indolyl, pyrrolyl, oxazolyl, benzofuryl, benzothienyl, benzothiazolyl, isoxazolyl, pyrazolyl, triazolyl, tetrazolyl, indazolyl, 1,2,4-thiadiazolyl, isothiazolyl, benzothienyl, purinyl, carbazolyl, benzimidazolyl, benzoxazolyl, azabenzoxazolyl, imidazothiazolyl, benzo[1,4]dioxanyl, benzo[1,3]dioxolyl, and the like. In some embodiments, the heteroaryl has 3-40 carbon atoms, and in other embodiments, 3-20 carbon atoms. In some embodiments, the heteroaryl contains 3-14, 4-14, 3-7, or 5-6 ring atoms. In some embodiments, the heteroaryl has 1-4, 1-3, or 1-2 heteroatoms. In some embodiments, the heteroaryl has 1 heteroatom.

The term "heterocyclyl" used herein refers to a saturated, unsaturated or partially saturated monocyclic, bicyclic

or tricyclic ring containing 3-20 atoms, wherein 1, 2, 3, 4 or 5 ring atoms are selected from nitrogen, sulfur, oxygen or phosphorus, which, unless otherwise stated, may be linked through carbon or nitrogen, wherein the -CH2- group is optionally replaced by -C(O)-; wherein unless otherwise stated to the contrary, the ring nitrogen atom or the ring sulfur atom is optionally oxidized to form an N-oxide or S-oxide, or the ring nitrogen atom is optionally quaternized; wherein -NH in the ring is optionally substituted with acetyl, formyl, methyl, or methanesulfonyl; and the ring is optionally substituted with one or more halogens. It should be understood that when the total number of S and O atoms in the heterocyclic group exceeds 1, these heteroatoms are not adjacent to each other. If the heterocyclyl is a bicyclic or tricyclic ring, at least one ring may optionally be a heteroaromatic or aromatic ring, provided that at least one ring is non-heteroaromatic. If the heterocyclyl is a monocyclic ring, it cannot be aromatic. Examples of heterocyclyl include, but are not limited to, piperidyl, N-acetylpiperidyl, N-methylpiperidyl, N-formylpiperazinyl, N-methanesulfonylpiperazinyl, homopiperazinyl, piperazinyl, azetidinyl, oxetanyl, morpholinyl, tetrahydroisoquinolyl, tetrahydroquinolyl, indolinyl, tetrahydropyranyl, dihydro-2H-pyranyl, tetrahydrofuranyl, tetrahydrothiopyranyl, tetrahydrothiopyran-1-oxide, tetrahydrothiopyran-1,1-dioxide, 1H-pyridin-2-one, and 2,5-dioxoimidazolidinyl.

The term "acyl" used herein refers to the Ra-C(=O)- group, wherein Ra is defined as above.

The term "sulfinyl" used herein refers to the Ra-S(=O)- group, wherein Ra is defined as above.

The term "sulfonyl" used herein refers to the Ra-S(=O)2- group, wherein Ra is defined as above.

The term "phosphoryl" used herein refers to the Rc-P(=O)(Rd)- group, wherein Rc and Rd are the same or different and are independently selected from the following groups, unsubstituted or optionally substituted with one or more Rb: alkyl, cycloalkyl, alkoxy, hydroxyl, alkenyl, cycloalkenyl, alkynyl, cycloalkynyl, heterocyclyl, aryl, heteroaryl, and the like; Rb is defined as above.

The term "hydrazino" used herein refers to the -NHNHRa group, wherein Ra is defined as above.

The term "amine group" used herein refers to the -NHRa group or the -N(Ra)2 group, wherein Ra is defined as above.

The term "amino" used herein refers to the -NH2 group.

The term "carboxyl" used herein refers to the -COOH group.

The term "ester group" used herein refers to the Ra-C(=O)-O- group or the Ra-O-C(=O)- group, wherein Ra is defined as above.

As described above, R4 is a fragment of the polysulfhydryl compound, that is, an -S-R4-SH fragment can be introduced from the polysulfhydryl compounds including but not limited to:

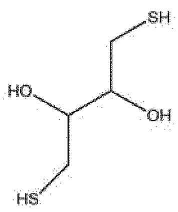
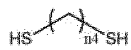
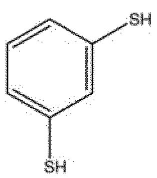
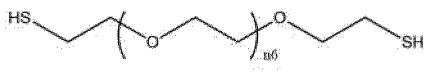
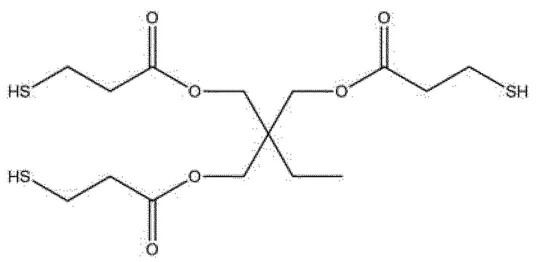
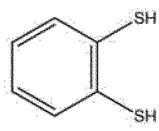
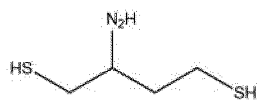
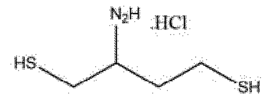
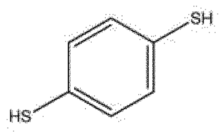
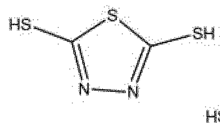
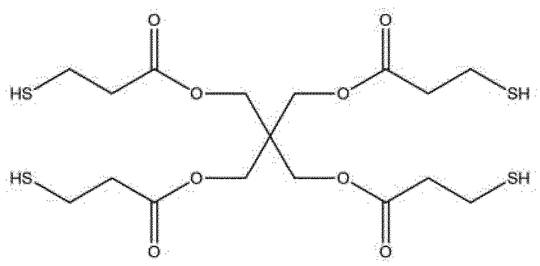
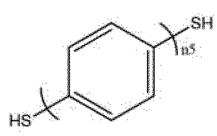
4-arm-PEG-SH

6-arm-PEG-SH

8-arm-PEG-SH
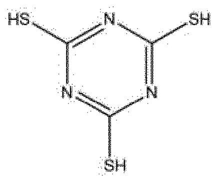

wherein n4 is an integer from 2 to 30, such as 2, 3, 4, 5 or 6; n5 is an integer from 1 to 30, such as 1, 2, 3, 4 or 5; n6 is an integer from 1 to 30, such as 1, 2, 3, 4 or 5;

4-arm-PEG-SH represents a PEG polymer containing four sulfhydryl groups; 6-arm-PEG-SH represents a PEG polymer containing six sulfhydryl groups; 8-arm-PEG-SH represents a PEG polymer containing eight sulfhydryl groups; the PEG is an abbreviation for polyethylene glycol.

Specifically, the sulfhydryl-modified hyaluronic acid has at least one of the structures including but not limited to:

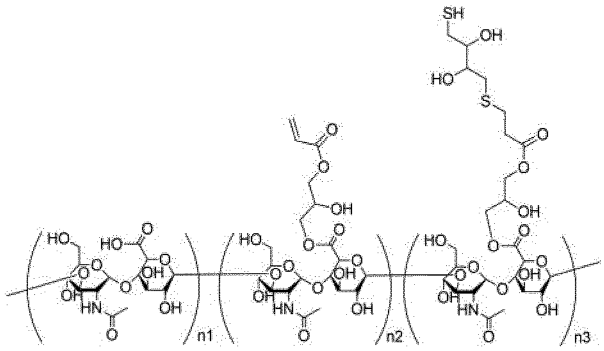

recorded as HA-A1-SH1

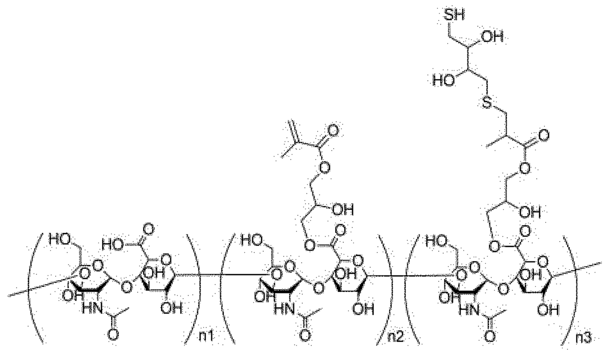

recorded as HA-MA1-SH1

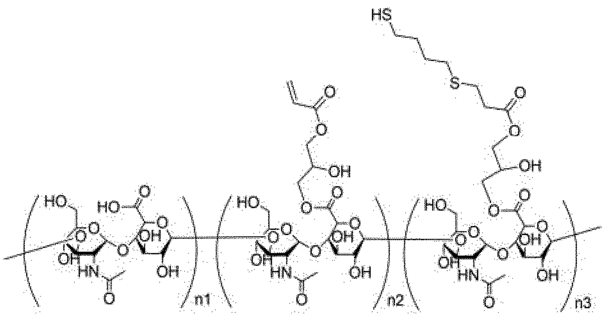

recorded as HA-A1-SH2

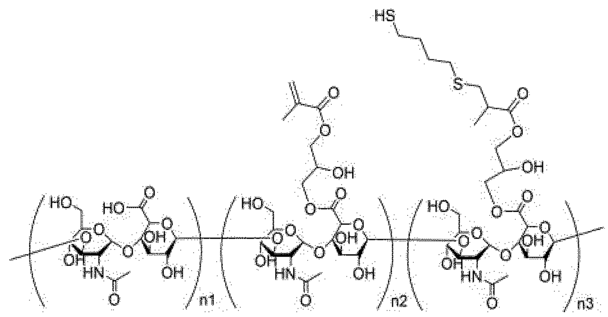

recorded as HA-MA1-SH2

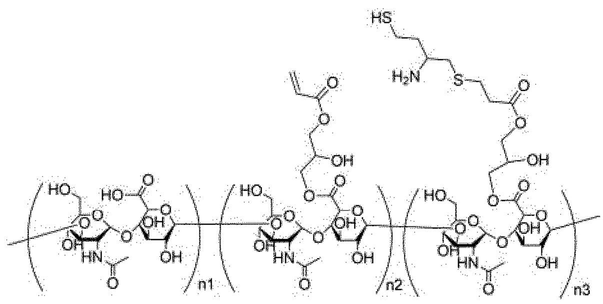

recorded as HA-A1-SH3

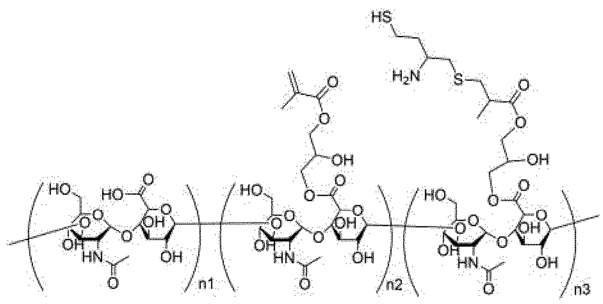

recorded as HA-MA1-SH3

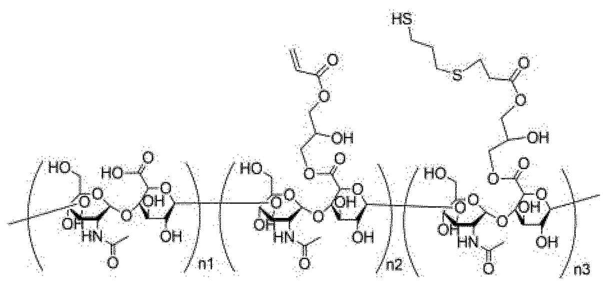

recorded as HA-A1-SH4

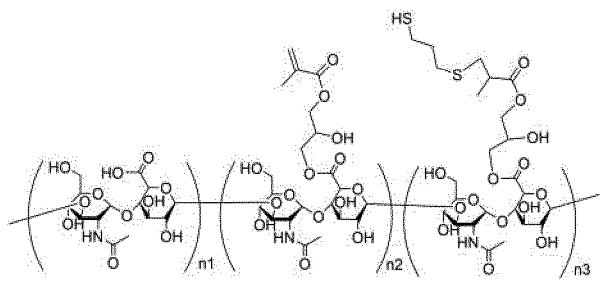

recorded as HA-MA1-SH4

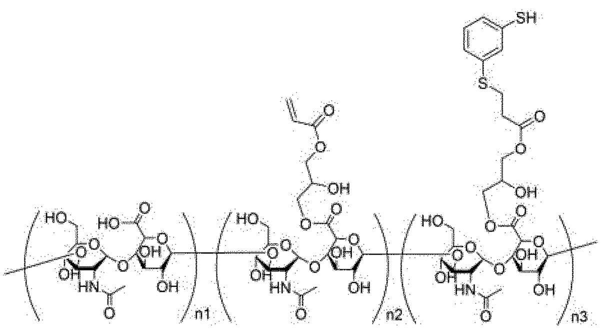

recorded as HA-A1-SH5

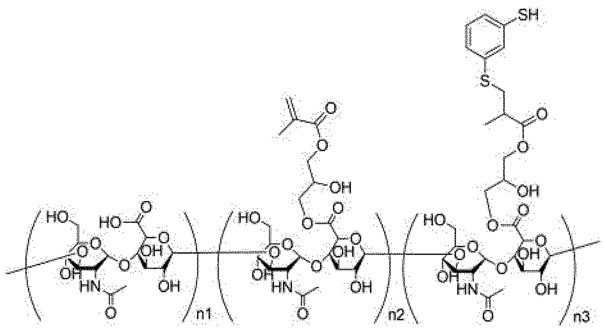

recorded as HA-MA1-SH5

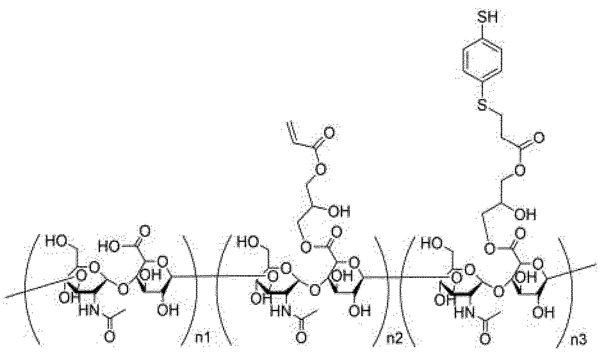

recorded as HA-A1-SH6

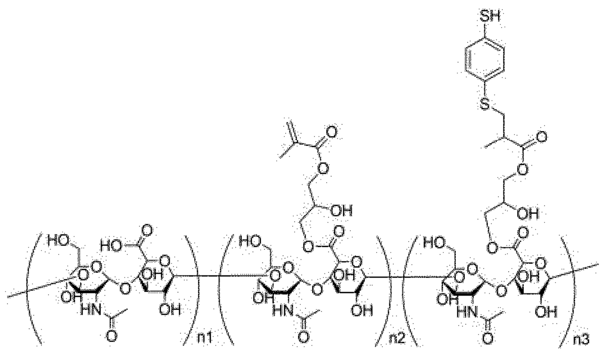

recorded as HA-MA1-SH6

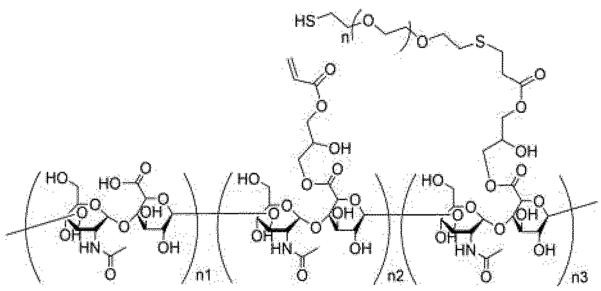

recorded as HA-A1-SH7

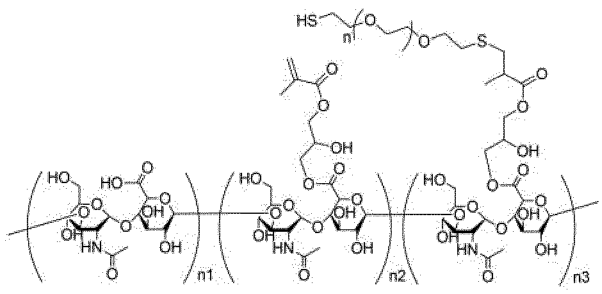

recorded as HA-MA1-SH7

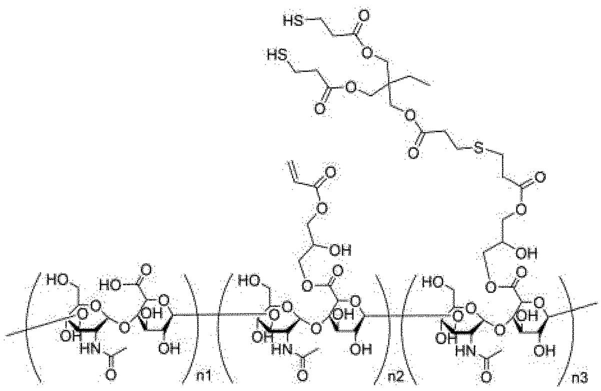

recorded as HA-A1-SH8

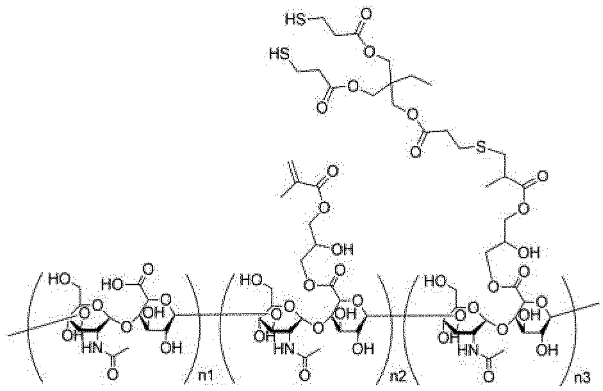

recorded as HA-MA1-SH8

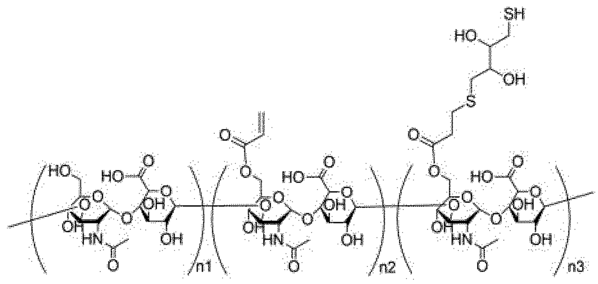

recorded as HA-A2-SH1

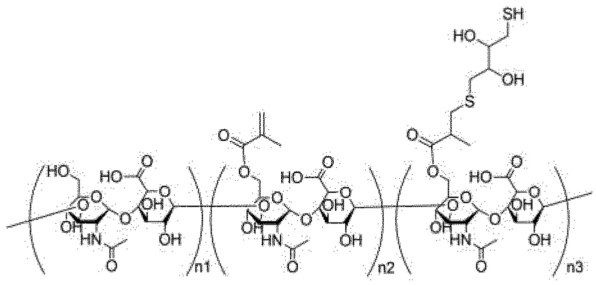

recorded as HA-MA2-SH1

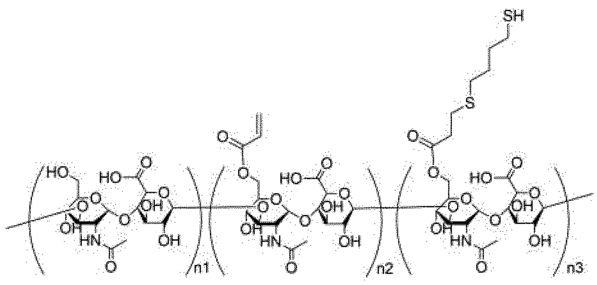

recorded as HA-A2-SH2

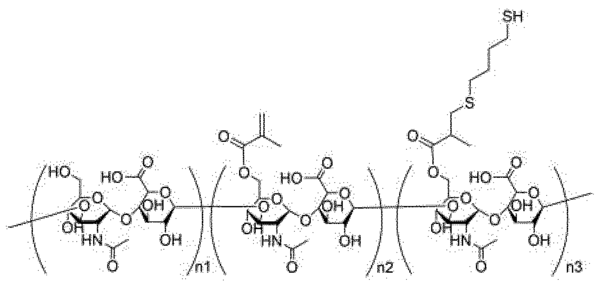

recorded as HA-MA2-SH2

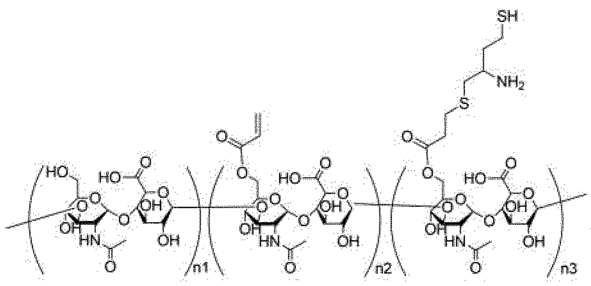

recorded as HA-A2-SH3

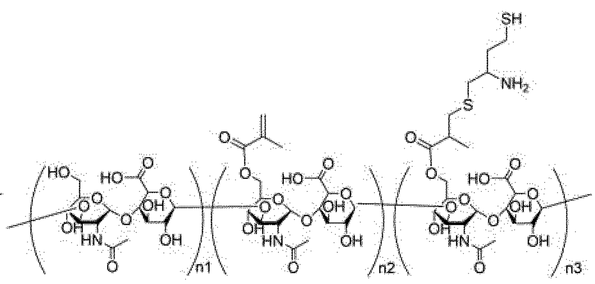

recorded as HA-MA2-SH3

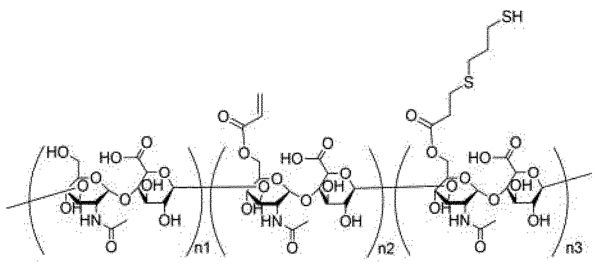

recorded as HA-A2-SH4

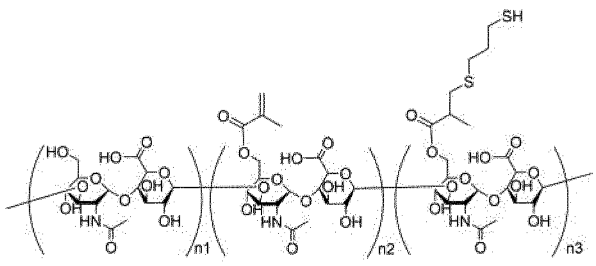

recorded as HA-MA2-SH4

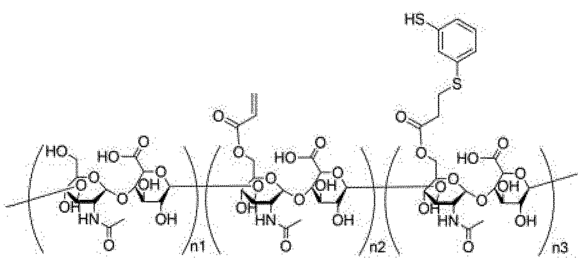

recorded as HA-A2-SH5

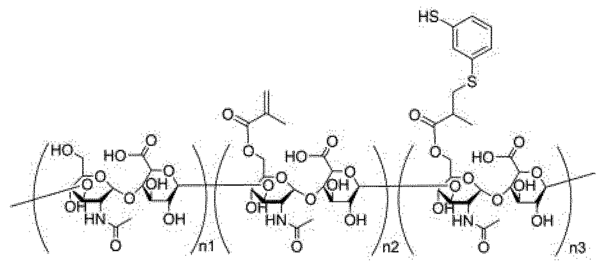

recorded as HA-MA2-SH5

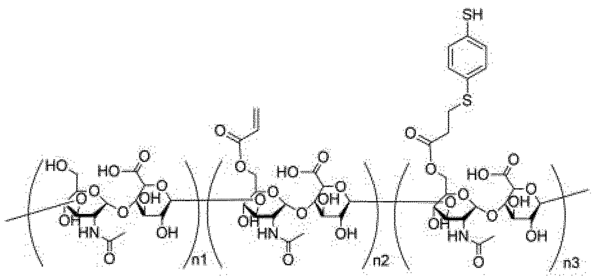

recorded as HA-A2-SH6

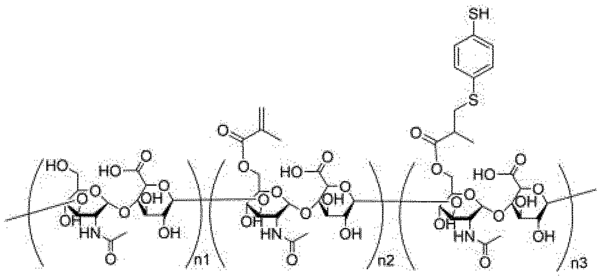

recorded as HA-MA2-SH6

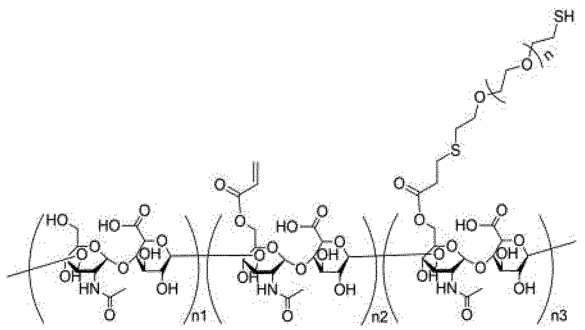

recorded as HA-A2-SH7

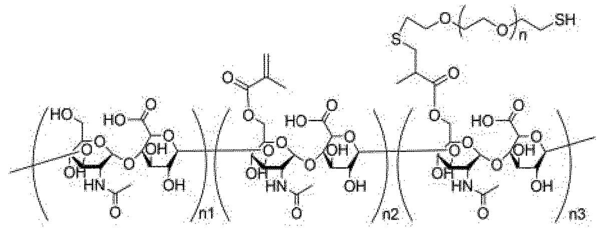

recorded as HA-MA2-SH7

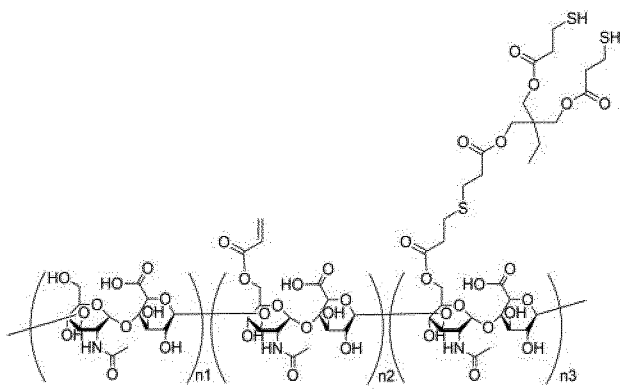

recorded as HA-A2-SH8

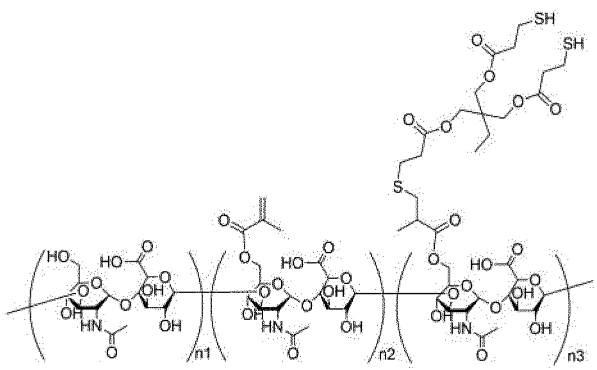

recorded as HA-MA2-SH8

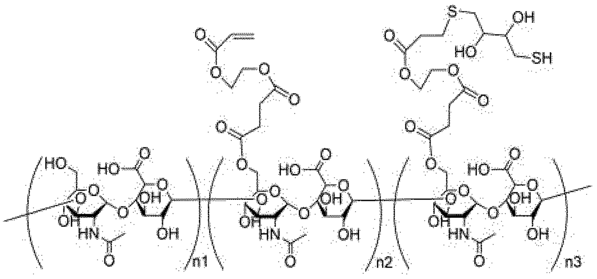

recorded as HA-A3-SH1

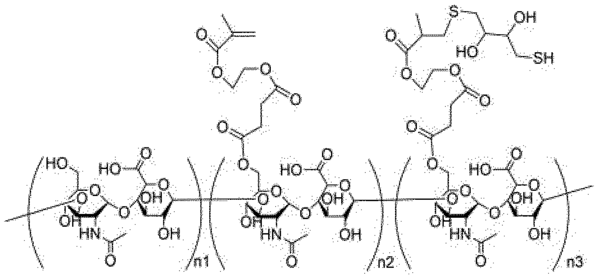

recorded as HA-MA3-SH1

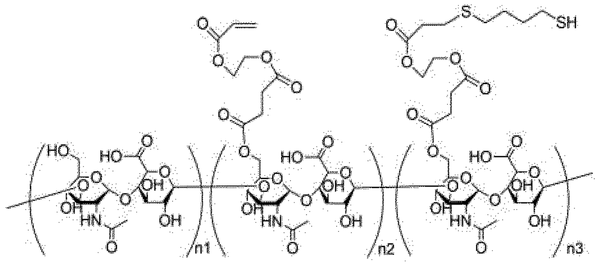

recorded as HA-A3-SH2

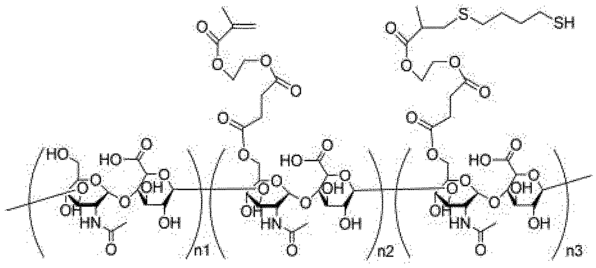

recorded as HA-MA3-SH2

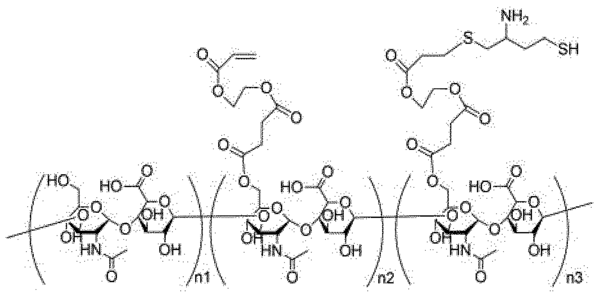

recorded as HA-A3-SH3

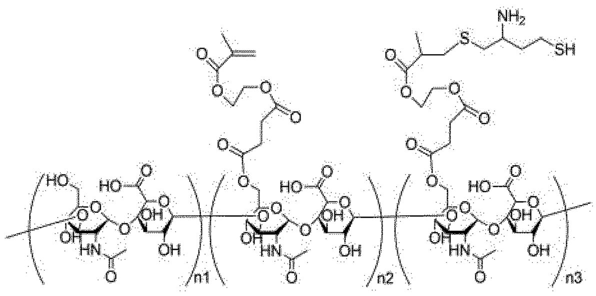

recorded as HA-MA3-SH3

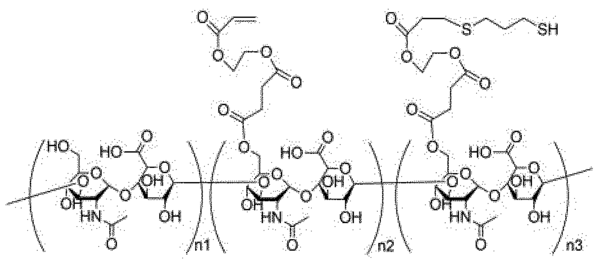

recorded as HA-A3-SH4

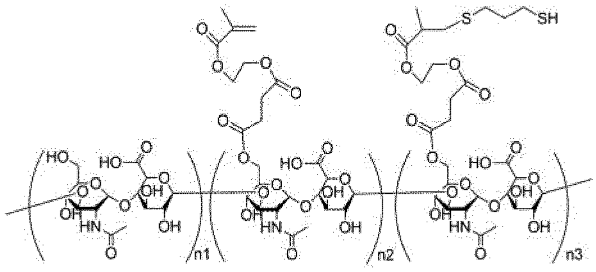

recorded as HA-MA3-SH4

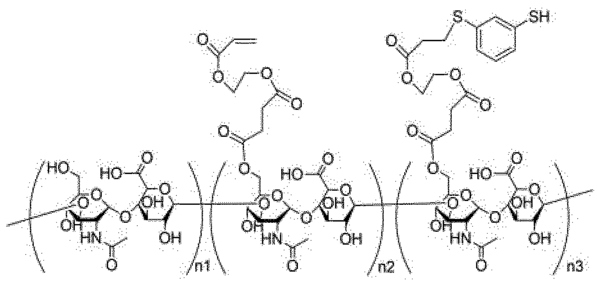

recorded as HA-A3-SH5

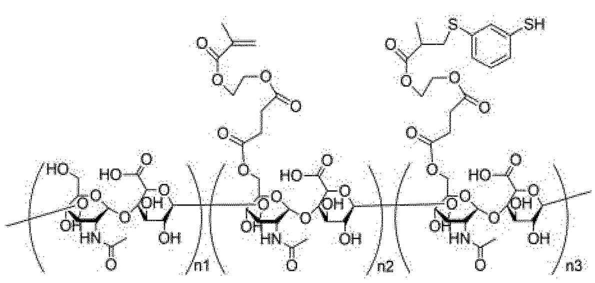

recorded as HA-MA3-SH5

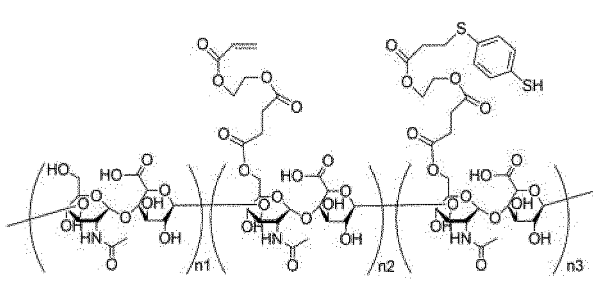

recorded as HA-A3-SH6

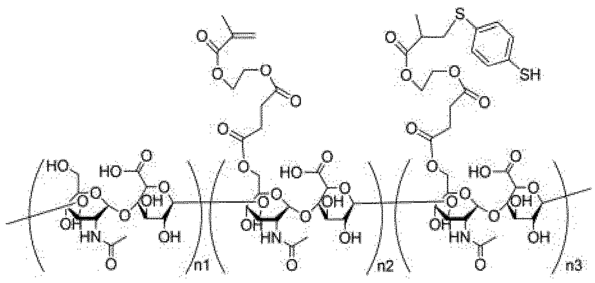

recorded as HA-MA3-SH6

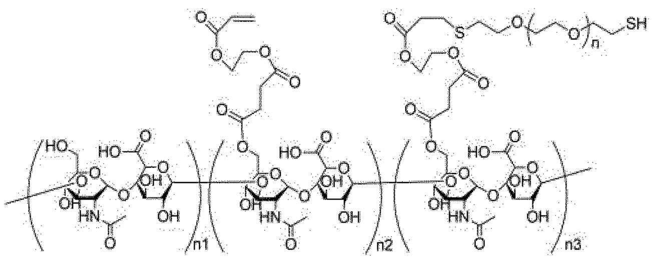

recorded as HA-A3-SH7

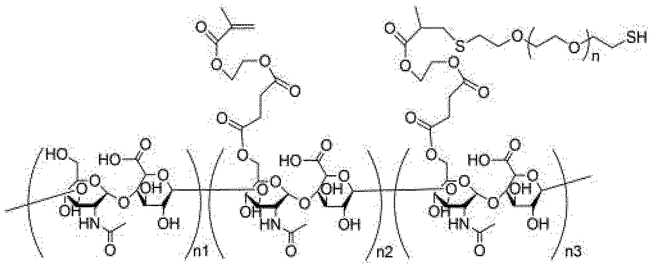

recorded as HA-MA3-SH7

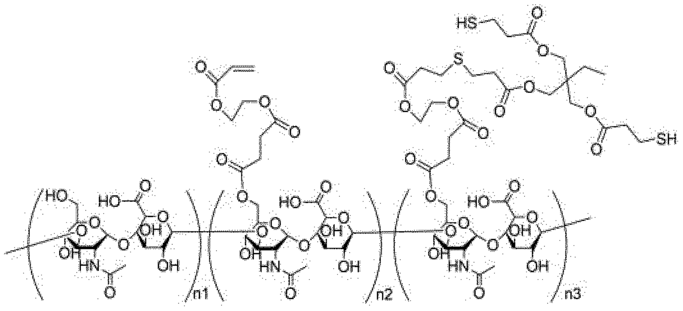

recorded as HA-A3-SH8

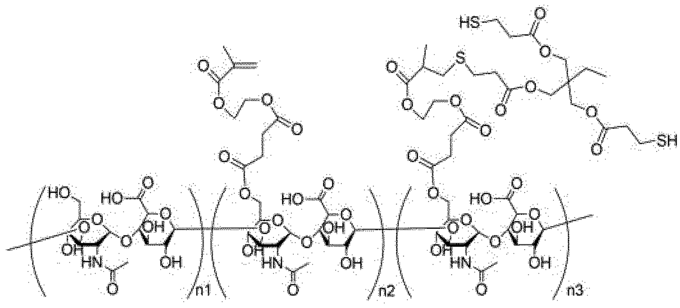

recorded as HA-MA3-SH8

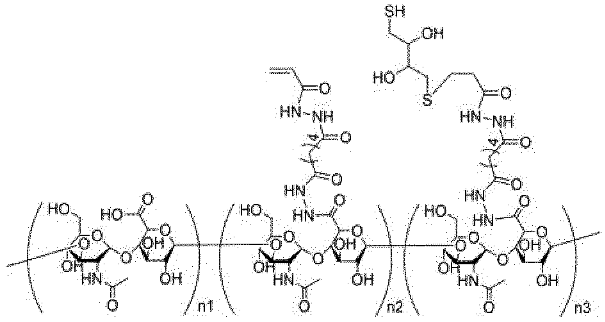

recorded as HA-A4-SH1

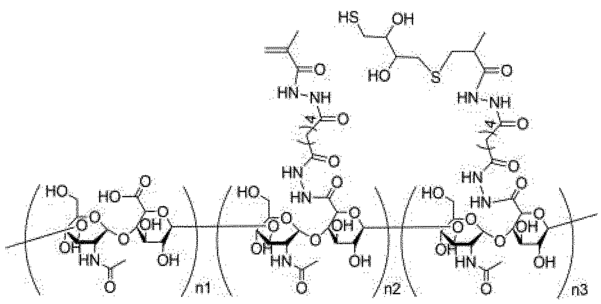

recorded as HA-MA4-SH1

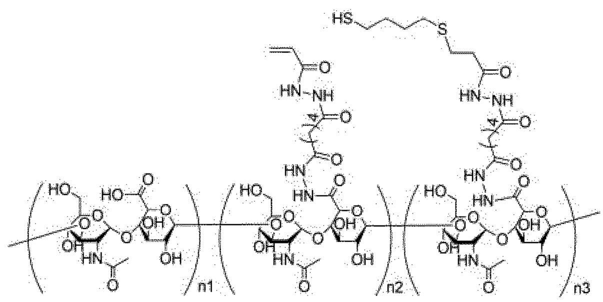

recorded as HA-A4-SH2

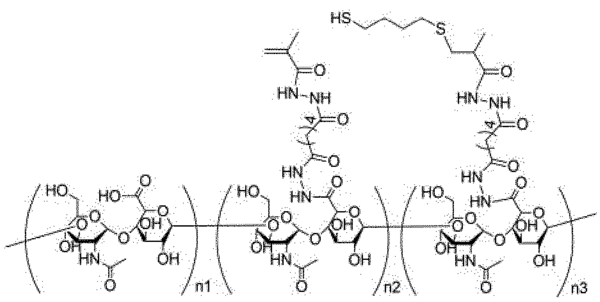

recorded as HA-MA4-SH2

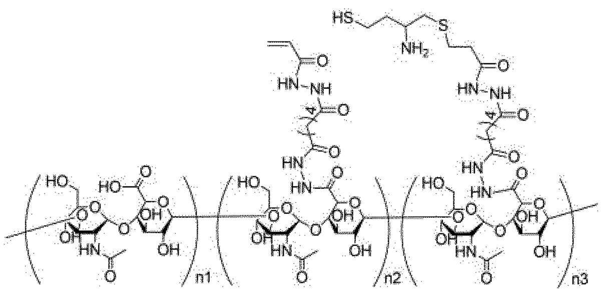

recorded as HA-A4-SH3

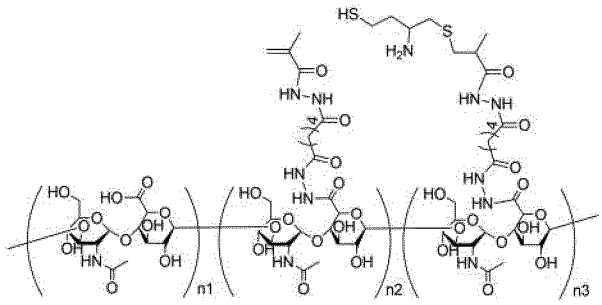

recorded as HA-MA4-SH3

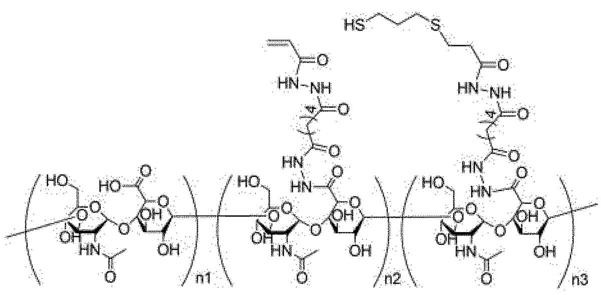

recorded as HA-A4-SH4

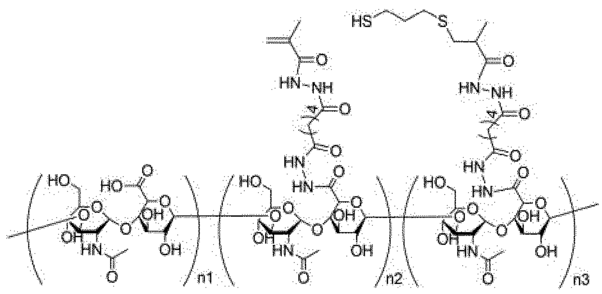

recorded as HA-MA4-SH4

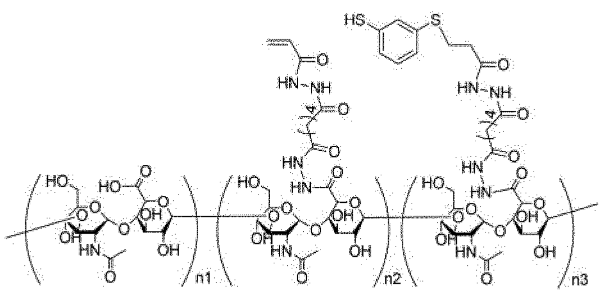

recorded as HA-A4-SH5

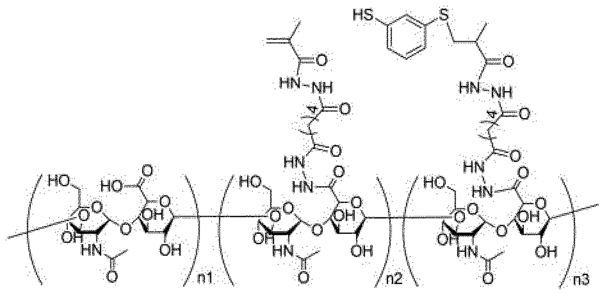

recorded as HA-MA4-SH5

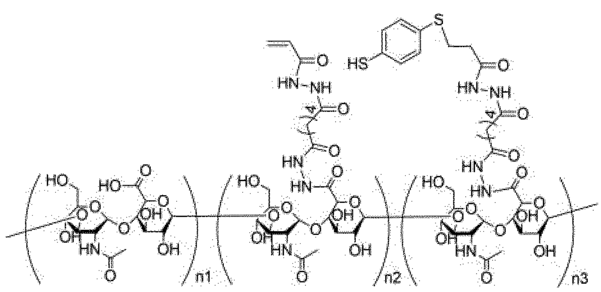

recorded as HA-A4-SH6

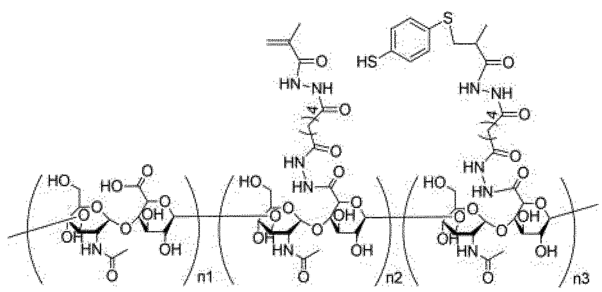

recorded as HA-MA4-SH6

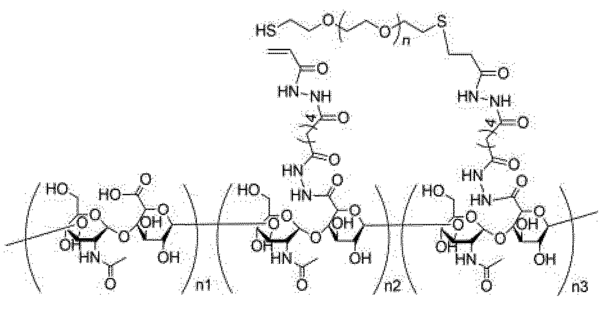

recorded as HA-A4-SH7

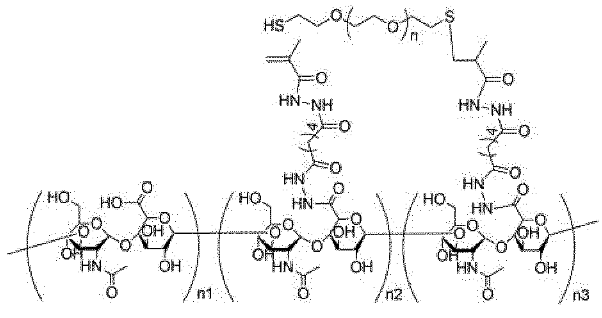

recorded as HA-MA4-SH7

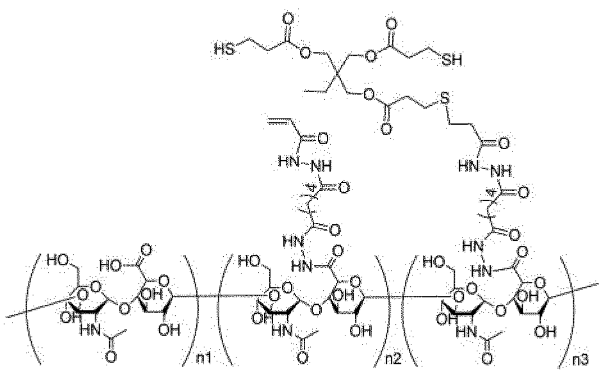

recorded as HA-A4-SH8

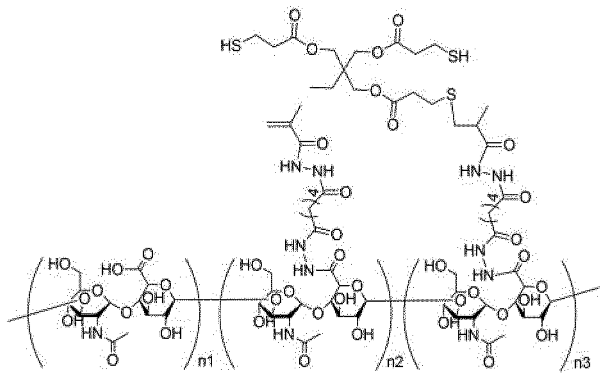

recorded as HA-MA4-SH8

in the above structural formulas, n1, n2 and n3 are defined as above.

For the sulfhydryl-modified hyaluronic acid of the present disclosure, there are three indexes and determination methods commonly used to characterize the physicochemical properties: intrinsic viscosity determination, in which the intrinsic viscosity is an effective parameter for characterizing the molecular weight of a polymer compound, corresponding to high performance gel permeation chromatography and multi-angle laser light scattering combined with gel permeation chromatography; water retention rate determination; and oxidation resistance determination. As described above, the viscosity, water retention, and oxidation resistance are the main physicochemical properties of the hyaluronic acid, which are closely related to the application range of the hyaluronic acid. Specifically, in the characterization of physicochemical properties of the series of sulfhydryl-modified hyaluronic acid compounds described herein, the viscosity is the most important performance index, which is not only an external index of molecular weight, but also a key index that affects the therapeutic or plastic effect of each sulfhydryl-modified hyaluronic acid in human body. Large viscosity makes the sulfhydryl-modified hyaluronic acid more difficult to disperse in tissues, thereby reducing the absorption rate of such compounds by tissues, and keeping them in human body for a longer period of time, i.e., increasing their metabolic half-life in vivo. In addition, the water retention and moisture supplement function is an important functional index of such compounds used in clinic, cosmetics and the like, and the water retention rate is an important index for evaluating such compounds and a comparative index for superiority. The oxidation resistance is also a main functional index of the sulfhydryl-modified hyaluronic acid involved in the present disclosure, and is also a main functional index of such compounds used in antioxidation cosmetics, antioxidation health care products and antioxidation medical products. There have been perfect testing methods and evaluation systems for determining the oxidation resistance.

The intrinsic viscosity determination is a method for calculating the molecular weight of a polymer by utilizing the rheological property thereof, which is simple and easy to implement, and is widely used today. For example, the sodium hyaluronate examination item recorded in European pharmacopoeia and British pharmacopoeia is used to control the quality and hence the molecular weight of the sodium hyaluronate by the intrinsic viscosity determination. This determination does not need reference substances, but it is greatly affected by the purity of the sample, and the content of hyaluronic acid in the solution needs to be accurately determined. The intrinsic viscosity determination is the most commonly used method for determining the molecular weight of hyaluronic acid because it does not require expensive equipments, and has simple operation and accurate results. At present, when determining the molecular weight of hyaluronic acid solution by this determination, the solution is first precipitated with ethanol, and the precipitate is collected and dried to obtain a solid before determination. However, this determination has poor accuracy in terms of the complex results, and is time consuming. The intrinsic viscosity determination is close to the method for directly determining the

viscosity of such polymer compounds that is also an important characteristic physicochemical index related to the molecular weight of such polymer compounds.

In addition, the other two methods for characterizing the molecular weight of such polymer compounds are high performance gel permeation chromatography and multi-angle laser light scattering combined with gel permeation chromatography.

High performance gel permeation chromatography (HPGPC) is a liquid chromatography technique for separating molecules according to their size, with the retention time of a material passing through a column being linearly and negatively correlated with the logarithm of its molecular weight. The method has good reproducibility and high speed, and can measure the average molecular weight and the distribution thereof. However, the determination of molecular weight by HPGPC requires the correction of the corresponding reference substance, and the hyaluronic acid reference substance is generally difficult to obtain, so that only samples with similar structures can be selected as the reference substance. Due to the different structure from the hyaluronic acid, the reference substance has different molecular weight, which causes the determined molecular weights of the sample to deviate from the true value.

Multi-angle laser light scattering combined with gel permeation chromatography (GPC/MALLS) can obtain the concentration and molecular weight of each fraction point in the sample elution profile for polymer samples in any molecular weight range regardless of the molecular state in the mobile phase. This method can obtain the molecular weight of the sample without a reference substance, and the determination result is accurate and reliable. However, the instrument is expensive, and in ultra-high molecular weight measurements, the sample may undergo shear degradation in the porous medium or block the gel column. Therefore, the application of this method is limited.

The water retention rate determination comprises the following steps: on the basis of selecting a proper sample and an effect comparison sample, the water retention property of different biocompatible high polymer materials is determined, mainly including indexes such as water absorption multiple in pure water, liquid absorption multiple in proper solutions, water absorption rate in pure water or proper solutions, water retention, repeated water absorption, liquid absorption property of the simulated liquid for use in the a human body environment and the like, wherein the simulated liquid for use in the a human body environment includes the simulated tissue fluid, the simulated cell fluid and the like. All tests must be repeated and validated.

The water absorption multiples (Q) of different water-retaining agents are determined according to the following formula: (m2 - m1) / m1, where m1 and m2 represents the mass of the water-retaining agent for the biocompatible polymer compound in a dry state of the mass standard and in a saturated state by water absorption, which is usually expressed in grams. The dry state of the mass standard means that the water content of the finished product does not exceed 10%.

The water absorption rates of different biocompatible polymer compounds are determined according to the filtration method for determining the water absorption rate. Several parts of about 1 g or proper weights of biocompatible polymer are taken, precisely weighed, placed in water or different solutions and left to stand, and then filtered and weighed at different time points in sequence to obtain the water absorption rate of the water-retaining agent at different time points.

The oxidation resistance determination: the oxidation resistance determination of biocompatible polymer materials related to the present patent: the oxidation resistance of each biocompatible polymer compound is evaluated by the capacity of removing free radicals, wherein the removing free radicals mainly refers to removing oxygen free radicals, which has a mature and well-known determination method in the pharmaceutical industry.

[Preparation Method for Sulfhydryl-modified Hyaluronic Acid]

As described above, the present disclosure provides a preparation method for the sulfhydryl-modified hyaluronic acid, which comprises the following steps:

1) acryloylating the hyaluronic acid, namely linking at least one from the -COOH and the -OH comprised in the side chain of the repeating unit of the hyaluronic acid, directly or indirectly, to the following group:

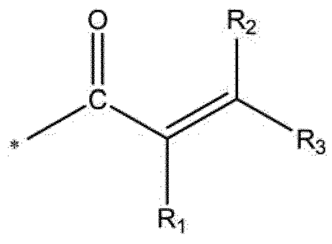

wherein R1, R2 and R3 are defined as above, and * represents a linking site;

2) reacting the acryloylated hyaluronic acid with a polysulfhydryl compound HS-R4-SH to obtain the sulfhydryl-modified hyaluronic acid, wherein R4 is defined as above.

Specifically, the step 1) is as follows: acryloylating the hyaluronic acid, namely linking at least one from the -COOH and the -OH comprised in the side chain of the repeating unit of the hyaluronic acid, via an R group or directly, to the terminal group to form the side chain of at least one of the following structures:

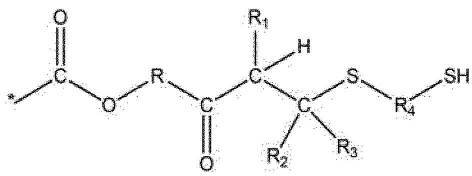
(structure a)

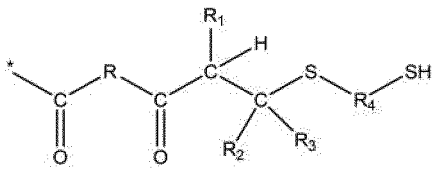
(structure b)

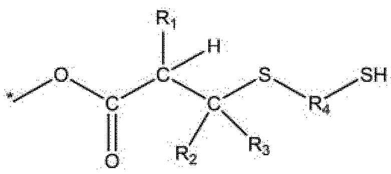
(structure c)

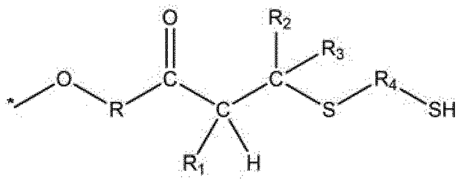
(structure d)

in the structures a, b, c and d, R, R1, R2, R3 and R4 are defined as above, and * represents a linking site.

In step 1), the acryloylating step can be performed by reacting a hyaluronic acid to be modified with an acrylate compound, or by reacting the hyaluronic acid to be modified with an acryloyl chloride compound or an acrylic anhydride compound.

The acrylate compound may be one or more of an alkyl acrylate compound, an aryl acrylate compound and a glycidyl acrylate polyol compound.

The polyol in the glycidyl acrylate polyol compound is, for example, a triol, specifically, glycerin, butanetriol, pentanetriol, and the like.

In step 1), the acryloylating step may be a conventional reaction step, which can be performed under existing conventional conditions. Generally, it is performed by reacting acryloyl chloride and derivatives thereof or acrylic anhydride and derivatives thereof with the hyaluronic acid to be modified. It is also performed by reacting glycidyl acrylate and derivatives thereof with the hyaluronic acid to be modified.

In step 1), the acryloylating step can be an unconventional reaction step, namely using a method other than the above method to synthesize a polymer compound comprising at least one selected from the structures a, b, c and d.

In step 1), the structure of the product obtained from the acryloylating step is at least one of the following structures:

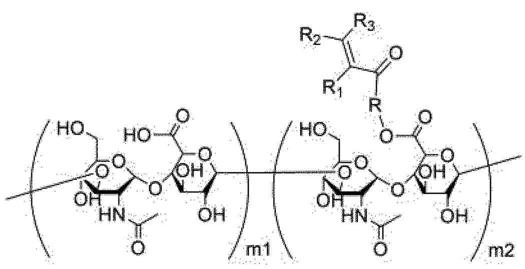

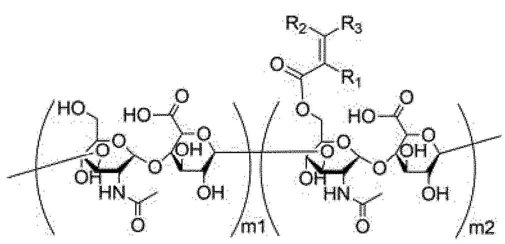

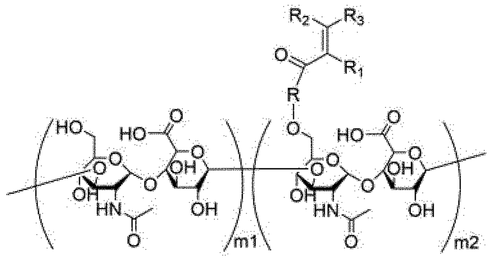

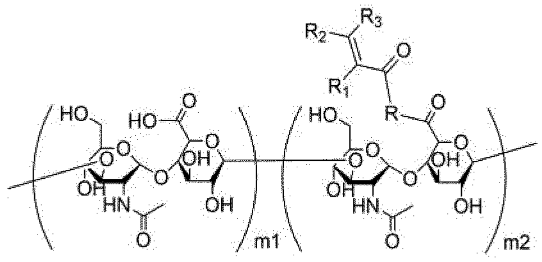

in the above structures, R, R1, R2 and R3 are defined as above, and (m2)/(m1+m2) represents the degree of acryloylation.

In step 2), the reaction with the polysulfhydryl compound HS-R4-SH is performed in a solvent. The solvent is, for example, water or an organic solvent, and further can be deionized water or dimethylformamide.

In step 2), the reaction with the polysulfhydryl compound HS-R4-SH is performed under low to high temperature conditions. For example, the reaction temperature is 0-80 °C, and further can be 10-70 °C, and for example, the reaction can be performed at room temperature.

In step 2), the reaction time for the reaction with the polysulfhydryl compound HS-R4-SH is 0.1-100 h.

In step 2), the pH range for the reaction with the polysulfhydryl compound HS-R4-SH is -1 to 15. For example, the reaction pH can be 6-8, and for another example, 7.

In step 2), the reaction further comprises a post-treatment step.

In the post-treatment step, a dialysis method is adopted. Specifically, the solution after the reaction is filled into a dialysis bag (for example, a dialysis bag with a molecular weight cutoff of 2 kDa or more), dialyzed against a hydrochloric acid solution (for example, at pH 4) for several days (for example, 1-10 days, for another example, 5 days, and the like), optionally refreshed with water (for example, refreshed with water every day or every other day) for several times (for example, twice or more, and the like), and finally collected and dried (for example, lyophilized) to obtain a solid, i.e., the sulfhydryl-modified hyaluronic acid derivative.

The present disclosure firstly provides a preparation method for the sulfhydryl-modified hyaluronic acid by the Michael addition reaction of the sulfhydryl of the polysulfhydryl compound with the carbon-carbon double bond in the acryloyl group. The method has a high degree of sulfhydrylation, mild conditions for the sulfhydrylation reaction (can be performed at room temperature in an aqueous solution) and no pollution, and the prepared sulfhydryl-modified hyaluronic acid has high purity and is particularly suitable for further use in the fields such as pharmaceuticals, cosmetology and medicine.

[Application of Sulfhydryl-modified Hyaluronic Acid]

As described above, the present disclosure also provides use of the sulfhydryl-modified hyaluronic acid for the fields such as antioxidation health care products, biopharmaceuticals, medical cosmetology and cosmetics (e.g., at least one selected from antioxidation cosmetics and water retention and moisture supplement cosmetics).

It is known that hyaluronic acid (HA) is a linear, non-branched macromolecular acidic mucopolysaccharide polymer composed of repeated and alternating linkages of disaccharides (the structural units are β -(1,4)-N-acetyl-d-glucosamine and β -(1,3)-d-glucuronic acid). The chain length of HA varies from about 5 kDa to 20 MDa, with the range from 2 MDa to 5 MDa being the most common. More than 50% of hyaluronic acid is present in skin, lung and intestinal tissue. In addition, it is also present in interstitial tissues such as synovial fluid, cartilage, umbilical cord, and vascular wall. Hyaluronic acid in the human body mainly exerts physiological functions such as lubrication and buffering, filling and diffusion barrier, and free radical removal. Currently marketed hyaluronic acid products can be extracted from animal tissues (such as cockscomb, lens of eye, cerebral cartilage and synovial fluid), or prepared by the fermentation of bacteria (such as streptococcus and pseudomonas aeruginosa). In recent years, with the in-depth research on the functions of HA, HA has been widely used in the pharmaceutical field, such as for the preparation of drug delivery systems, for the treatment of orthopedic and ophthalmic diseases, and for the prevention of post-operative adhesions and the repairing of soft tissues, which has become a research hot spot in the fields of tissue engineering and regenerative medicine. Although natural HA has excellent biocompatibility and anti-inflammatory effects, it has poor mechanical strength and degradability when in a pure state. Therefore, as a scaffold material for tissue engineering, HA must be chemically modified in a suitable way or used in combination with other materials to improve those deficiencies, to better exert its biological effects, and to provide a good environment for the survival and function of cells and the repairing and regeneration of tissues.

In the present disclosure, the sulfhydryl-modified hyaluronic acid is prepared and recorded as HA-SH, which can be cross-linked by thiol oxidation to form a stable cross-linked material (e.g., hydrogel) with excellent mechanical properties, good physical stability and mechanical strength; in addition, the in vivo metabolic rate is controllable, and

the HA-SH can also be used with other components of biological functional materials make up for each other's deficiencies, thus obtaining a three-dimensional scaffold material with excellent properties that can meet the requirements of most tissue engineering applications.

The present disclosure will be further illustrated with reference to the following specific examples. It should be understood that these examples are merely intended to illustrate the present disclosure rather than limit the protection scope of the present disclosure. In addition, it should be understood that various changes or modifications may be made by those skilled in the art after reading the teachings of present disclosure, and these equivalents also fall within the protection scope of the present disclosure.

In the present disclosure, the 1H-NMR spectrum is determined by a Varian 400 MHz nuclear magnetic resonance spectrometer, with the test temperature of 25 °C, the relaxation time of 1 s, and the number of scanning of 8. Specifically, 8-10 mg of the test sample is dissolved in 750 μL of deuterated water, and the obtained sample solution is determined for the 1H-NMR spectrum.

Preparation Example 1. Synthesis of Acrylate-Modified Hyaluronic Acid (HA-A1)

To a 200 mL beaker were added 1 g of hyaluronic acid (Bloomage Freda, weight-average molecular weight: about 300 kDa), 50 mL of deionized water, 50 mL of dimethylformamide, 12 mL of triethylamine, and 14 mL of glycidyl acrylate. After being stirred at room temperature until uniform and transparent, the mixture was stirred for an additional 48 h. 300 mL of acetone was added, and a large amount of white precipitate was generated. The reaction solution was centrifuged, and the resulting precipitate was dissolved in 100 mL of deionized water to obtain a colorless transparent solution. The resulting solution was filled into a dialysis bag (molecular weight cutoff: 8 kDa) and dialyzed against 5 L of deionized water for 5 days, with water refreshed twice a day. Finally, the solution in the dialysis bag was collected and lyophilized to obtain HA-A1 (921 mg, yield 92.1%) as a white flocculent solid.

The structural formula of HA-A1 is shown in FIG. 26. FIG. 26 is a schematic diagram only, showing the esterification of COOH in some of the repeating units of the hyaluronic acid with glycidyl acrylate, wherein m2/(m1+m2) represents the degree of acryloylation, m1 + m2 = n, and n is the number of repeating units of an un-modified hyaluronic acid. The meanings of the structural formulas in the following preparation examples and examples are the same as that of Preparation Example 1, and will not be repeated.

The 1H-NMR spectrum of HA-A1 is shown in FIG. 26, wherein a nuclear magnetic peak belonging to the acrylic functional group located between 6 ppm and 6.5 ppm can be seen, demonstrating that the group is successfully grafted into the structure of the hyaluronic acid.

Preparation Example 2. Synthesis of Acrylate-Modified Hyaluronic Acid (HA-A2)

To a 200 mL beaker were added 1 g of hyaluronic acid (Bloomage Freda, weight-average molecular weight: about 400 kDa), 50 mL of deionized water, 50 mL of dimethylformamide, and 6.3 g of acrylic anhydride, and the mixture was dissolved with stirring. The solution was maintained at pH 8 ± 0.5 with 1 mol/L NaOH, and stirred for an additional 24 h. 300 mL of acetone was added, and a large amount of white precipitate was generated. The reaction solution was centrifuged, and the resulting precipitate was dissolved in 100 mL of deionized water to obtain a colorless transparent solution. The resulting solution was filled into a dialysis bag (Spectrumlabs, molecular weight cutoff: 8 kDa) and dialyzed against 5 L of deionized water for 5 days, with water refreshed twice a day. Finally, the solution in the dialysis bag was collected and lyophilized to obtain HA-A2 (789 mg, yield 78.9%) as a white flocculent solid.

The structural formula of HA-A2 is shown in FIG. 27.

The 1H-NMR spectrum of HA-A2 is shown in FIG. 27, wherein a nuclear magnetic peak belonging to the acrylic functional group located between 5.8 ppm and 6.4 ppm can be seen, demonstrating that the group is successfully grafted into the structure of the hyaluronic acid.

Preparation Example 3. Synthesis of Methacrylate-Modified Hyaluronic Acid (HA-MA1)

To a 200 mL beaker were added 1 g of hyaluronic acid (Bloomage Freda, weight-average molecular weight: about 400 kDa), 50 mL of deionized water, 50 mL of dimethylformamide (Sigma), 12 mL of triethylamine (Sigma), and 15 mL of glycidyl methacrylate. After being stirred at room temperature until uniform and transparent, the mixture was stirred for an additional 48 h. 300 mL of acetone (Sigma) was added, and a large amount of white precipitate was generated. The reaction solution was centrifuged, and the resulting precipitate was dissolved in 100 mL of deionized water to obtain a colorless solution. The resulting solution was filled into a dialysis bag (Spectrumlabs, molecular weight cutoff: 8 kDa) and dialyzed against 5 L of deionized water for 5 days, with water refreshed twice a day. Finally, the solution in the dialysis bag was collected and lyophilized to obtain HA-MA1 (859 mg, yield 85.9%) as a white flocculent solid.

The structural formula of HA-MA1 is shown in FIG. 28.

The 1H-NMR spectrum of HA-MA1 is shown in FIG. 28, wherein a nuclear magnetic peak belonging to the methacrylic functional group located between 5.8 ppm and 6.2 ppm can be seen, demonstrating that the group is successfully grafted into the structure of the hyaluronic acid.

Preparation Example 4. Synthesis of Methacrylate-Modified Hyaluronic Acid (HA-MA2)

To a 200 mL beaker were added 1 g of hyaluronic acid (Bloomage Freda, weight-average molecular weight: about 400 kDa) and 100 mL of deionized water, and the mixture was dissolved with stirring at room temperature. Further, 7.7 g of methacrylic anhydride was added and dissolved with stirring. The solution was maintained at pH 8 ± 0.5 with 1 mol/L NaOH, and stirred for an additional 24 h. 200 mL of acetone (Sigma) was added, and a large amount of white precipitate was generated. The reaction solution was centrifuged, and the resulting precipitate was dissolved in 100 mL of deionized water to obtain a colorless transparent solution. The resulting solution was filled into a dialysis bag (Spectrumlabs, molecular weight cutoff: 8 kDa) and dialyzed against 5 L of deionized water for 5 days, with water refreshed twice a day. Finally, the solution in the dialysis bag was collected and lyophilized to obtain HA-MA2 (846 mg, yield 84.6%) as a white flocculent solid.

The structural formula of HA-MA2 is shown in FIG. 29.

The 1H-NMR spectrum of HA-MA2 is shown in FIG. 29, wherein a nuclear magnetic peak belonging to the methacrylic functional group located between 5.8 ppm and 6.2 ppm can be seen, demonstrating that the group is successfully grafted into the structure of the hyaluronic acid.

Example 1. Synthesis of Sulfhydryl-Acrylate-Modified Hyaluronic Acid (HA-A1-SH1)

To a 200 mL beaker were added 1 g of HA-A1 prepared according to the method of Preparation Example 1, 0.3 g of dithiothreitol (VWR) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A1-SH1 (842 mg, yield 84.2%) as a white flocculent solid.

The reaction equation for HA-A1-SH1 is shown in FIG. 9, and the structural formula is shown in FIGs. 9 and 30.

The 1H-NMR spectrum of HA-A1-SH1 is shown in FIG. 30, wherein a nuclear magnetic peak belonging to a sulfhydryl side chain located between 2.3 ppm and 2.8 ppm can be seen, demonstrating that the sulfhydryl group is successfully grafted into the structure of the hyaluronic acid.

Example 2. Synthesis of Sulfhydryl-Acrylate-Modified Hyaluronic Acid (HA-A2-SH1)

To a 200 mL beaker were added 1 g of HA-A2 prepared according to the method of Preparation Example 2, 0.3 g of dithiothreitol (VWR) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH1 (827 mg, yield 82.7%) as a white flocculent solid.

The reaction equation for HA-A2-SH1 is shown in FIG. 10, and the structural formula is shown in FIGs. 10 and 31.

The 1H-NMR spectrum of HA-A2-SH1 is shown in FIG. 31, wherein a nuclear magnetic peak belonging to a sulfhydryl side chain located between 2.6 ppm and 2.9 ppm can be seen, demonstrating that the sulfhydryl group is successfully grafted into the structure of the hyaluronic acid.

Example 3. Synthesis of Sulfhydryl-Methacrylate-Modified Hyaluronic Acid (HA-MA1-SH1)

To a 200 mL beaker were added 1 g of HA-MA1 prepared according to the method of Preparation Example 3, 0.3 g of dithiothreitol (VWR) and 100 mL of deionized water, and the mixture was dissolved with stirring at room temperature. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-MA1-SH1 (854 mg, yield 85.4%) as a white flocculent solid.

The reaction equation for HA-MA1-SH1 is shown in FIG. 11, and the structural formula is shown in FIGs. 11 and 32.

The 1H-NMR spectrum of HA-MA1-SH1 is shown in FIG. 32, wherein a nuclear magnetic peak belonging to a

sulfhydryl side chain located between 2.6 ppm and 3.0 ppm can be seen, demonstrating that the sulfhydryl group is successfully grafted into the structure of the hyaluronic acid.

Example 4. Synthesis of Sulfhydryl-Methacrylate-Modified Hyaluronic Acid (HA-MA2-SH1)

To a 200 mL beaker were added 1 g of HA-MA2 prepared according to the method of Preparation Example 4, 0.3 g of dithiothreitol (VWR) and 100 mL of deionized water, and the mixture was dissolved with stirring at room temperature. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-MA2-SH1 (833 mg, yield 83.3%) as a white flocculent solid.
The reaction equation for HA-MA2-SH1 is shown in FIG. 12, and the structural formula is shown in FIGs. 12 and 33.
The 1H-NMR spectrum of HA-MA2-SH1 is shown in FIG. 33, wherein a nuclear magnetic peak belonging to a sulfhydryl side chain located between 2.6 ppm and 3.0 ppm can be seen, demonstrating that the sulfhydryl group is successfully grafted into the structure of the hyaluronic acid.

Example 5. Synthesis of Sulfhydryl-Acrylate-Modified Hyaluronic Acid (HA-A1-SH2)

To a 200 mL beaker were added 1 g of HA-A1 prepared according to the method of Preparation Example 1, 0.42 g of 1,4-butanedithiol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A1-SH2 (852 mg, yield 85.2%) as a white flocculent solid.
The reaction equation for HA-A1-SH2 is shown in FIG. 13, and the structural formula is shown in FIGs. 13 and 34.
The 1H-NMR spectrum of HA-A1-SH2 is shown in FIG. 34, wherein a nuclear magnetic peak belonging to a sulfhydryl side chain located between 1.6 ppm and 1.9 ppm can be seen, demonstrating that the sulfhydryl group is successfully grafted into the structure of the hyaluronic acid.

Example 6. Synthesis of Sulfhydryl-Acrylate-Modified Hyaluronic Acid (HA-A1-SH3)

To a 200 mL beaker were added 1 g of HA-A1 prepared according to the method of Preparation Example 1, 0.43 g of 2-amino-1,4-butanedithiol hydrochloride (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A1-SH3 (843 mg, yield 84.3%) as a white flocculent solid.
The reaction equation for HA-A1-SH3 is shown in FIG. 14, and the structural formula is shown in FIGs. 14 and 35.
The 1H-NMR spectrum of HA-A1-SH3 is shown in FIG. 35, wherein a nuclear magnetic peak belonging to a sulfhydryl side chain located between 3.0 ppm and 3.2 ppm can be seen, demonstrating that the sulfhydryl group is successfully grafted into the structure of the hyaluronic acid.

Example 7. Synthesis of Sulfhydryl-Acrylate-Modified Hyaluronic Acid (HA-A2-SH2)

To a 200 mL beaker were added 1 g of HA-A2 prepared according to the method of Preparation Example 2, 0.42 g of 1,4-butanedithiol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH2 (827 mg, yield 82.7%) as a white flocculent solid.
The reaction equation for HA-A2-SH2 is shown in FIG. 15, and the structural formula is shown in FIGs. 15 and 36.
The 1H-NMR spectrum of HA-A2-SH2 is shown in FIG. 36, wherein a nuclear magnetic peak belonging to a sulfhydryl side chain located between 1.6 ppm and 1.9 ppm can be seen, demonstrating that the sulfhydryl group is successfully grafted into the structure of the hyaluronic acid.

Example 8. Synthesis of Sulfhydryl-Acrylate-Modified Hyaluronic Acid (HA-A2-SH3)

To a 200 mL beaker were added 1 g of HA-A2 prepared according to the method of Preparation Example 2, 0.43 g of 2-amino-1,4-butanedithiol hydrochloride (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH3 (833 mg, yield 83.3%) as a white flocculent solid.
The reaction equation for HA-A2-SH3 is shown in FIG. 16, and the structural formula is shown in FIGs. 16 and 37.
The 1H-NMR spectrum of HA-A2-SH3 is shown in FIG. 37, wherein a nuclear magnetic peak belonging to a sulfhydryl side chain located between 3.0 ppm and 3.2 ppm can be seen, demonstrating that the sulfhydryl group is successfully grafted into the structure of the hyaluronic acid.

Example 9. Synthesis of Sulfhydryl-Acrylate-Modified Hyaluronic Acid (HA-A2-SH4)

To a 200 mL beaker were added 1 g of HA-A2 prepared according to the method of Preparation Example 2, 0.38 g of 1,3-propanedithiol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH4 (814 mg, yield 81.4%) as a white flocculent solid.
The reaction equation for HA-A2-SH4 is shown in FIG. 17, and the structural formula is shown in FIGs. 17 and 38.
The 1H-NMR spectrum of HA-A2-SH4 is shown in FIG. 38, wherein a nuclear magnetic peak belonging to a sulfhydryl side chain located between 2.5 ppm and 2.8 ppm can be seen, demonstrating that the sulfhydryl group is successfully grafted into the structure of the hyaluronic acid.

Example 10. Synthesis of Sulfhydryl-Acrylate-Modified Hyaluronic Acid (HA-A2-SH5)

To a 200 mL beaker were added 1 g of HA-A2 prepared according to the method of Preparation Example 2, 0.52 g of 1,3-phenyldithiophenol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH5 (836 mg, yield 83.6%) as a white flocculent solid.
The reaction equation for HA-A2-SH5 is shown in FIG. 18, and the structural formula is shown in FIGs. 18 and 39.
The 1H-NMR spectrum of HA-A2-SH5 is shown in FIG. 39, wherein a nuclear magnetic peak belonging to a sulfhydryl side chain located between 6.9 ppm and 7.4 ppm can be seen, demonstrating that the sulfhydryl group is successfully grafted into the structure of the hyaluronic acid.

Example 11. Synthesis of Sulfhydryl-Acrylate-Modified Hyaluronic Acid (HA-A2-SH6)

To a 200 mL beaker were added 1 g of HA-A2 prepared according to the method of Preparation Example 2, 0.52 g of 1,4-phenyldithiophenol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH6 (831 mg, yield 83.1%) as a white flocculent solid.
The reaction equation for HA-A2-SH6 is shown in FIG. 19, and the structural formula is shown in FIGs. 19 and 40.
The 1H-NMR spectrum of HA-A2-SH6 is shown in FIG. 40, wherein a nuclear magnetic peak belonging to a sulfhydryl side chain located between 6.8 ppm and 7.0 ppm can be seen, demonstrating that the sulfhydryl group is successfully grafted into the structure of the hyaluronic acid.

Example 12. Synthesis of Sulfhydryl-Acrylate-Modified Hyaluronic Acid (HA-A2-SH7)

To a 200 mL beaker were added 1 g of HA-A2 prepared according to the method of Preparation Example 2, 0.96 g of sulfhydryl polyethylene glycol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed

against 5 L of hydrochloric acid solution at pH 4 for 5 days, with water refreshed twice a day. Finally, the solution in the dialysis bag was collected and lyophilized to obtain HA-A2-SH7 (894 mg, yield 89.4%) as a white flocculent solid.

The reaction equation for HA-A2-SH7 is shown in FIG. 20, and the structural formula is shown in FIGs. 20 and 41.

The 1H-NMR spectrum of HA-A2-SH7 is shown in FIG. 41, wherein a nuclear magnetic peak belonging to a sulfhydryl side chain located at 3.6 ppm can be seen, demonstrating that the sulfhydryl group is successfully grafted into the structure of the hyaluronic acid.

Example 13. Synthesis of Sulfhydryl-Acrylate-Modified Hyaluronic Acid (HA-A2-SH8)

To a 200 mL beaker were added 1 g of HA-A2 prepared according to the method of Preparation Example 2, 0.74 g of trimethylolpropane-tris(3-sulfhydrylpropionate) (Sigma), 50 mL of deionized water and 50 mL of dimethylformamide, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH8 (785 mg, yield 78.5%) as a white flocculent solid.

The reaction equation for HA-A2-SH8 is shown in FIG. 21, and the structural formula is shown in FIGs. 21 and 42.

The 1H-NMR spectrum of HA-A2-SH8 is shown in FIG. 42, wherein nuclear magnetic peaks belonging to a sulfhydryl side chain located between 0.8 ppm and 1.0 ppm, at 1.5 ppm, and between 2.6 ppm and 2.9 ppm can be seen, demonstrating that the sulfhydryl group is successfully grafted into the structure of the hyaluronic acid.

Example 14. Synthesis of Sulfhydryl-Methacrylate-Modified Hyaluronic Acid (HA-MA1-SH5)

To a 200 mL beaker were added 1 g of HA-MA1 prepared according to the method of Preparation Example 3, 0.50 g of 1,3-phenyldithiophenol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-MA1-SH5 (828 mg, yield 82.8%) as a white flocculent solid.

The reaction equation for HA-MA1-SH5 is shown in FIG. 22, and the structural formula is shown in FIGs. 22 and 43.

The 1H-NMR spectrum of HA-MA1-SH5 is shown in FIG. 43, wherein a nuclear magnetic peak belonging to a sulfhydryl side chain located between 6.9 ppm and 7.4 ppm can be seen, demonstrating that the sulfhydryl group is successfully grafted into the structure of the hyaluronic acid.

Example 15. Synthesis of Sulfhydryl-Methacrylate-Modified Hyaluronic Acid (HA-MA1-SH6)

To a 200 mL beaker were added 1 g of HA-MA1 prepared according to the method of Preparation Example 3, 0.50 g of 1,4-phenyldithiophenol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-MA1-SH6 (833 mg, yield 83.3%) as a white flocculent solid.

The reaction equation for HA-MA1-SH6 is shown in FIG. 23, and the structural formula is shown in FIGs. 23 and 44.

The 1H-NMR spectrum of HA-MA1-SH6 is shown in FIG. 44, wherein a nuclear magnetic peak belonging to a sulfhydryl side chain located between 6.9 ppm and 7.0 ppm can be seen, demonstrating that the sulfhydryl group is successfully grafted into the structure of the hyaluronic acid.

Example 16. Synthesis of Sulfhydryl-Methacrylate-Modified Hyaluronic Acid (HA-MA2-SH7)

To a 200 mL beaker were added 1 g of HA-MA2 prepared according to the method of Preparation Example 4, 0.92 g of sulfhydryl polyethylene glycol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-MA2-SH7 (876 mg, yield 87.6%) as a white flocculent solid.

The reaction equation for HA-MA2-SH7 is shown in FIG. 24, and the structural formula is shown in FIGs. 24

and 45.

The 1H-NMR spectrum of HA-MA2-SH7 is shown in FIG. 45, wherein a nuclear magnetic peak belonging to a sulfhydryl side chain located at 3.6 ppm can be seen, demonstrating that the sulfhydryl group is successfully grafted into the structure of the hyaluronic acid.

Example 17. Synthesis of Sulfhydryl-Methacrylate 2-Modified Hyaluronic Acid (HA-MA2-SH8)

To a 200 mL beaker were added 1 g of HA-MA2 prepared according to the method of Preparation Example 4, 0.68 g of trimethylolpropane-tris(3-sulfhydrylpropionate) (Sigma), 50 mL of deionized water and 50 mL of dimethylformamide, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-MA2-SH8 (825 mg, yield 82.5%) as a white flocculent solid.

The reaction equation for HA-MA2-SH8 is shown in FIG. 25, and the structural formula is shown in FIGs. 25 and 46.

The 1H-NMR spectrum of HA-MA2-SH8 is shown in FIG. 46, wherein nuclear magnetic peaks belonging to a sulfhydryl side chain located between 0.8 ppm and 1.0 ppm, at 1.5 ppm, and between 2.6 ppm and 2.9 ppm can be seen, demonstrating that the sulfhydryl group is successfully grafted into the structure of the hyaluronic acid.

Example 18. Determination of Sulfhydryl Content of Sulfhydryl-Modified Polymer Compounds by Ellman Method

Preparation process:

1. Preparation of a test buffer: 0.1 mol/L Na2HPO4 (containing 1 mmol/L EDTA, adjusted to pH 8.0 with concentrated hydrochloric acid).
2. Preparation of a standard working solution: 30 mmol/L cysteine solution.
3. Preparation of an Ellman reagent stock solution: 0.1 mol/L Ellman reagent solution.
4. Preparation of a standard solution:

| Molar concentration of sulfhydryl | 0 mmol/L | 0.5 mmol/L | 1.0 mmol/L | 1.5 mmol/L | 2.0 mmol/L |
|---|---|---|---|---|---|
| Standard working solution (μL) | 0 | 4 | 8 | 12 | 16 |
| Buffer (μL) | 240 | 236 | 232 | 228 | 224 |
| Total volume (μL) | 240 | 240 | 240 | 240 | 240 |

5. Preparation of a test sample solution: an appropriate amount of the sulfhydryl-modified polymer compound sample was dissolved in the buffer to prepare 1 mg/mL solution to be tested (triplicates for each sample).

Testing process:

1. The cysteine standard solution was prepared in a 0.5 mL centrifuge tube according to step 4 above.
2. In an additional 1.5 mL centrifuge tube, 50 μL of Ellman assay solution was added to 1 mL buffer to obtain an assay solution.
3. 240 μL of the standard solution/test sample solution were each mixed with the Ellman assay solution in step 2 of the testing process, and reacted at room temperature for 15 min.
4. After 15 min, the absorbance at 412 nm was determined using a microplate reader.
5. The thiol content in the product can be calculated according to the absorbance/concentration standard curve of the obtained standard solution.

The standard curve of the sulfhydryl content is shown in FIG. 47, and the determination results of the sulfhydryl content are shown in Table 1.

Example 19. Determination of Dynamic Viscosity of Sulfhydryl-Modified HA

500 mg of sulfhydryl-modified polymer compound was dissolved in 50 mL of deionized water to obtain a 1% w/v solution. The dynamic viscosity of the resulting solution was determined at 25 °C using a rotary viscometer. The results are shown in Table 1.

Table 1. Determination results of sulfhydryl content and dynamic viscosity of sulfhydryl-modified polymer compounds

| Sample | Ellman assay results | Determination results of viscosity |
|---|---|---|
| | Sulfhydryl content (mmol/g) | Dynamic viscosity (mPa·s) |
| HA-A1-SH1 | 1.357 | 420 |
| HA-A2-SH1 | 1.424 | 416 |
| HA-MA1-SH1 | 1.322 | 387 |
| HA-MA2-SH1 | 1.362 | 441 |
| HA-A1-SH2 | 1.428 | 452 |
| HA-A1-SH3 | 1.347 | 398 |
| HA-A2-SH2 | 1.471 | 435 |
| HA-A2-SH3 | 1.413 | 412 |
| HA-A2-SH4 | 1.458 | 487 |
| HA-A2-SH5 | 1.347 | 437 |
| HA-A2-SH6 | 1.298 | 416 |
| HA-A2-SH7 | 0.974 | 473 |
| HA-A2-SH8 | 2.471 | 451 |
| HA-MA1-SH5 | 1.242 | 436 |
| HA-MA1-SH6 | 1.317 | 429 |
| HA-MA2-SH7 | 0.857 | 481 |
| HA-MA2-SH8 | 2.146 | 447 |

Example 20. Determination of Molecular Weight and Distribution of Sulfhydryl-Modified Polymer Compounds by GPC

The mobile phase of GPC was 0.05 M sodium sulfate solution, with a flow rate of 1 mL/min and a column temperature of 30 °C. The curve of the standard polyethylene glycol polymer was used as the standard curve.

5 mg of sulfhydryl-modified HA was dissolved in 1 mL of 0.05 M sodium sulfate solution, filtered through a 0.22 μM filter, and determined by GPC. The results of molecular weight and distribution are shown in Table 2.

Table 2. Determination results of the molecular weight and molecular weight distribution of sulfhydryl-modified HA

| Sample | Mn (Da) | Mw (Da) | PDI |
|---|---|---|---|
| HA-A1-SH1 | 114599 | 338178 | 2.95 |
| HA-A2-SH1 | 90222 | 426199 | 4.72 |
| HA-MA1-SH1 | 74053 | 454233 | 6.13 |
| HA-MA2-SH1 | 52132 | 427591 | 8.20 |
| HA-A1-SH2 | 102221 | 454335 | 4.44 |
| HA-A1-SH3 | 72720 | 429952 | 5.91 |
| HA-A2-SH2 | 103770 | 373400 | 3.60 |
| HA-A2-SH3 | 83819 | 411866 | 4.91 |

(continued)

| Sample | Mn (Da) | Mw (Da) | PDI |
|---|---|---|---|
| HA-A2-SH4 | 73382 | 417944 | 5.70 |
| HA-A2-SH5 | 57322 | 416987 | 7.27 |
| HA-A2-SH6 | 76601 | 337406 | 4.40 |
| HA-A2-SH7 | 77628 | 419439 | 5.40 |
| HA-A2-SH8 | 61804 | 375555 | 6.08 |
| HA-MA1-SH5 | 63887 | 391562 | 6.13 |
| HA-MA1-SH6 | 108308 | 397962 | 3.67 |
| HA-MA2-SH7 | 69148 | 373393 | 5.40 |
| HA-MA2-SH8 | 99257 | 337377 | 3.39 |

Example 21. Determination of Water Retention of Sulfhydryl-Modified HA

50 mg of sulfhydryl-modified HA was added to a 20 mL glass bottle weighed in advance, and dissolved with 5 mL of deionized water to obtain a 1% solution. The mass of the solution m0 was obtained by the mass subtraction method. The glass bottle was placed in a shaker at 37 °C, and weighed at regular intervals to obtain the mass of the solution mt. The water retention of the sulfhydryl-modified HA can be calculated according to the following formula:

$$\text{Water retention percentage (\%)} = mt / m0 \times 100\%.$$

The results of water retention rate are shown in Table 3.

Table 3. Comparison table of water retention rate index

| Sample | Water retention rate | | | | |
|---|---|---|---|---|---|
| | Time point (day) | | | | |
| | 0 | 1 | 2 | 4 | 6 |
| HA-A1-SH1 | 100% | 92.7% | 81.1% | 50.3% | 25.9% |
| HA-A2-SH1 | 100% | 93.4% | 81.7% | 49.1% | 27.6% |
| HA-MA1-SH1 | 100% | 91.6% | 79.1% | 46.9% | 25.4% |
| HA-MA2-SH1 | 100% | 92.6% | 82.3% | 48.5% | 28.1% |
| HA-A1-SH2 | 100% | 89.4% | 76.1% | 39.5% | 16.9% |
| HA-A1-SH3 | 100% | 89.2% | 77.6% | 41.6% | 18.5% |
| HA-A2-SH2 | 100% | 88.6% | 74.4% | 36.7% | 15.6% |
| HA-A2-SH3 | 100% | 86.9% | 77.8% | 33.2% | 13.9% |
| HA-A2-SH4 | 100% | 91.5% | 81.5% | 38.3% | 21.4% |
| HA-A2-SH5 | 100% | 89.4% | 80.5% | 38.8% | 21.1% |
| HA-A2-SH6 | 100% | 87.8% | 76.8% | 47.5% | 24.5% |
| HA-A2-SH7 | 100% | 88.5% | 77.4% | 46.5% | 26.2% |
| HA-A2-SH8 | 100% | 86.8% | 74.9% | 44.4% | 24.8% |
| HA-MA1-SH5 | 100% | 87.7% | 78.3% | 46.5% | 26.6% |
| HA-MA1-SH6 | 100% | 84.7% | 72.1% | 37.4% | 16.0% |
| HA-MA2-SH7 | 100% | 84.3% | 73.5% | 39.4% | 18.4% |
| HA-MA2-SH8 | 100% | 83.9% | 70.5% | 34.8% | 14.8% |

Example 22. Determination of Oxidation Resistance of Sulfhydryl-Modified HA by DPPH Free Radical Capture Method

An absolute ethanol solution of 25 μmol/L 1,1-diphenyl-2-trinitrophenylhydrazine (TNBS) was precisely prepared as a working solution. A certain amount of working solution was diluted with ethanol to obtain a series of standard solutions (0 μmol/L, 5 μmol/L, 10 μmol/L, 15 μmol/L, 20 μmol/L and 25 μmol/L).

The PBS solutions of sulfhydryl-modified HA were precisely prepared to obtain a series of test sample solutions at 0.1 mg/mL.

90 μL of TNBS working solution and 10 μL of test sample solution were mixed well, and stored away from light at room temperature for 30 min. After that, the absorbance of the TNBS standard solution and the test sample mixed solution was determined at 517 nm for plotting a standard curve, and the concentration of the residual DPPH in the test sample was calculated according to the obtained standard curve. The free radical capture capacity (%) of the test sample was calculated according to the following formula:

$$\text{Free radical capture capacity (\%)} = (1 - (\text{Csample} / \text{CDPPH})) \times 100\%.$$

The DPPH standard curve is shown in FIG. 48.

The free radical capture capacity is shown in FIG. 49.

Example 23. Superior Example of Cellular Activity of HA-SH of the Present Disclosure

The cellular activity and biocompatibility of HA-SH of the present disclosure were tested with reference to the criteria set forth in "GBT 16886.5-2017 Biological evaluation of medical devices-Part 5. Tests for in vitro cytotoxicity". Specifically, the following MTT method, also known as MTT colorimetric method, is a method used to detect the survival and growth of cells. The detection principle is that succinate dehydrogenase in mitochondria of living cells can reduce exogenous MTT into water-insoluble purple crystalline Formazan and deposit the Formazan in the cells, while dead cells do not have this function. Dimethyl sulfoxide (DMSO) can dissolve formazan in cells, and its absorbance at 490 nm can be determined by using an enzyme linked immunosorbent assay detector, so that the number of living cells can be indirectly reflected. Within a certain range of cell number, MTT crystals are formed in an amount proportional to the cell number. The specific test procedures and results are as follows:

The sulfhydryl-acrylate-modified hyaluronic acids prepared in Examples 1-4 were prepared as 10 mg/mL PBS solutions with the pH adjusted to 7.35-7.45.

The test samples of the present disclosure were diluted to the following concentrations using cell culture prepared with Dulbecco's Modified Eagle Medium, 10% fetal bovine serum and 1% penicillin/streptomycin solution: 100 μg/mL, 500 μg/mL, 1000 μg/mL, 2500 μg/mL, 5000 μg/mL and 10000 μg/mL. The blank control sample was the solvent. The negative control sample was the cell culture. L929 cells were seeded into a 96-well plate at 8000 cells/well, and cultured overnight until the cells were adhered to the wall. After that, the culture medium was refreshed with 100 μL of sample solution, and the cells were cultured in a cell incubator at 37 °C with 5% CO2 and > 90% humidity for 24 h. The test samples and the control sample were co-cultured with the cells. After 24 h, the cell activity was determined for each test concentration and compared to the cell activity of the negative control sample. The negative control group was 100% active. Changes in cell morphology due to cytotoxic effects of each sample were first observed and recorded after 24 h. The results showed that no change in cell morphology was caused by the different concentrations of the test samples. The medium was removed and 20 μL of 5 mg/mL MTT was added to each well and further incubated for 4 h. Then the MTT solution was discarded, and 100 μL of DMSO solution was added to each well. After the plate was shaken to mix well for 15 min, the absorbance at 490 nm was determined by a microplate reader. The results are shown in FIG. 50. Materials with cell viability below 70% in MTT experiments are considered potentially cytotoxic. The result showed that the cell viability of the sulfhydryl-modified hyaluronic acid disclosed in the present disclosure is more than 70% under different material and concentration test conditions, suggesting that the materials have no significant cytotoxicity and have good biocompatibility.

The examples of the present disclosure have been described above. However, the present disclosure is not limited to the above examples. Any modification, equivalent, improvement and the like made without departing from the spirit and principle of the present disclosure shall fall within the protection scope of the present disclosure.

## Claims

1. A sulfhydryl-modified hyaluronic acid compound, **characterized in that**, part or all of -COOH and/or -OH comprised in a side chain of a repeating unit of the hyaluronic acid are modified to form a side chain with the following terminal group:

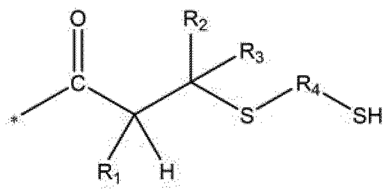

in the above group, * represents a linking site;

$R_1$ is selected from hydrogen, halogen, an aliphatic group, an aromatic group, and the like;
$R_2$ and $R_3$ are the same or different and are independently selected from hydrogen, halogen, an aliphatic group, an aromatic group, and the like; and
$R_4$ is a fragment of a polysulfhydryl compound.

2. The sulfhydryl-modified hyaluronic acid compound according to claim 1, **characterized in that**, the terminal group is linked to the -COOH and/or the -OH through an R group, or linked directly to the -COOH and/or the -OH, to form a side chain of at least one of the following structures:

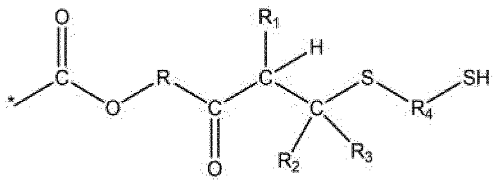

(structure a)

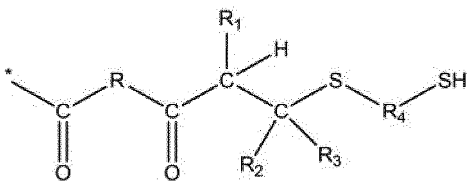

(structure b)

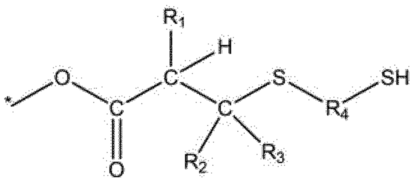

(structure c)

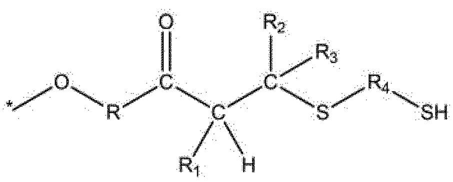

(structure d)

in the structures a, b, c and d, R is selected from

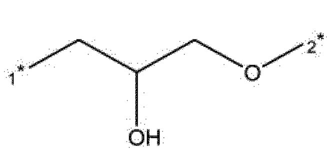
,
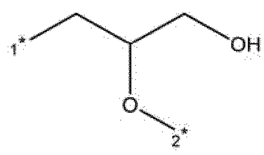
,

hydrocarbylene, arylene, an amide residue, a hydrazide residue, and the like; * represents a linking site; $_1$* represents a linking site to a left-hand group of R; $_2$* represents a linking site to a right-hand group of R; $R_1$, $R_2$, $R_3$ and $R_4$ are defined as above.

**3.** The sulfhydryl-modified hyaluronic acid compound according to claim 1 or 2, **characterized in that**, the sulfhydryl-modified hyaluronic acid comprises at least one of the following structures:

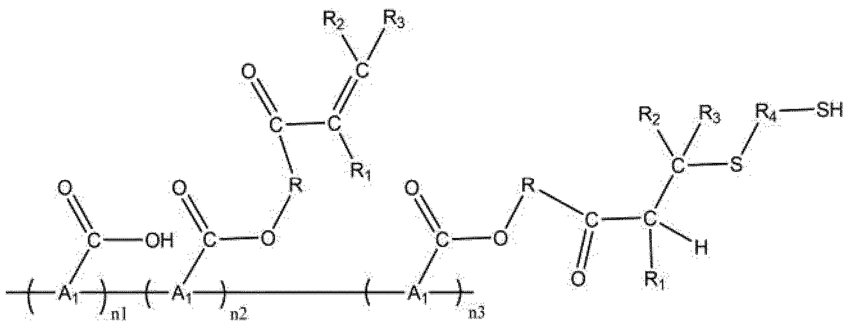

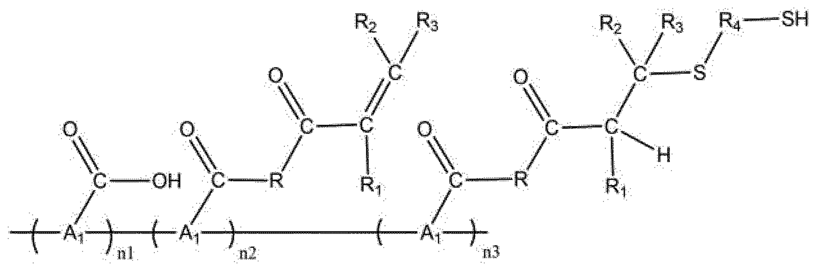

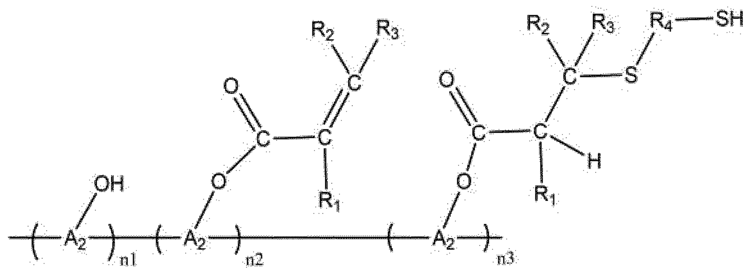

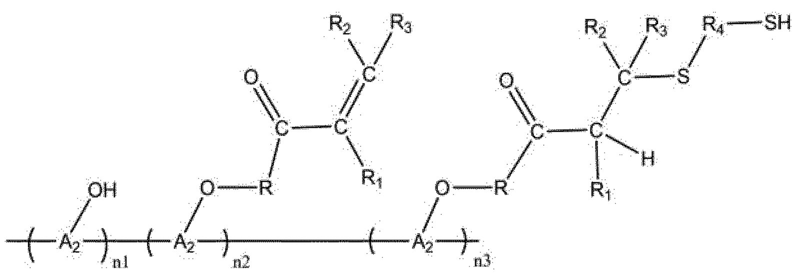

wherein in the above structures, R, $R_1$, $R_2$, $R_3$ and $R_4$ are defined as above; (n2+n3)/(n1+n2+n3) represents a degree of acryloylation; n3/(n1+n2+n3) represents a degree of sulfhydrylation corresponding to the above sulfhydryl content of the sulfhydryl-modified polymer compound as determined by the Ellman method; the n1 can be 0, and if it is 0, the degree of acryloylation is not limited, and n3/(n2+n3) alone represents the degree of sulfhydrylation corresponding to the above sulfhydryl content of the sulfhydryl-modified polymer compound as determined by the Ellman method; the n2 can be 0, and if it is 0, n3/(n1+n3) represents both the degree of acryloylation and the degree of sulfhydrylation corresponding to the above sulfhydryl content of the sulfhydryl-modified polymer compound as determined by the Ellman method;

the $A_1$ is:

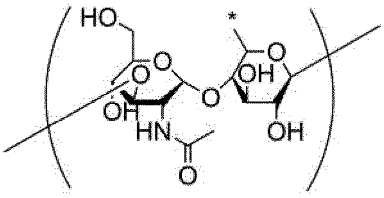

the $A_2$ is one of the following structures:

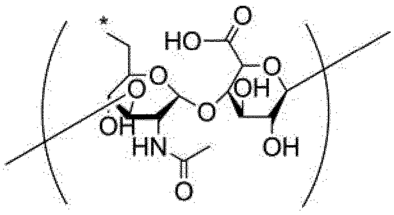

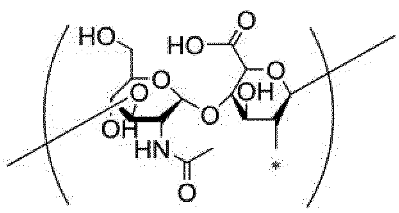

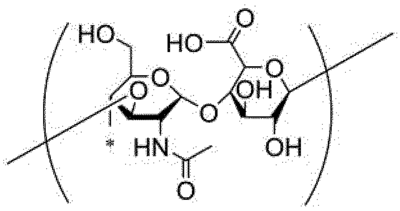

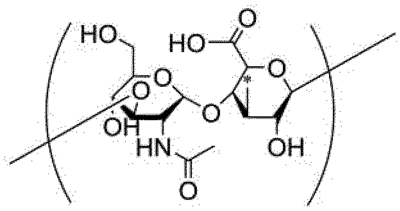

* in the structure of $A_1$ and $A_2$ represents a linking site to the COOH or the OH.

**4.** The sulfhydryl-modified hyaluronic acid compound according to any one of claims 1 to 3, **characterized in that**, $R_4$ is a fragment of a polysulfhydryl compound, that is, an $-S-R_4-SH$ fragment is introduced from polysulfhydryl compounds including but not limited to the following:

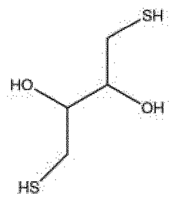

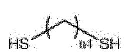

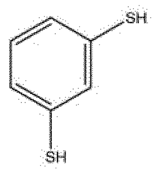

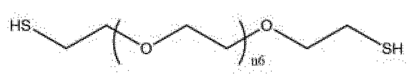

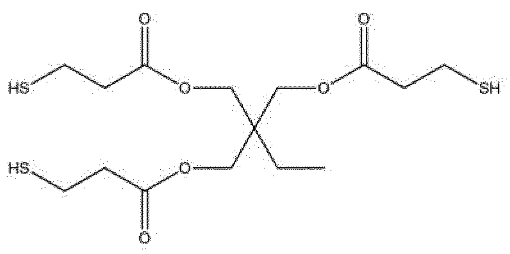

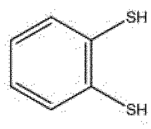

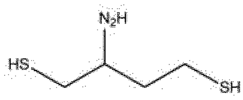

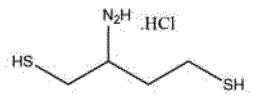

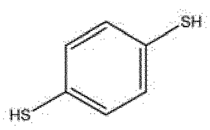

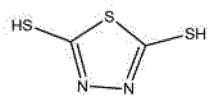

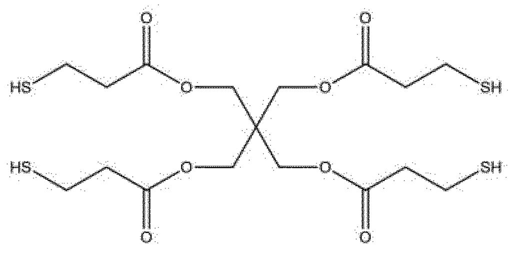

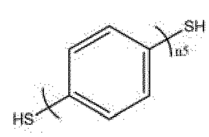

4-arm-PEG-SH

6-arm-PEG-SH

8-arm-PEG-SH

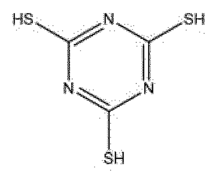

wherein n4 is an integer from 2 to 30, such as 2, 3, 4, 5 or 6 etc.; n5 is an integer from 1 to 30, such as 1, 2, 3, 4 or 5 etc.; n6 is an integer from 1 to 30, such as 1, 2, 3, 4 or 5 etc.;

4-arm-PEG-SH represents a PEG polymer containing four sulfhydryl groups; 6-arm-PEG-SH represents a PEG polymer containing six sulfhydryl groups; 8-arm-PEG-SH represents a PEG polymer containing eight sulfhydryl groups; the PEG is an abbreviation for polyethylene glycol.

**5.** The sulfhydryl-modified hyaluronic acid compound according to any of claims 1-4, **characterized in that**, the sulfhydryl-modified hyaluronic acid has at least one of the following structures:

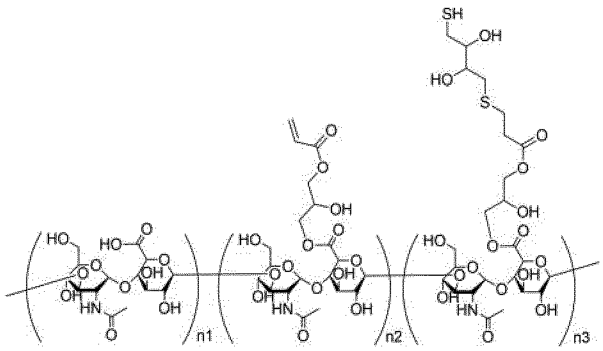

recorded as HA-A1-SH1

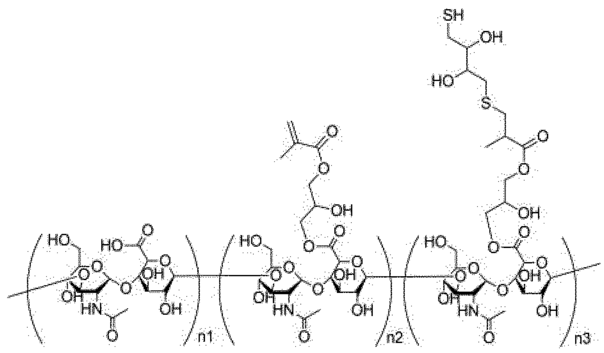

recorded as HA-MA1-SH1

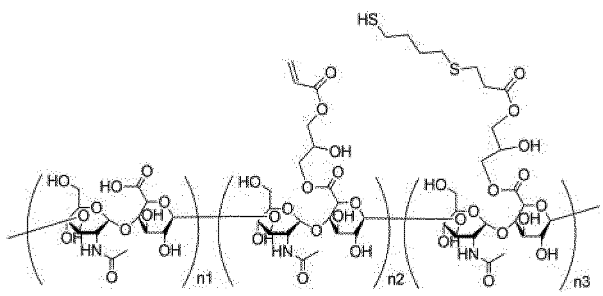

recorded as HA-A1-SH2

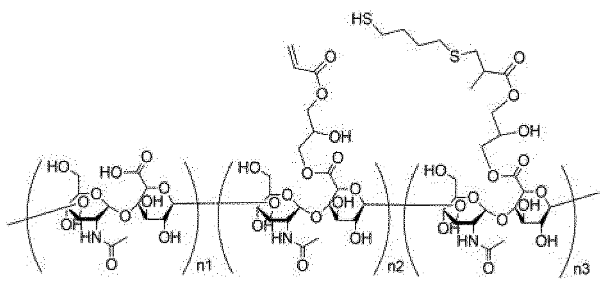

recorded as HA-MA1-SH2

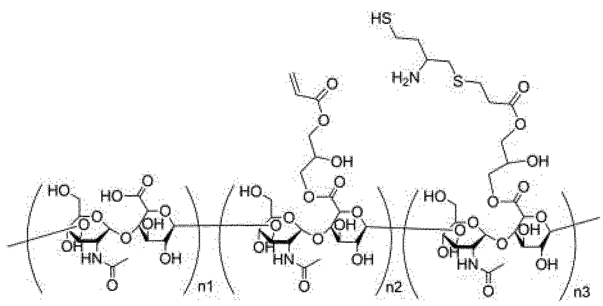

recorded as HA-A1-SH3

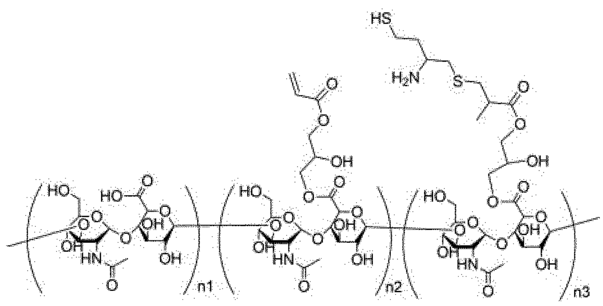

recorded as HA-MA1-SH3

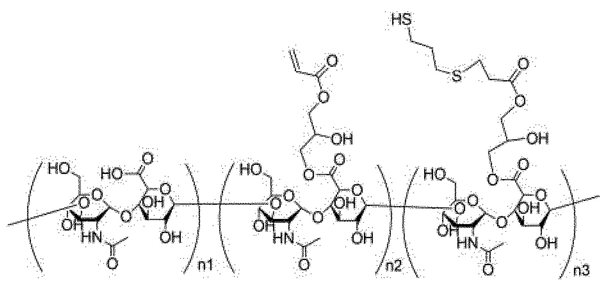

recorded as HA-A1-SH4

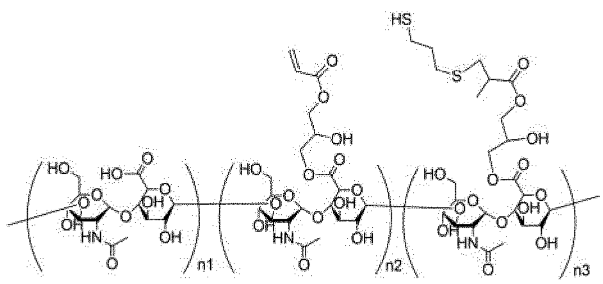

recorded as HA-MA1-SH4

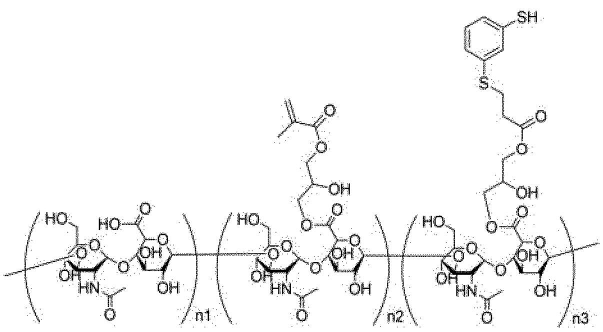

recorded as HA-A1-SH5

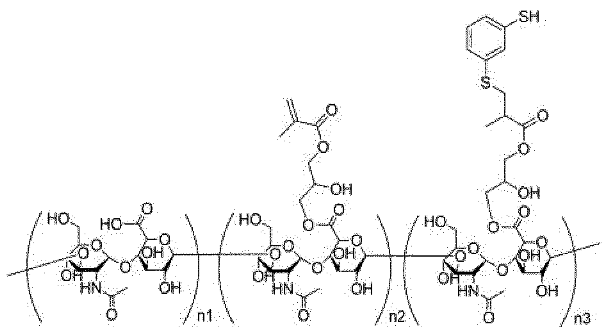

recorded as HA-MA1-SH5

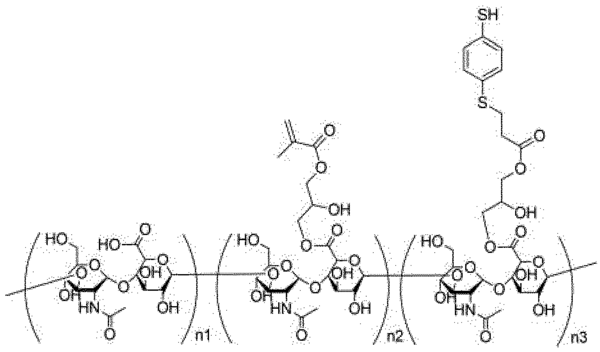

recorded as HA-A1-SH6

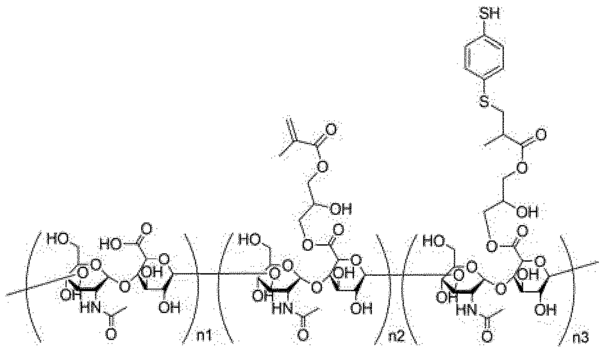

recorded as HA-MA1-SH6

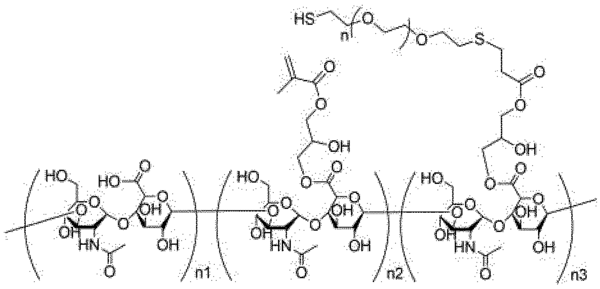

recorded as HA-A1-SH7

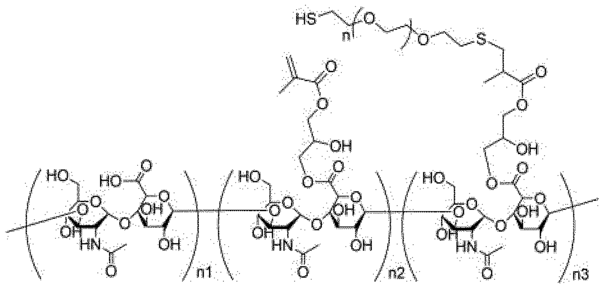

recorded as HA-MA1-SH7

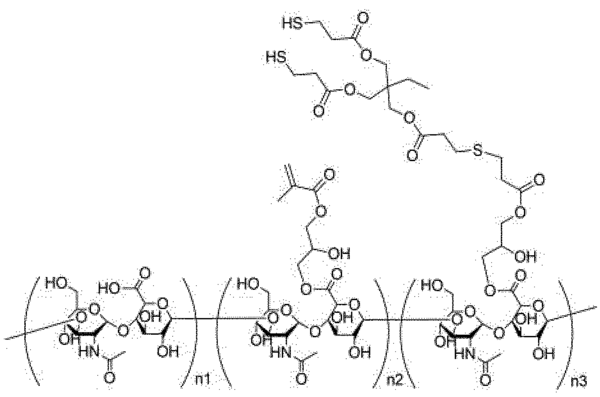

recorded as HA-A1-SH8

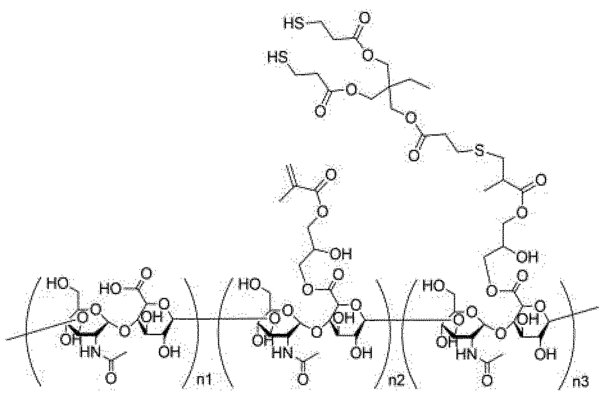

recorded as HA-MA1-SH8

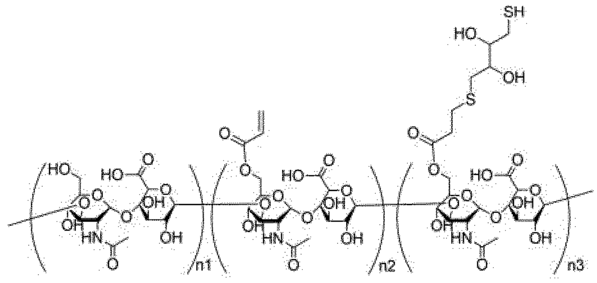

recorded as HA-A2-SH1

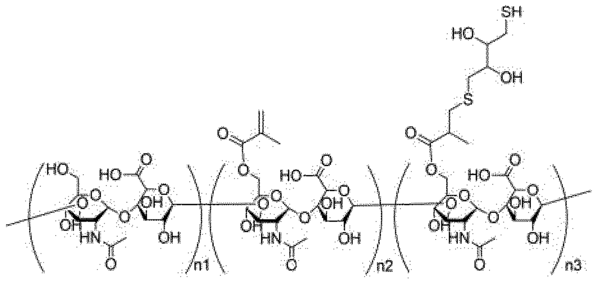

recorded as HA-MA2-SH1

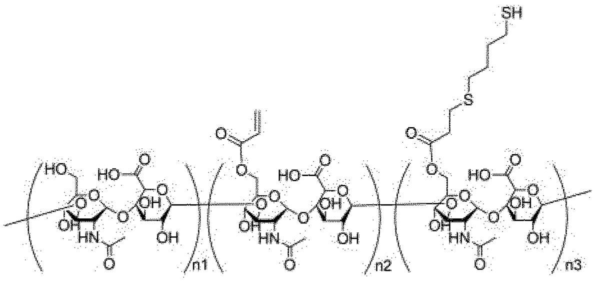

recorded as HA-A2-SH2

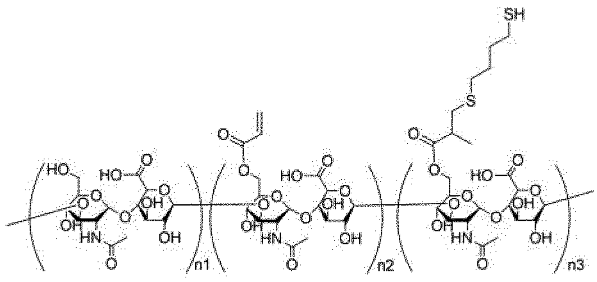

recorded as HA-MA2-SH2

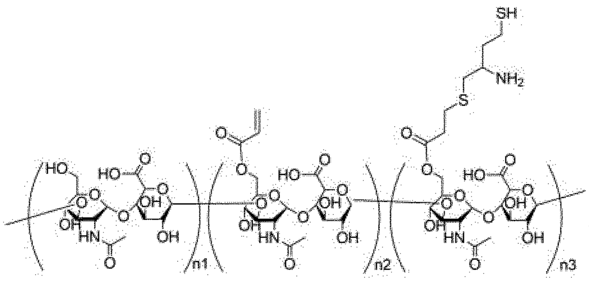

recorded as HA-A2-SH3

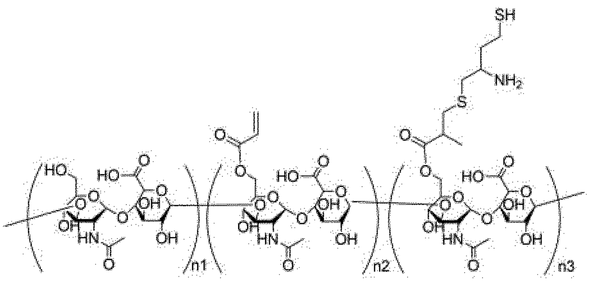

recorded as HA-MA2-SH3

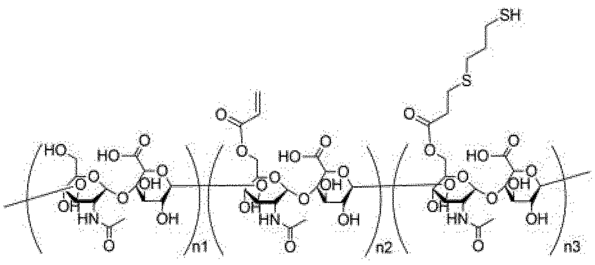

recorded as HA-A2-SH4

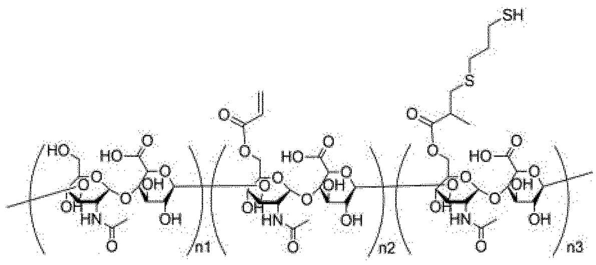

recorded as HA-MA2-SH4

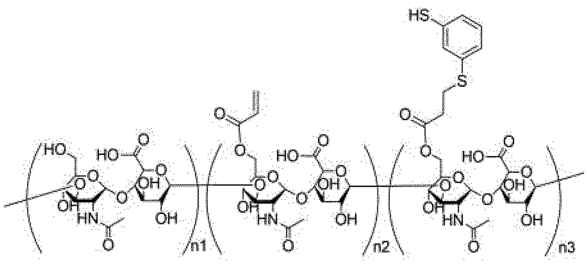

recorded as HA-A2-SH5

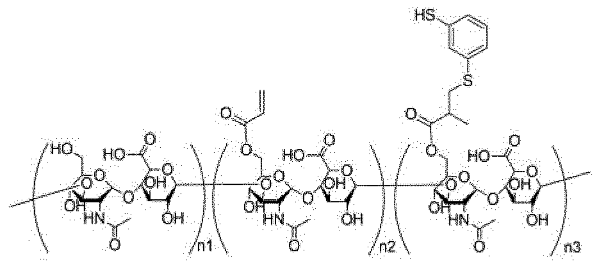

recorded as HA-MA2-SH5

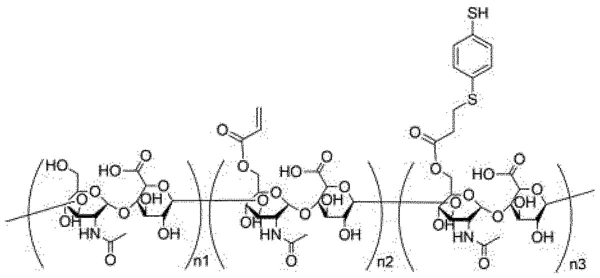

recorded as HA-A2-SH6

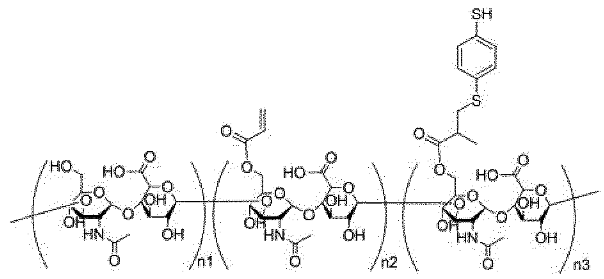

recorded as HA-MA2-SH6

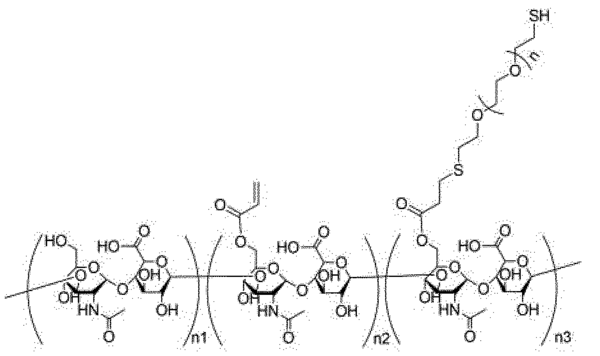

recorded as HA-A2-SH7

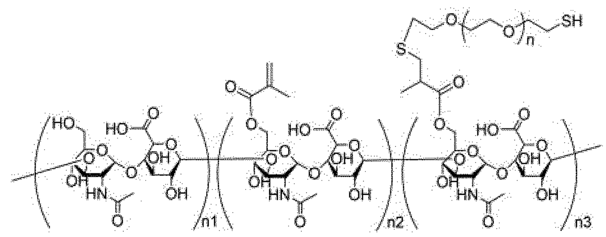

recorded as HA-MA2-SH7

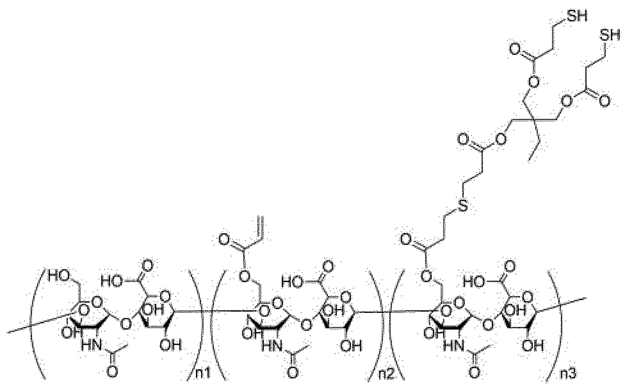

recorded as HA-A2-SH8

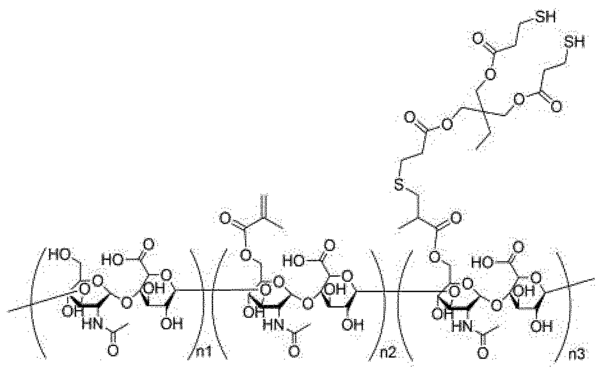

recorded as HA-MA2-SH8

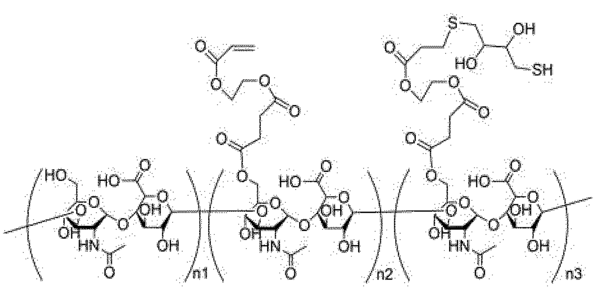

recorded as HA-A3-SH1

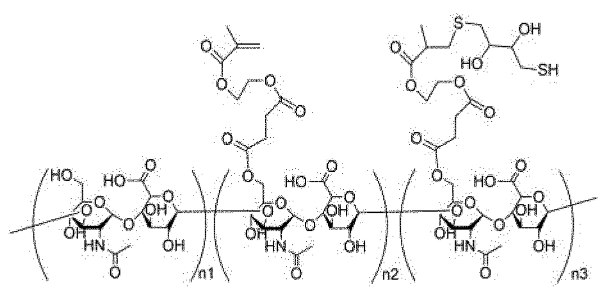

recorded as HA-MA3-SH1

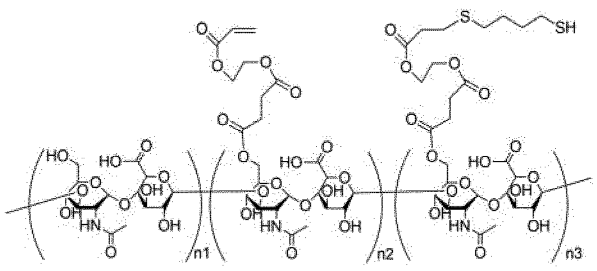

recorded as HA-A3-SH2

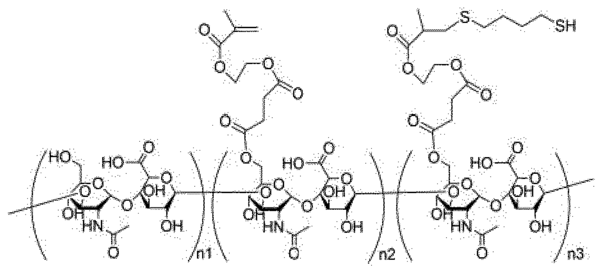

recorded as HA-MA3-SH2

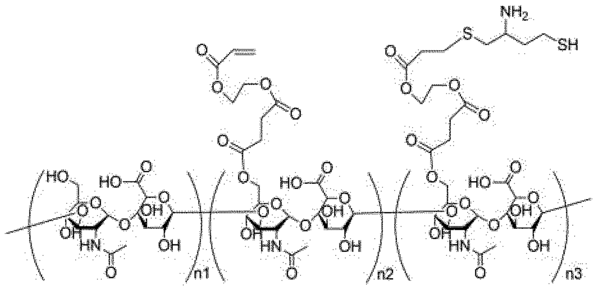

recorded as HA-A3-SH3

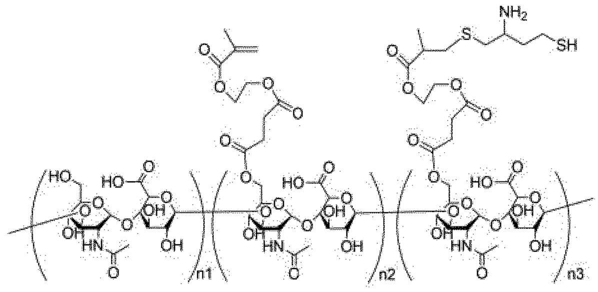

recorded as HA-MA3-SH3

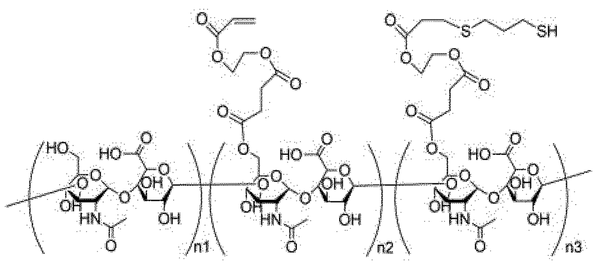

recorded as HA-A3-SH4

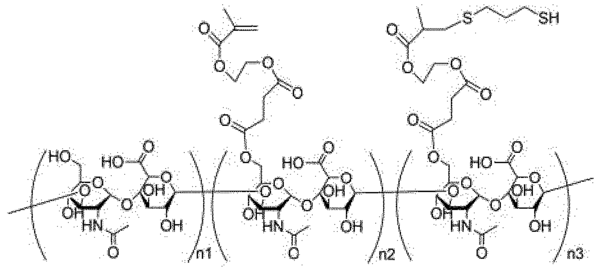

recorded as HA-MA3-SH4

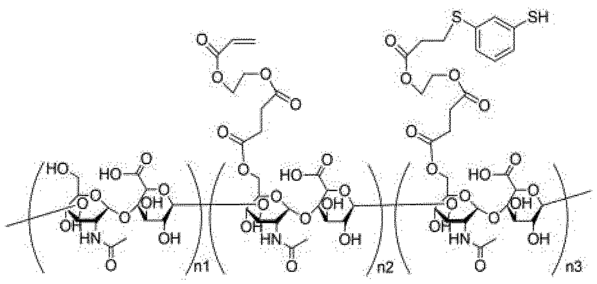

recorded as HA-A3-SH5

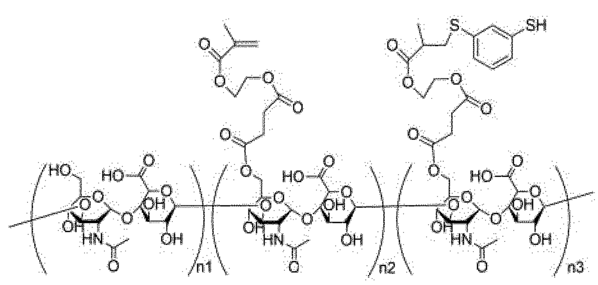

recorded as HA-MA3-SH5

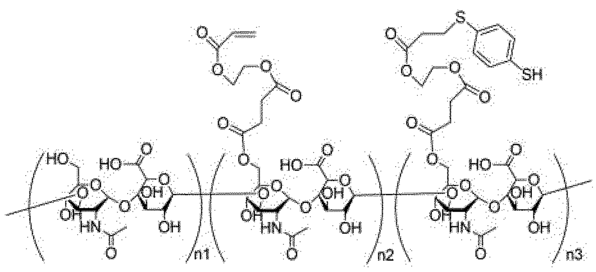

recorded as HA-A3-SH6

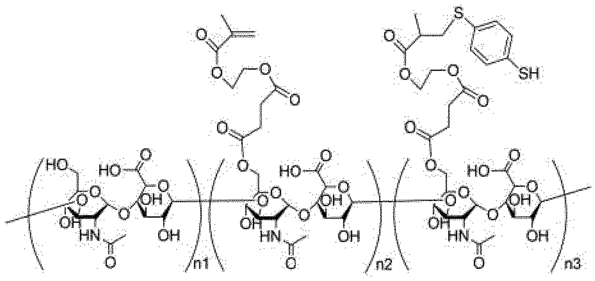

recorded as HA-MA3-SH6

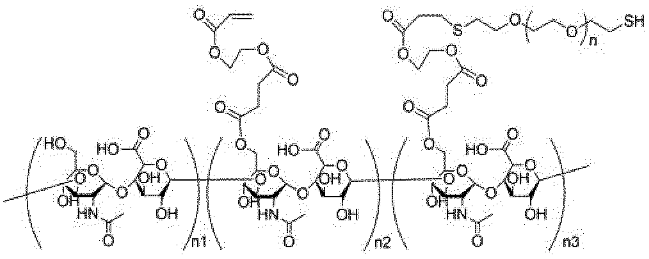

recorded as HA-A3-SH7

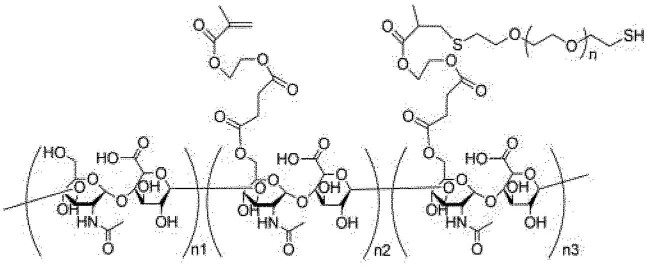

recorded as HA-MA3-SH7

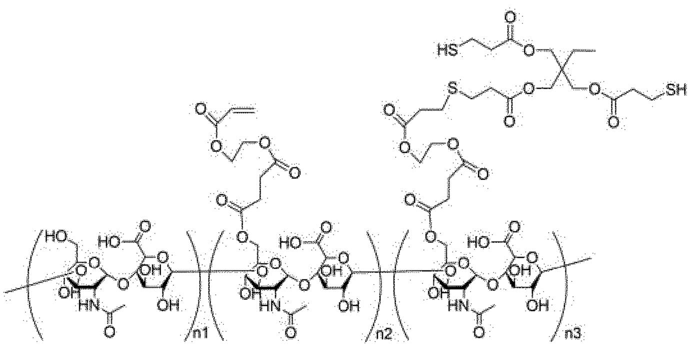

recorded as HA-A3-SH8

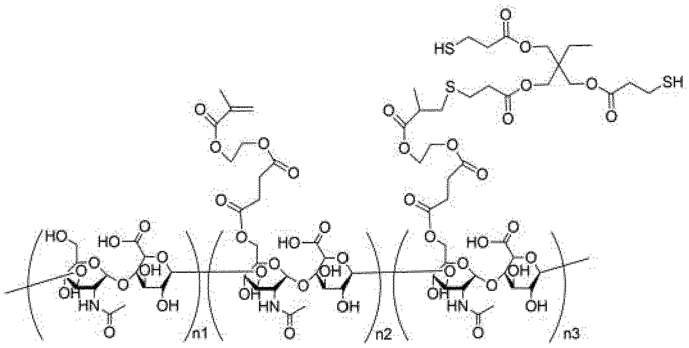

recorded as HA-MA3-SH8

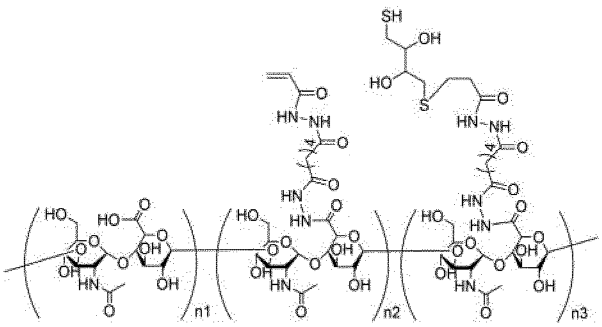

recorded as HA-A4-SH1

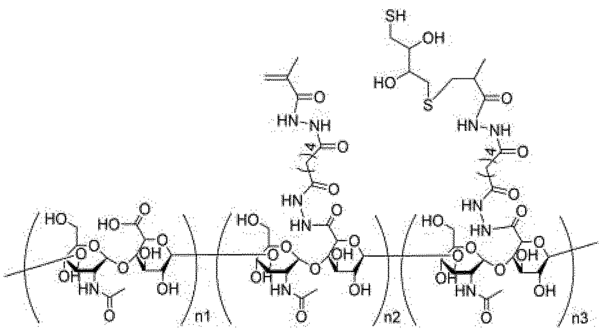

recorded as HA-MA4-SH1

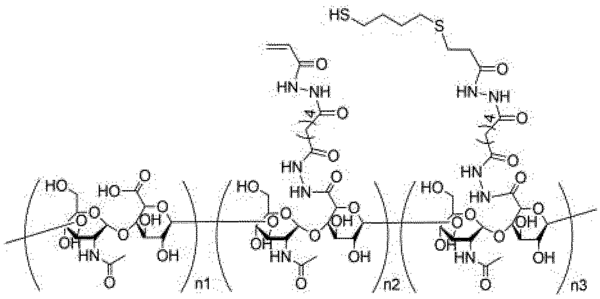

recorded as HA-A4-SH2

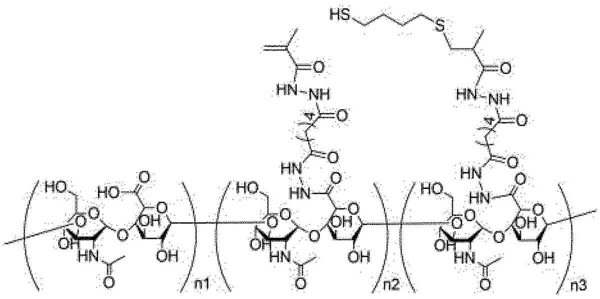

recorded as HA-MA4-SH2

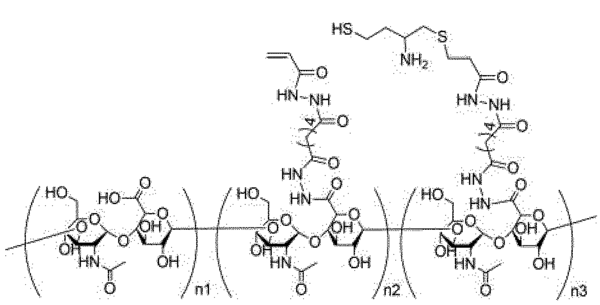

recorded as HA-A4-SH3

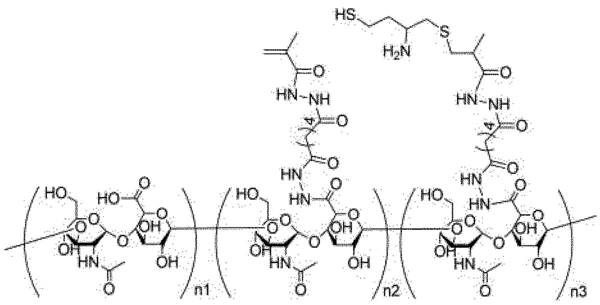

recorded as HA-MA4-SH3

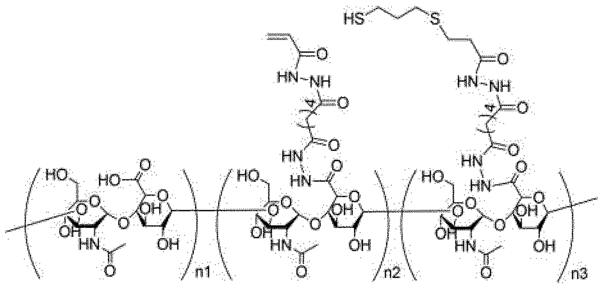

recorded as HA-A4-SH4

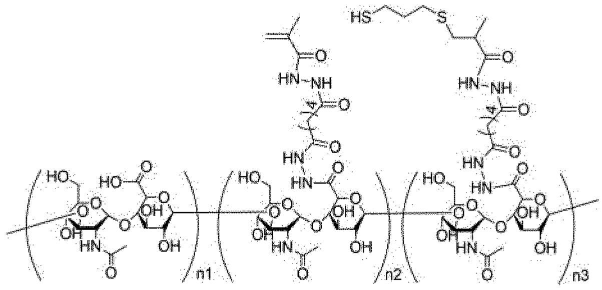

recorded as HA-MA4-SH4

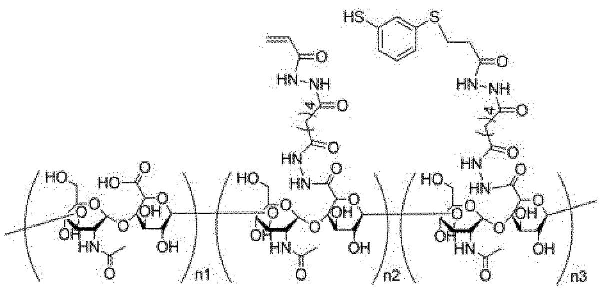

recorded as HA-A4-SH5

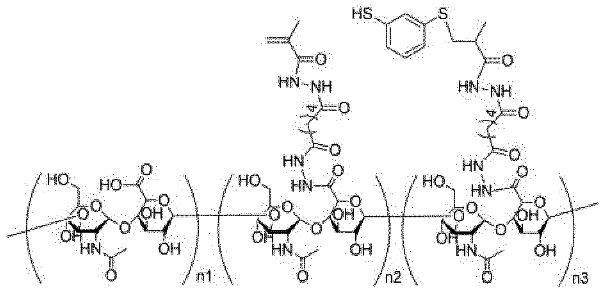

recorded as HA-MA4-SH5

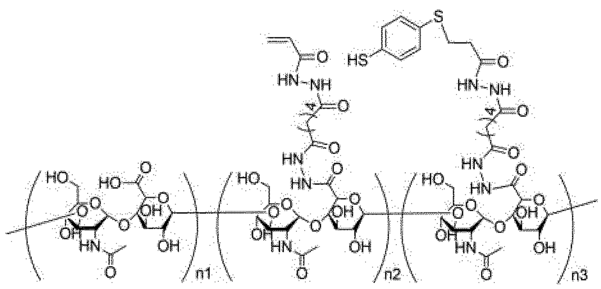

recorded as HA-A4-SH6

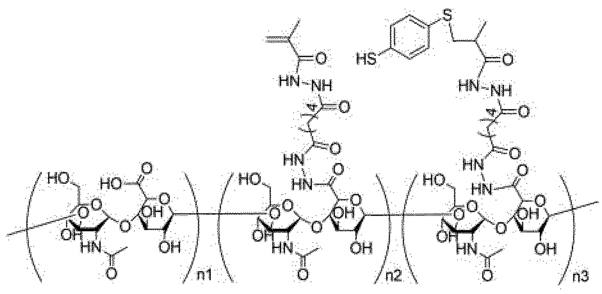

recorded as HA-MA4-SH6

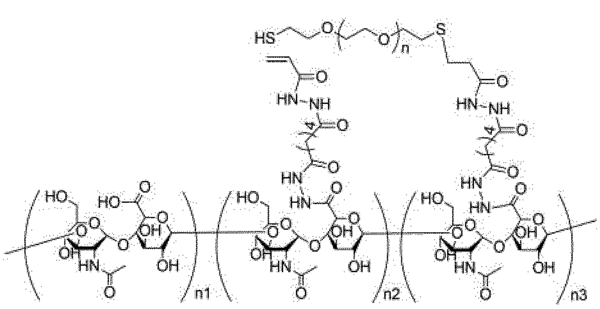

recorded as HA-A4-SH7

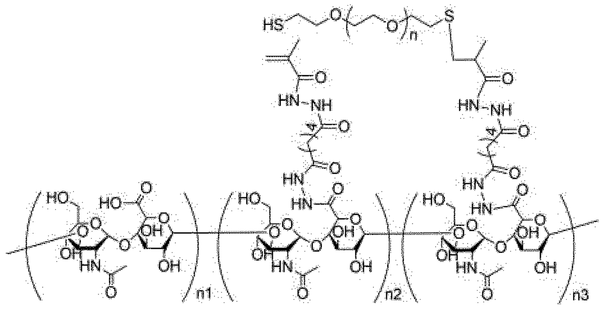

recorded as HA-MA4-SH7

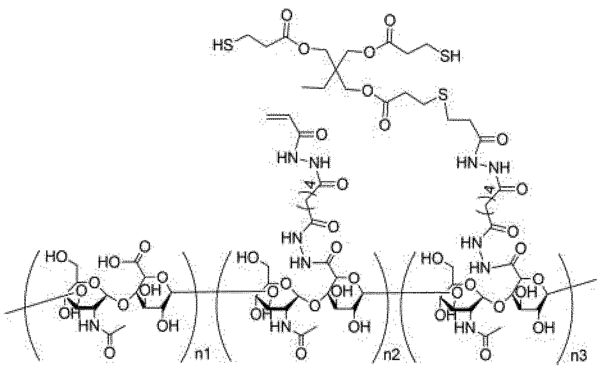

recorded as HA-A4-SH8

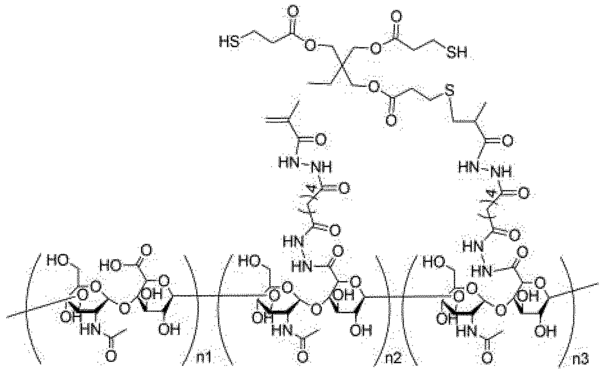

recorded as HA-MA4-SH8

in the above structural formulas, $n_1$, $n_2$ and $n_3$ are defined as above.

**6.** A preparation method for the sulfhydryl-modified hyaluronic acid according to any one of claims 1 to 5, **characterized in that**, the method comprises the following steps:

1) acryloylating the hyaluronic acid, namely linking at least one from the -COOH and the -OH comprised in the side chain of the repeating unit of the hyaluronic acid, directly or indirectly, to the following group:

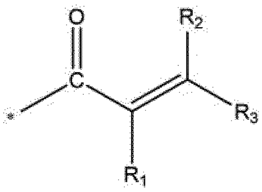

$R_1$ is selected from hydrogen, halogen, an aliphatic group, an aromatic group, and the like; $R_2$ and $R_3$ are the same or different and independently from each other, and are selected from hydrogen, halogen, an aliphatic group, an aromatic group, and the like; * represents a linking site;
2) reacting the acryloylated hyaluronic acid with a polysulfhydryl compound $HS-R_4-SH$ to obtain the sulfhydryl-modified hyaluronic acid, wherein $R_4$ is defined as above.

**7.** The preparation method according to claim 6, **characterized in that**, the step 1) is the step of acryloylating the hyaluronic acid, namely linking at least one from the -COOH and the -OH comprised in the side chain of the repeating unit of the hyaluronic acid, directly or via an R group, to the terminal group to form the side chain of at least one of the following structures:

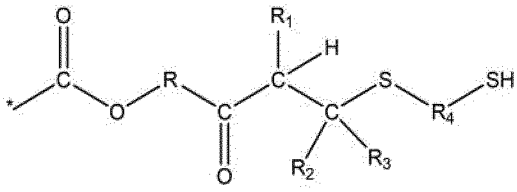

(structure a)

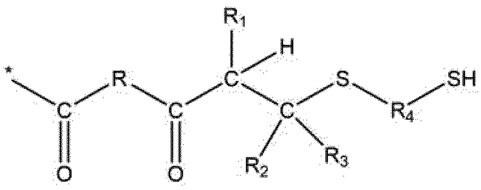

(structure b)

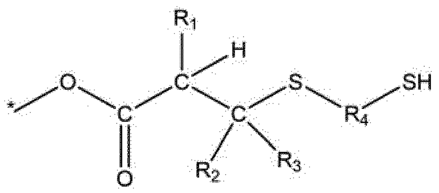

(structure c)

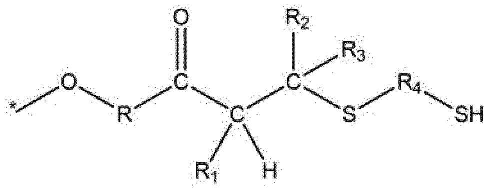

(structure d)

in the structures a, b, c and d, R, $R_1$, $R_2$, $R_3$ and $R_4$ are defined as above, and * represents a linking site.

8. The preparation method according to claim 7, **characterized in that**, in step 1), the acryloylating step can be performed by reacting a to-be-modified hyaluronic acid with an acrylate compound, or by reacting the to-be-modified hyaluronic acid with an acryloyl chloride compound or an acrylic anhydride compound.

9. The preparation method according to any one of claims 6 to 8, **characterized in that**, in step 2), the reaction with the polysulfhydryl compound HS-$R_4$-SH is performed in a solvent;

   preferably, in step 2), the reaction with the polysulfhydryl compound HS-$R_4$-SH is performed under low or high temperature;
   preferably, in step 2), the pH range for the reaction with the polysulfhydryl compound HS-$R_4$-SH is -1 to 15.

10. Use of the sulfhydryl-modified hyaluronic acid according to any one of claims 1 to 5, **characterized in that** the sulfhydryl-modified hyaluronic acid is used in the fields of antioxidation health products, biopharmaceuticals, medical cosmetology and cosmetics and the like.

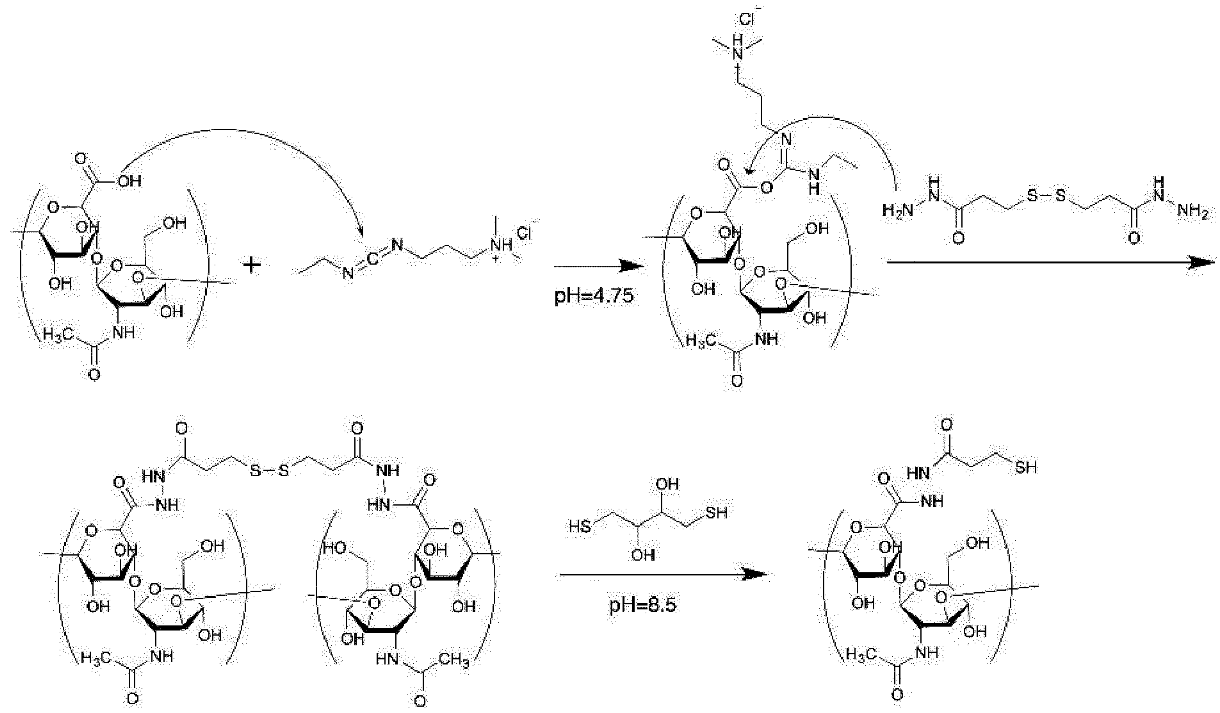


FIG. 1

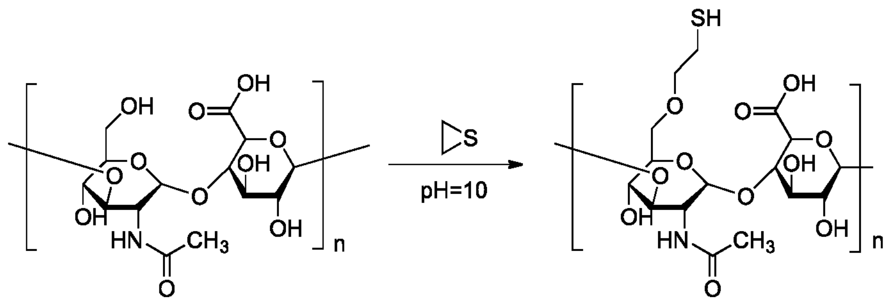


FIG. 2

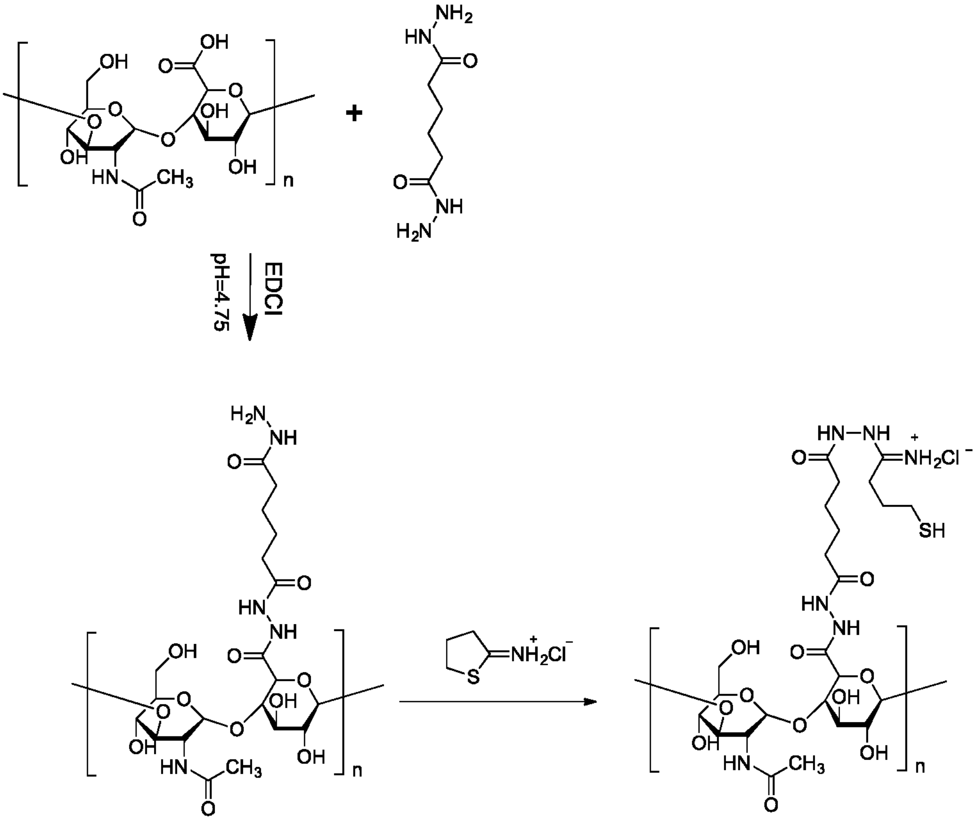


FIG. 3

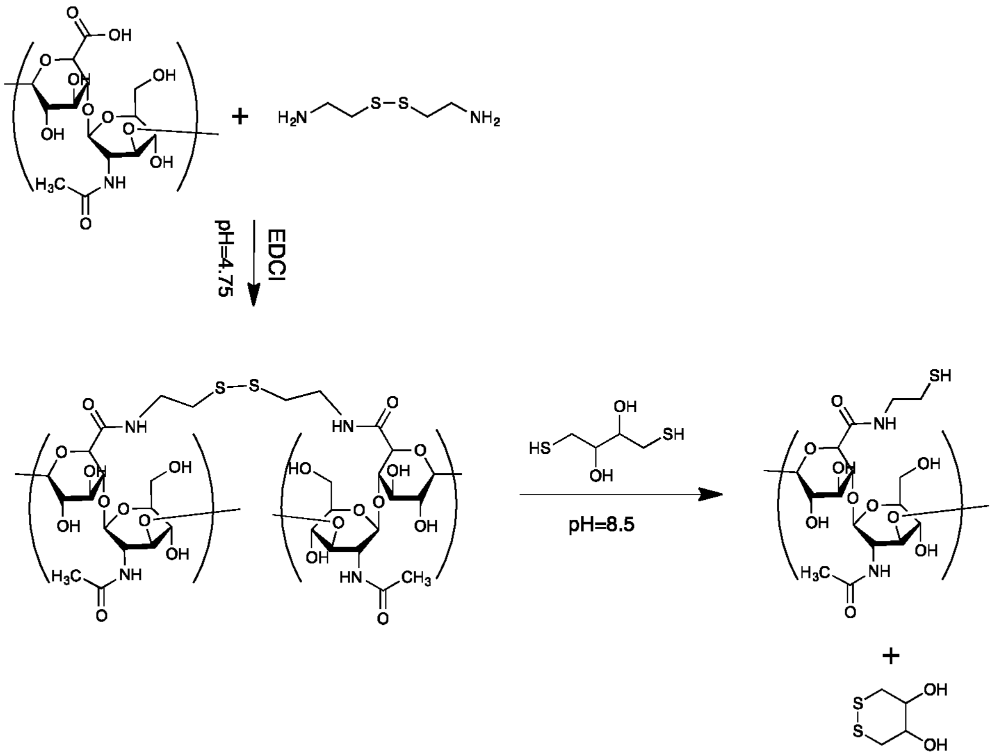


FIG. 4

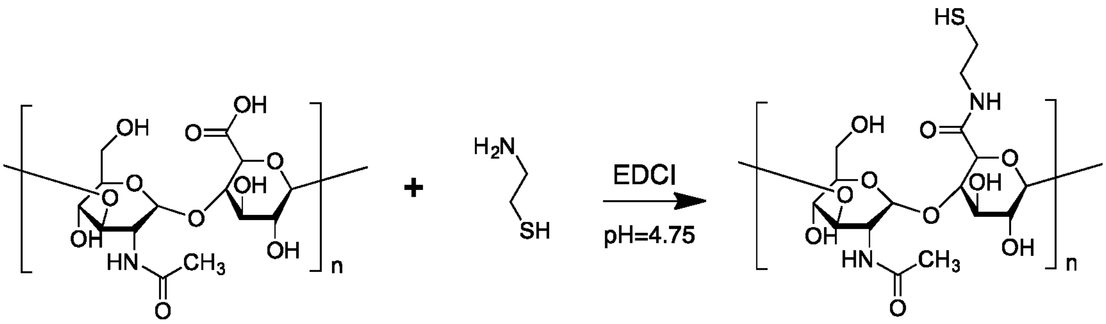


FIG. 5

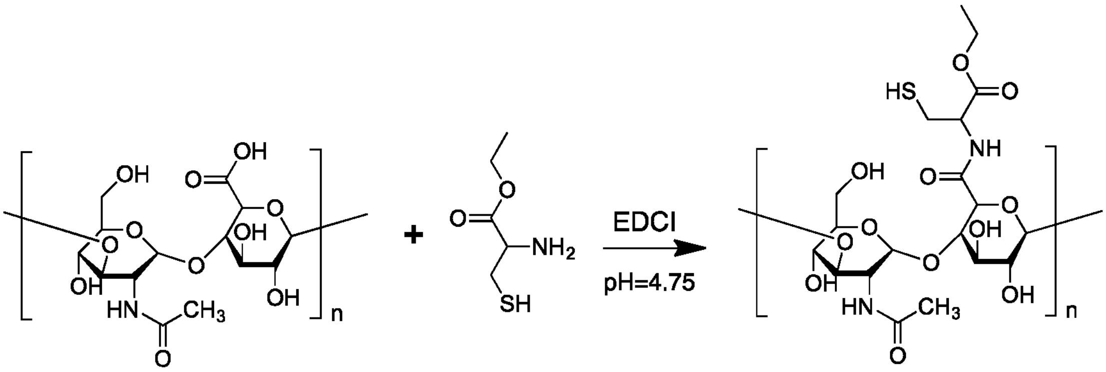


FIG. 6

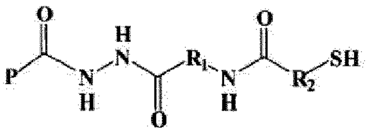

(I)

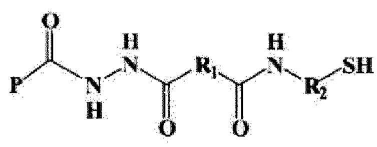

(II)

FIG. 7

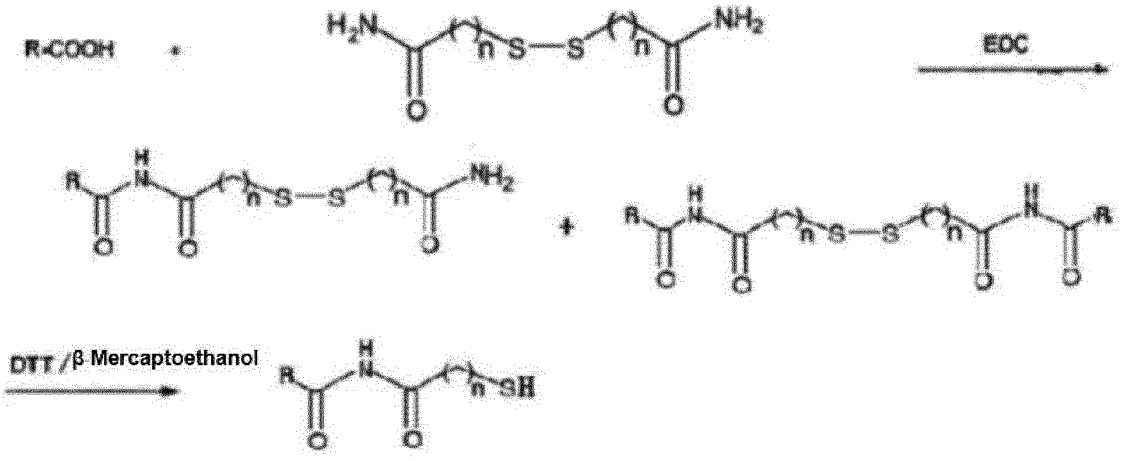


R= HA n=1, 2, 3

FIG. 8

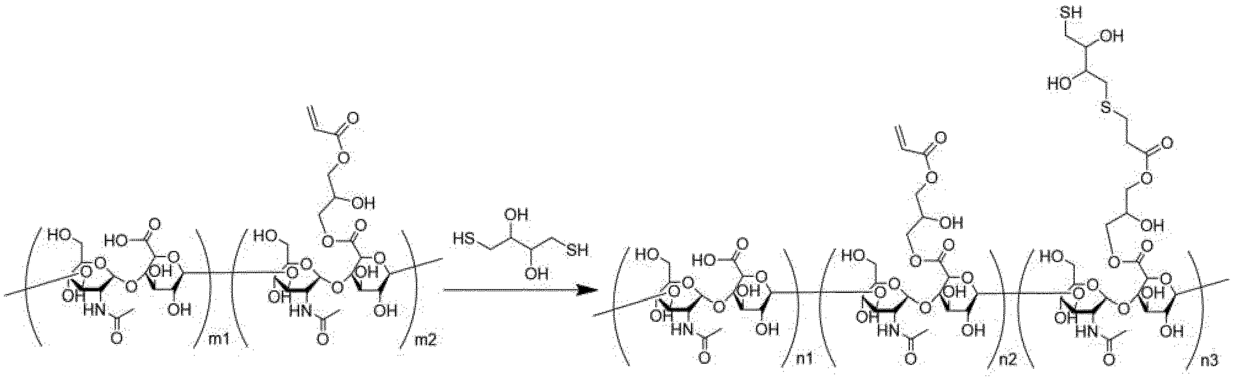

HA-A1

HA-A1-SH1

FIG. 9

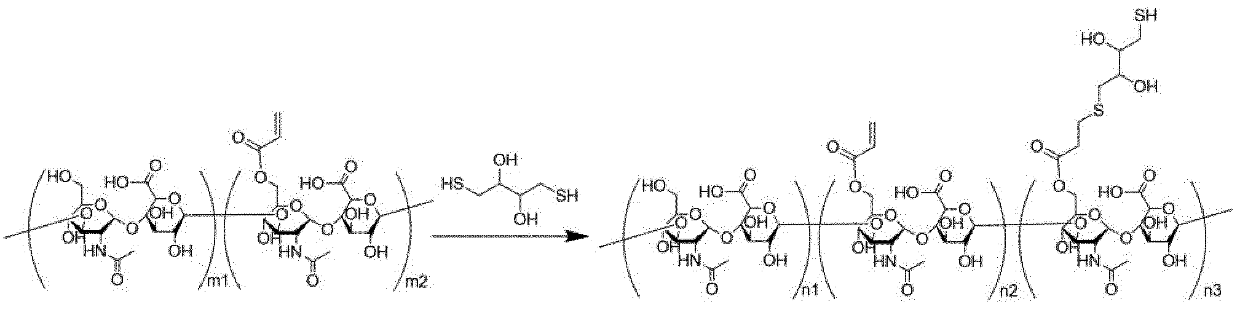

HA-A2

HA-A2-SH1

FIG. 10

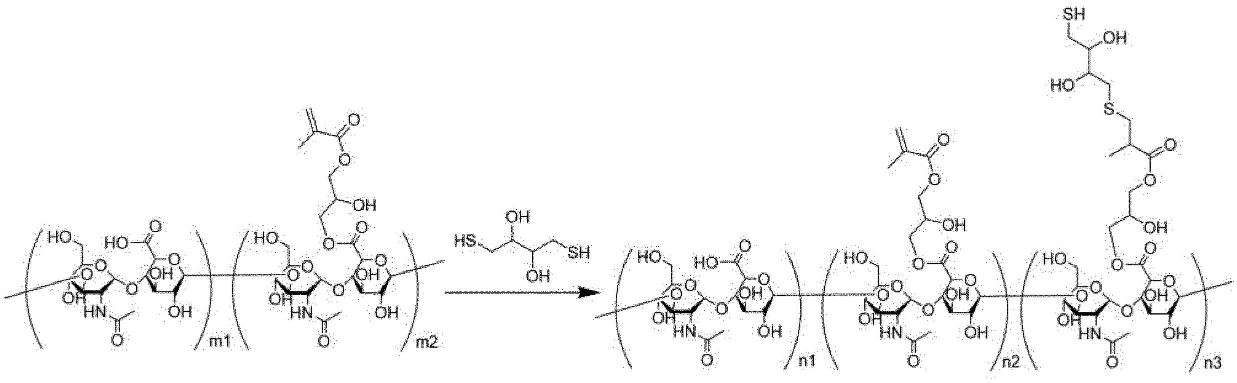

HA-MA1

HA-MA1-SH1

FIG. 11

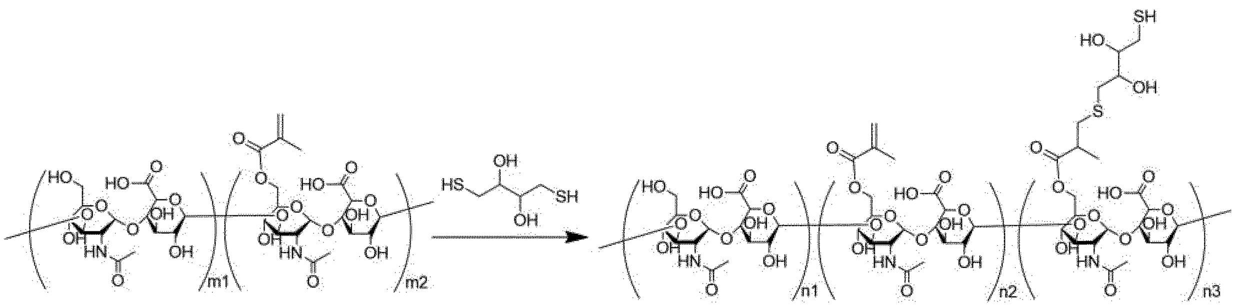

HA-MA2

HA-MA2-SH1

FIG. 12

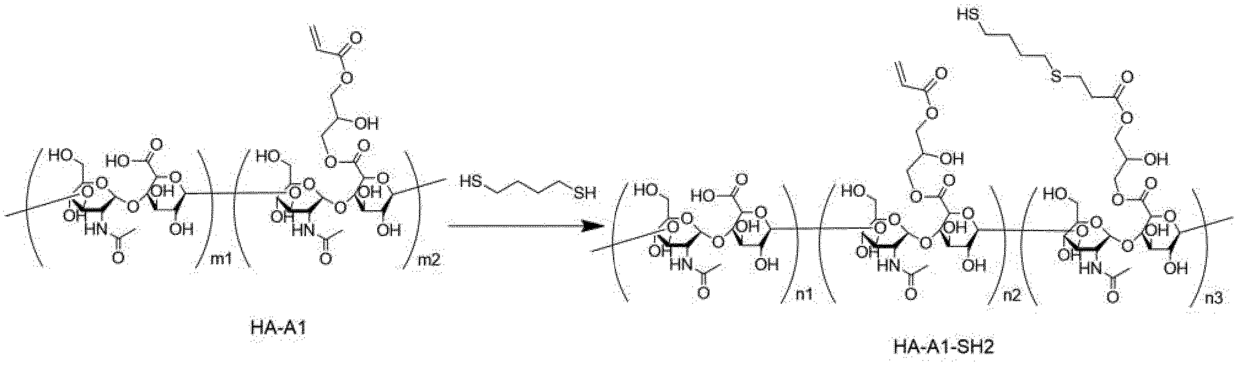

HA-A1

HA-A1-SH2

FIG. 13

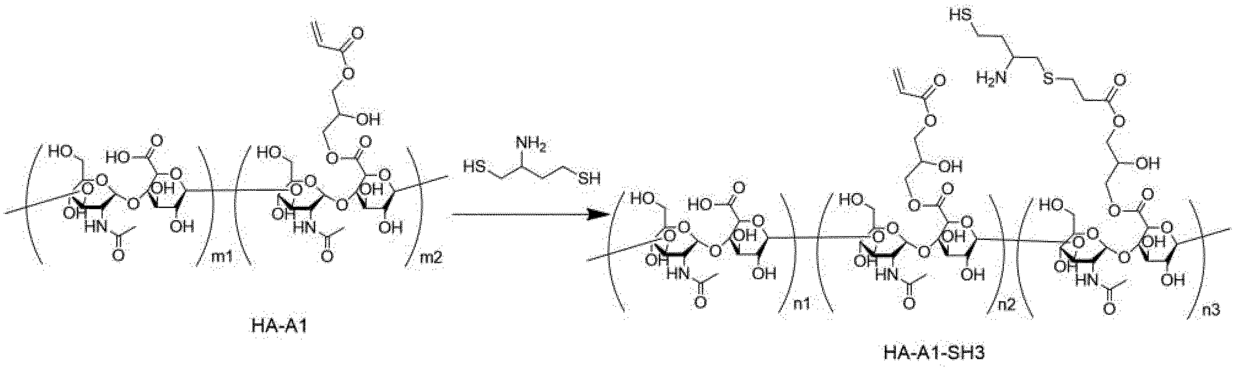

HA-A1

HA-A1-SH3

FIG. 14

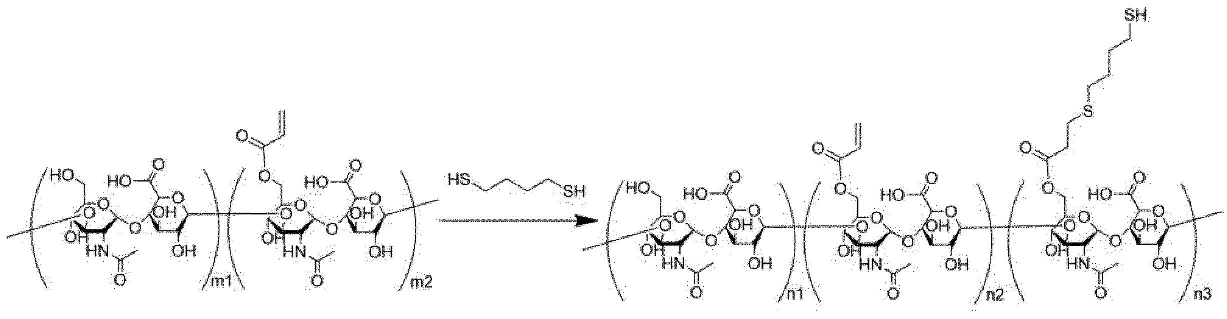

HA-A2

HA-A2-SH2

FIG. 15

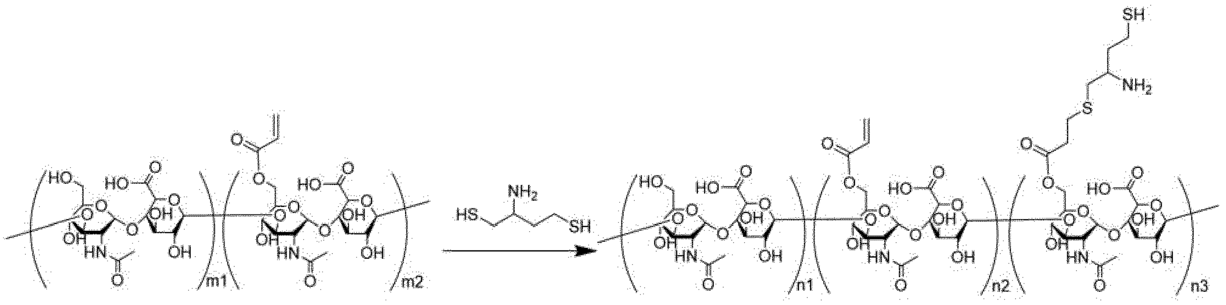

HA-A2

HA-A2-SH3

FIG. 16

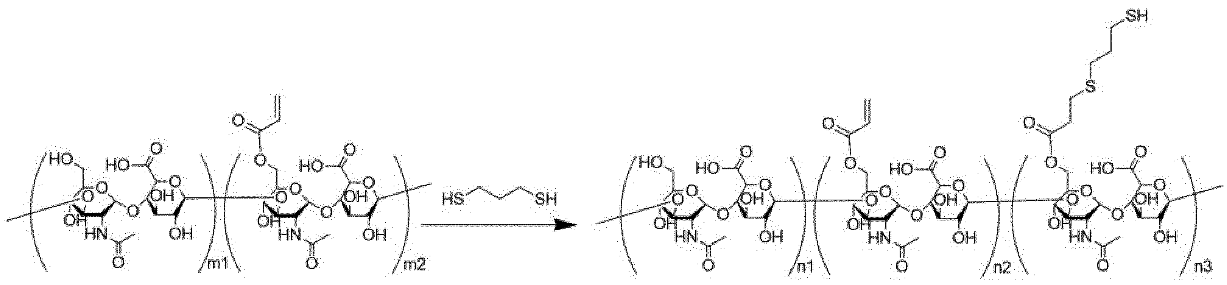

HA-A2

HA-A2-SH4

FIG. 17

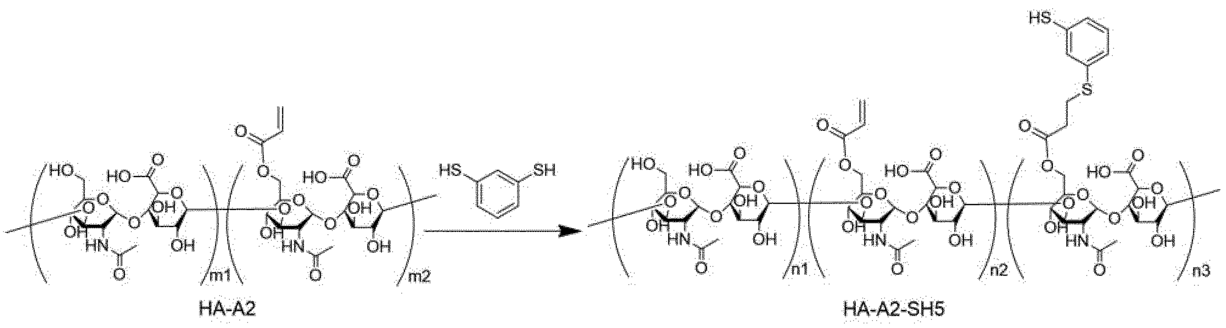

HA-A2

HA-A2-SH5

FIG. 18

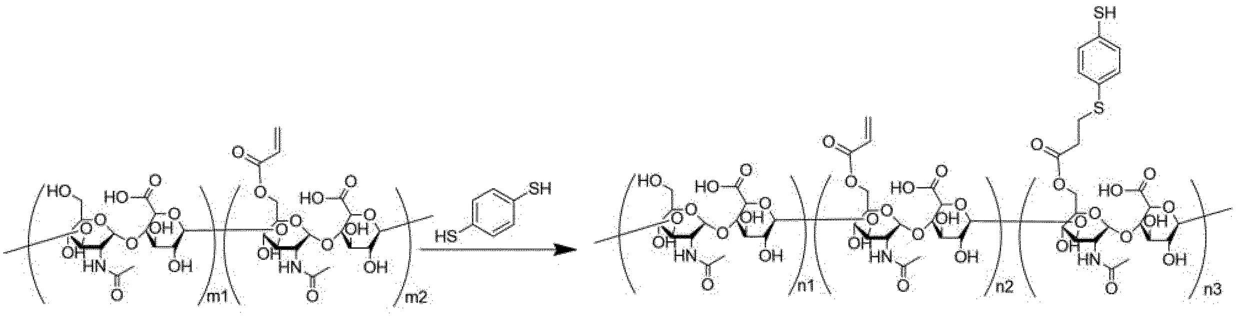

HA-A2 HA-A2-SH6

FIG. 19

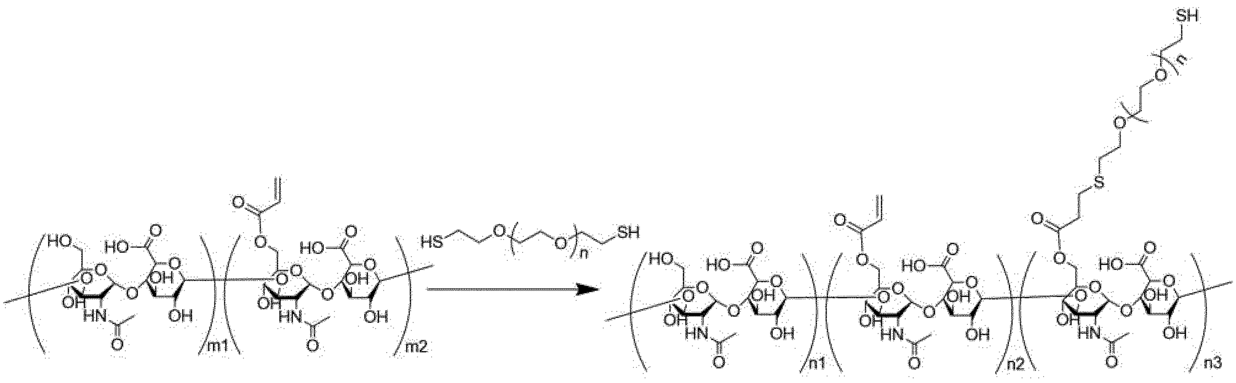

HA-A2 HA-A2-SH7

FIG. 20

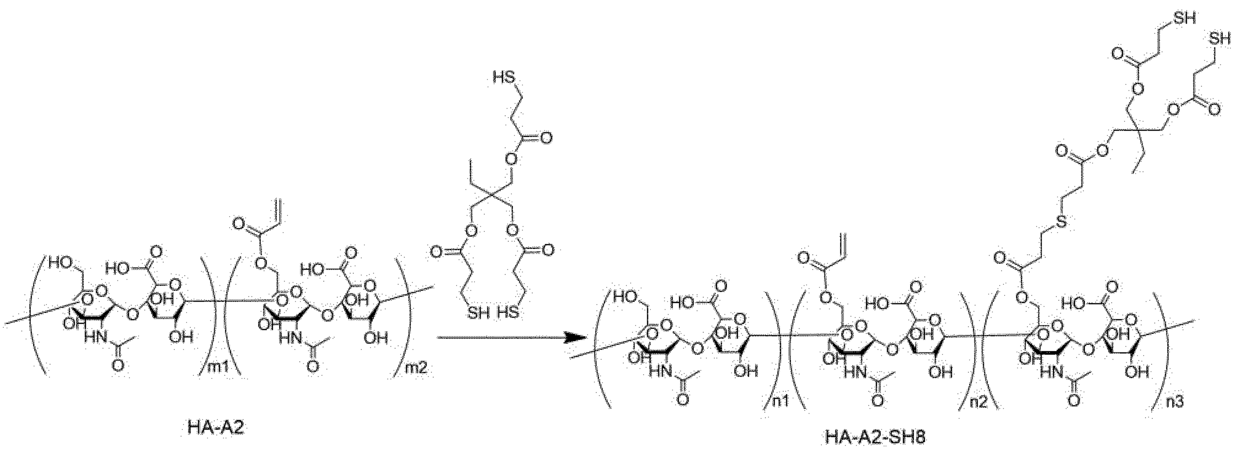

HA-A2 HA-A2-SH8

FIG. 21

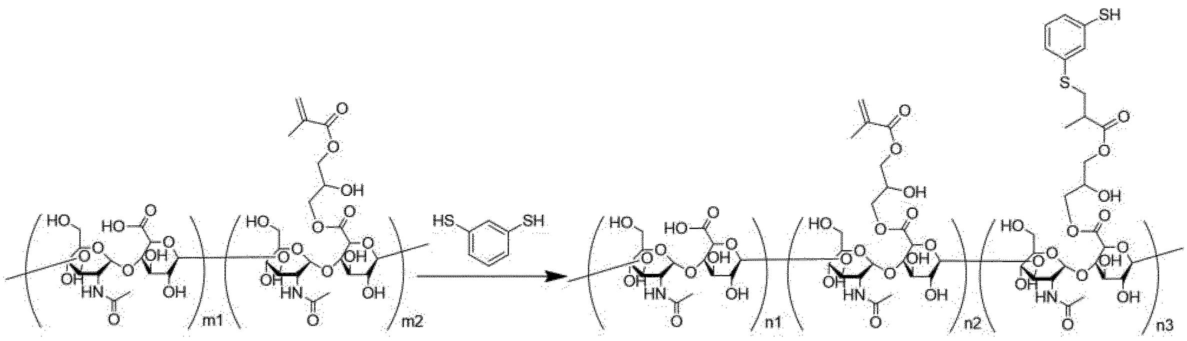

HA-MA1 HA-MA1-SH5

FIG. 22

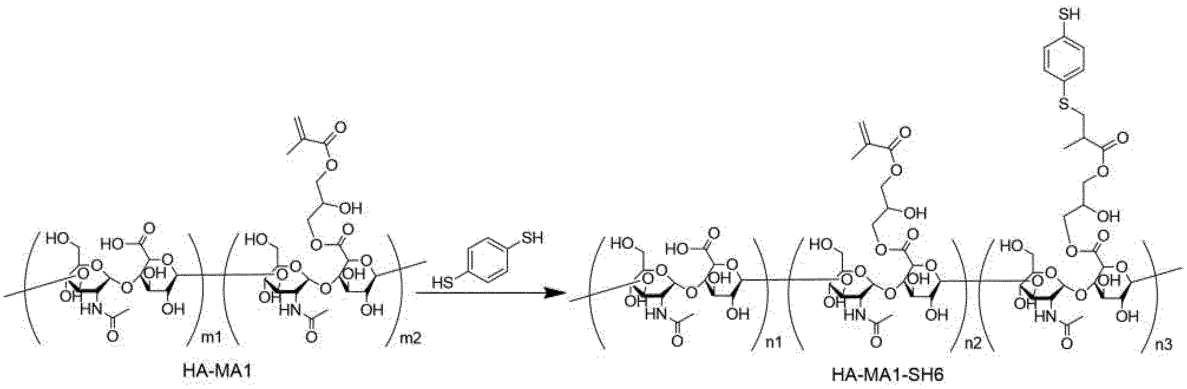

HA-MA1 HA-MA1-SH6

FIG. 23

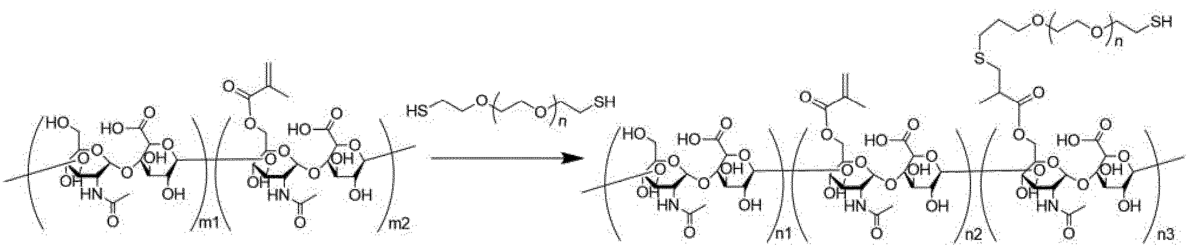

HA-MA2 HA-MA2-SH7

FIG. 24

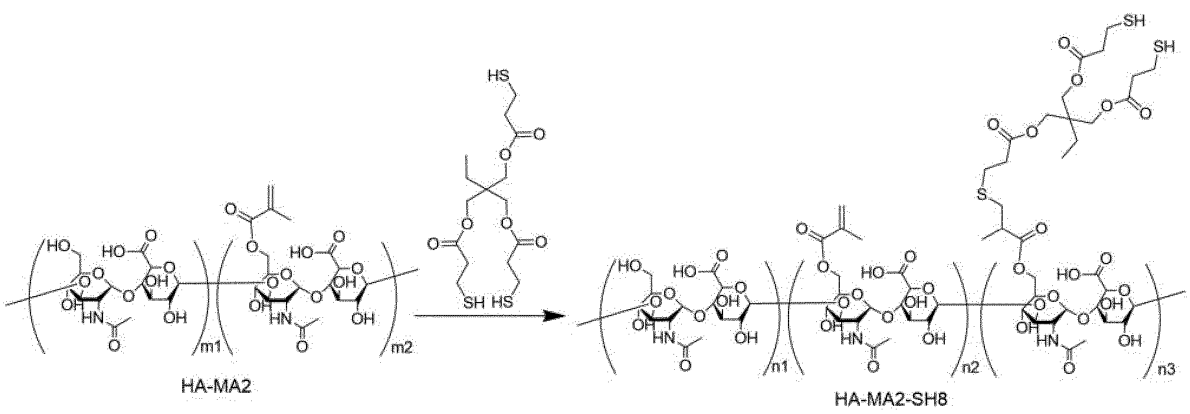

HA-MA2 HA-MA2-SH8

FIG. 25

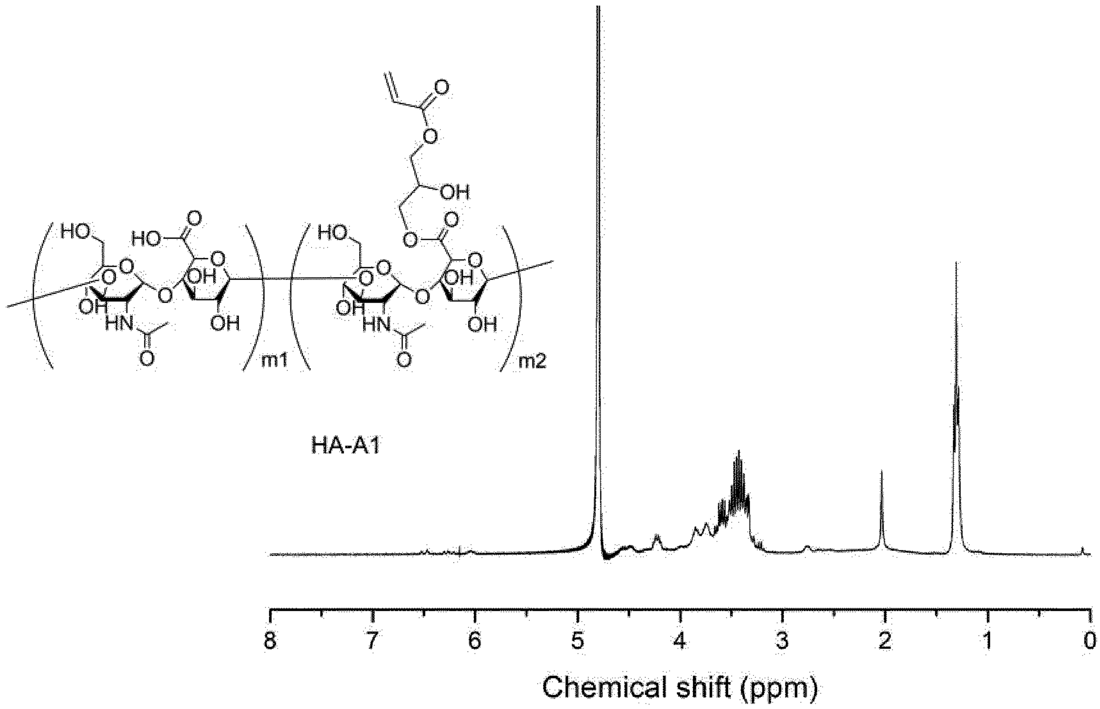
HA-A1
8 7 6 5 4 3 2 1 0
Chemical shift (ppm)

FIG. 26

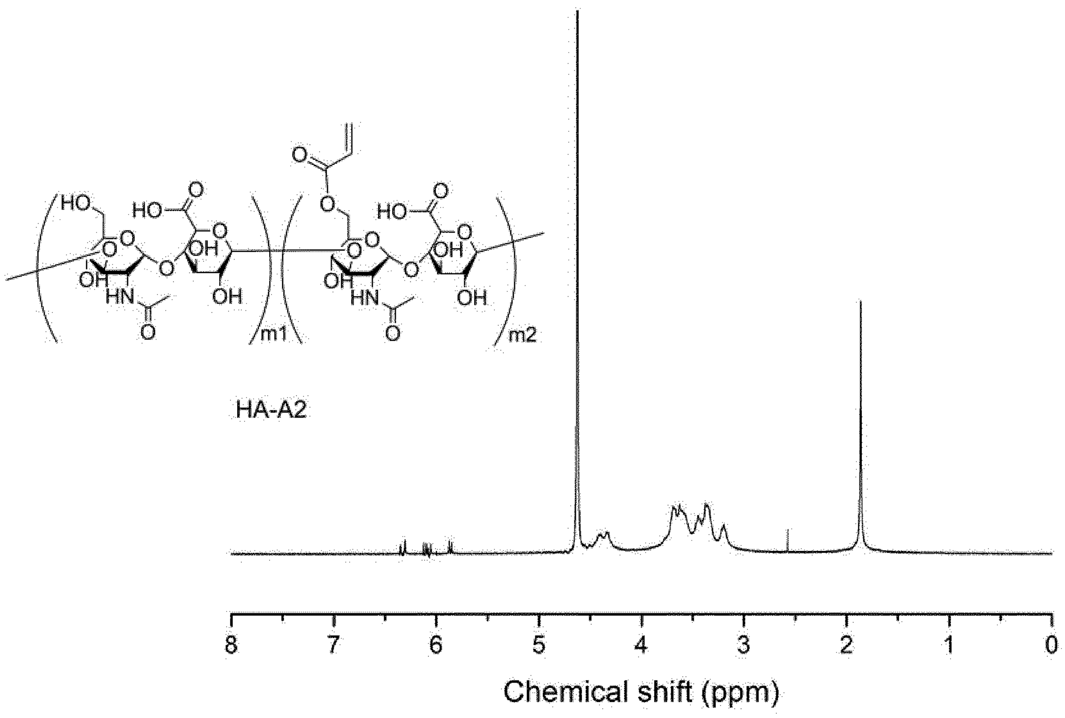
HA-A2
8 7 6 5 4 3 2 1 0
Chemical shift (ppm)

FIG. 27

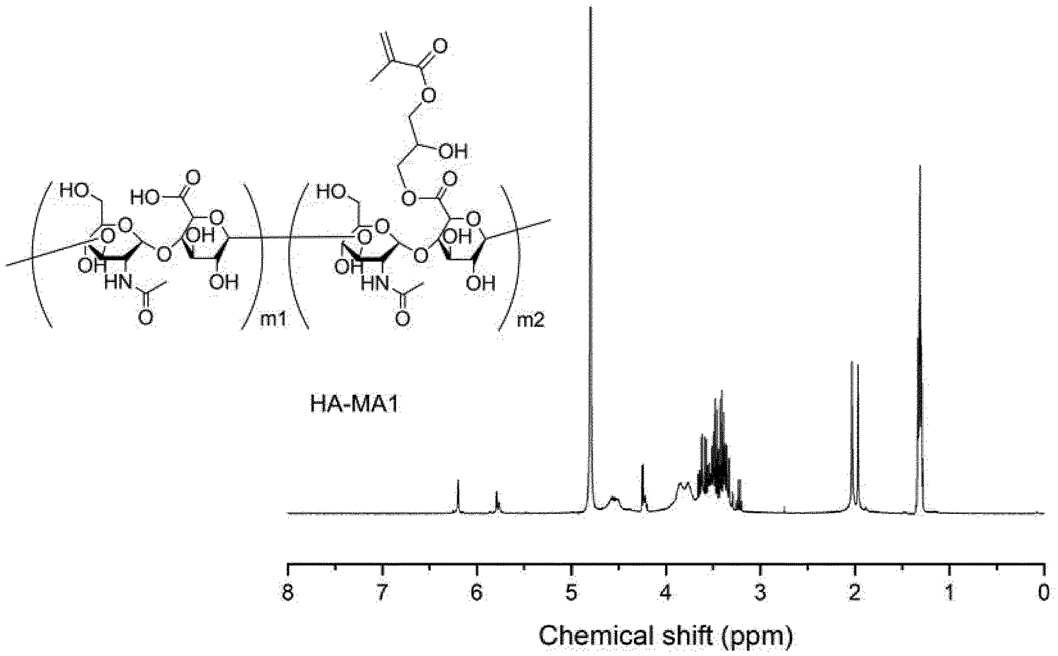
HA-MA1
8 7 6 5 4 3 2 1 0
Chemical shift (ppm)

FIG. 28

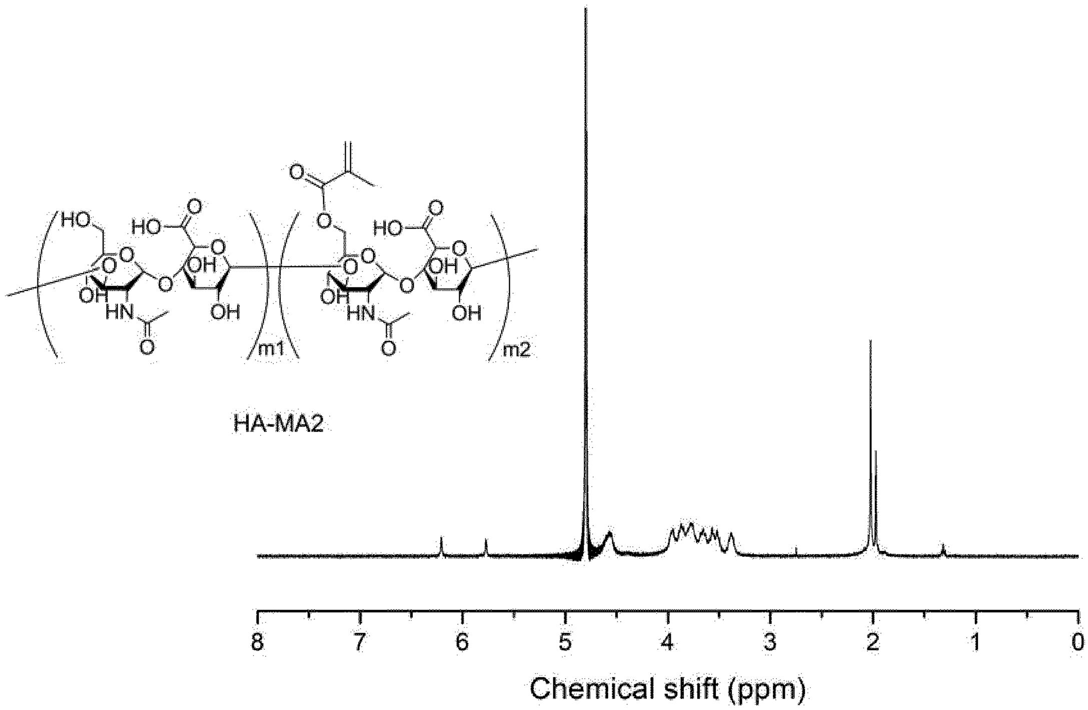
HA-MA2
8 7 6 5 4 3 2 1 0
Chemical shift (ppm)

FIG. 29

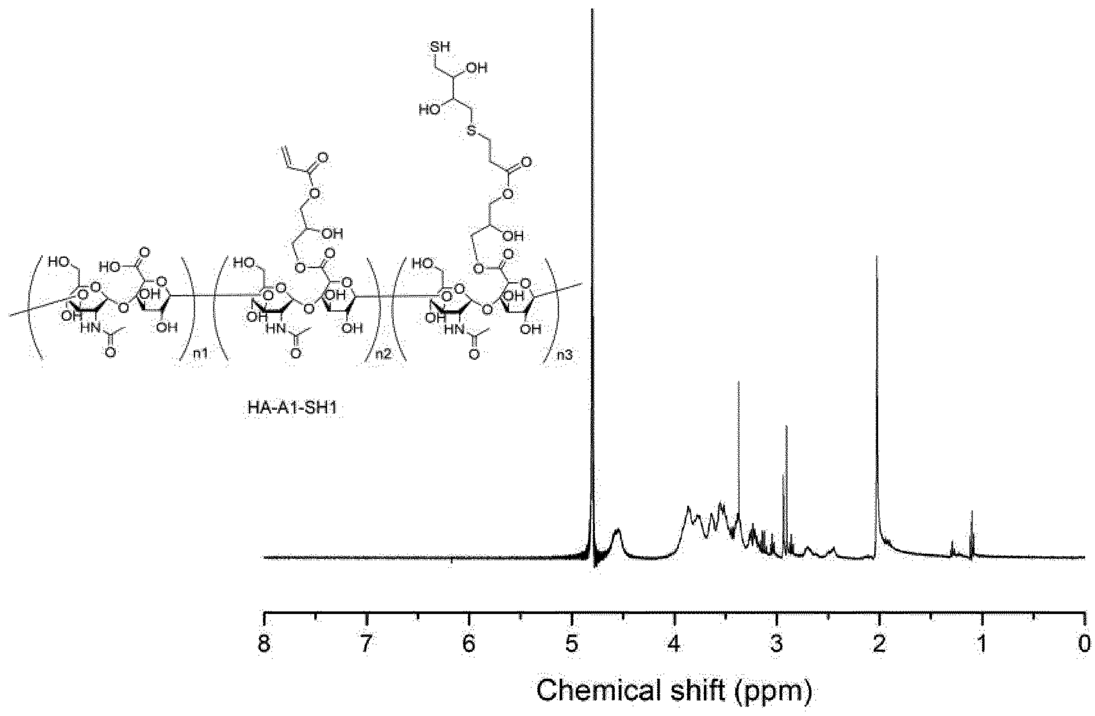


HA-A1-SH1

FIG. 30

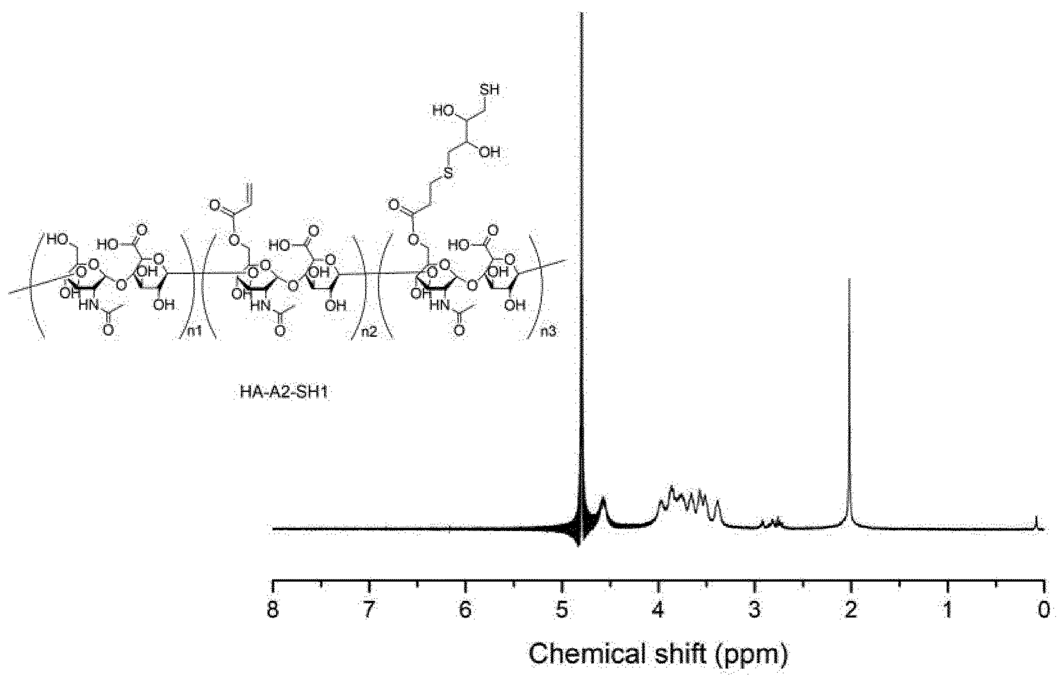


HA-A2-SH1

FIG. 31

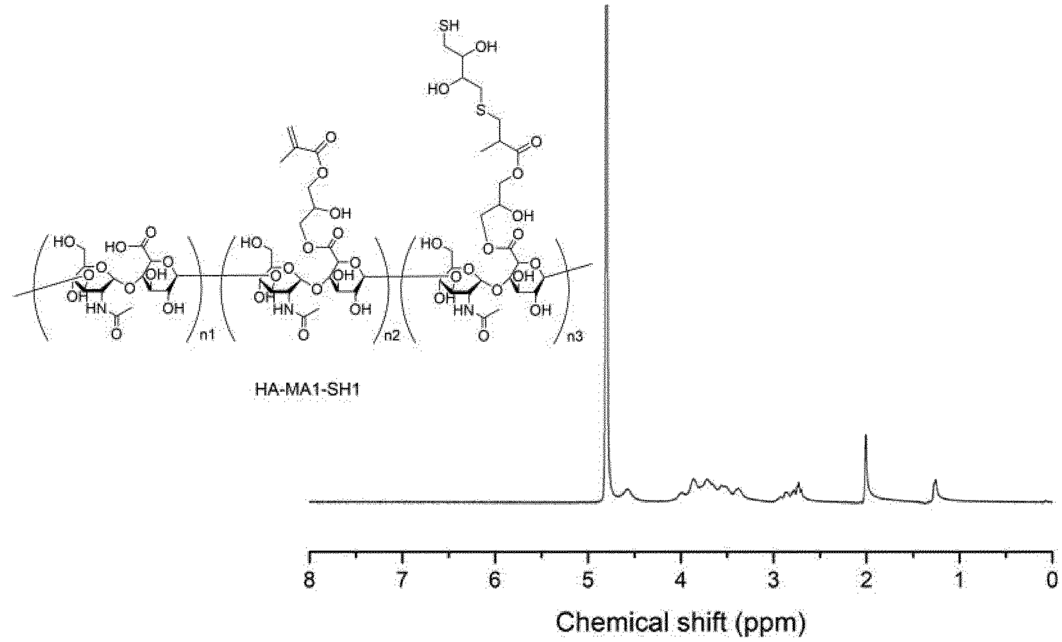
HA-MA1-SH1
8
7
6
5
4
3
2
1
0
Chemical shift (ppm)

FIG. 32

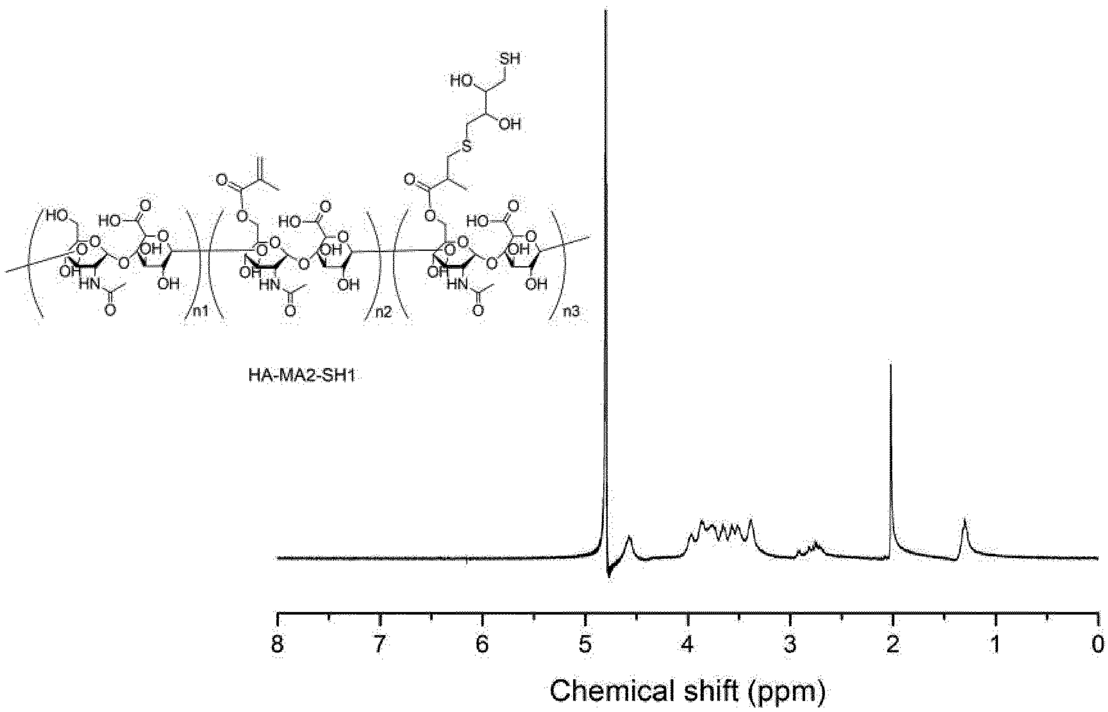
HA-MA2-SH1
8
7
6
5
4
3
2
1
0
Chemical shift (ppm)

FIG. 33

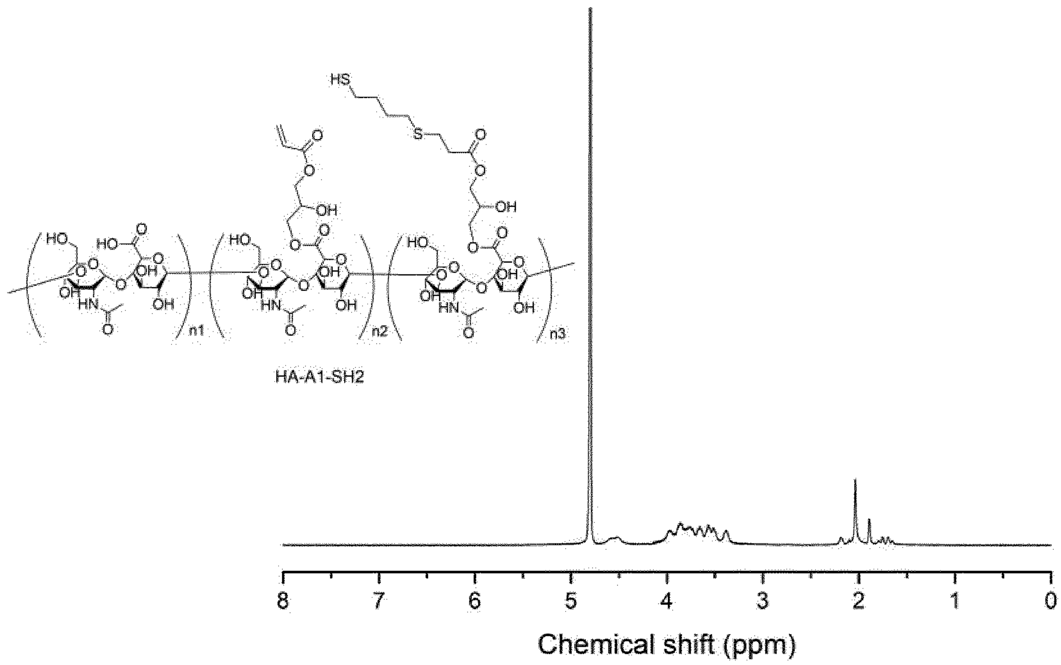
HA-A1-SH2
8 7 6 5 4 3 2 1 0
Chemical shift (ppm)

FIG. 34

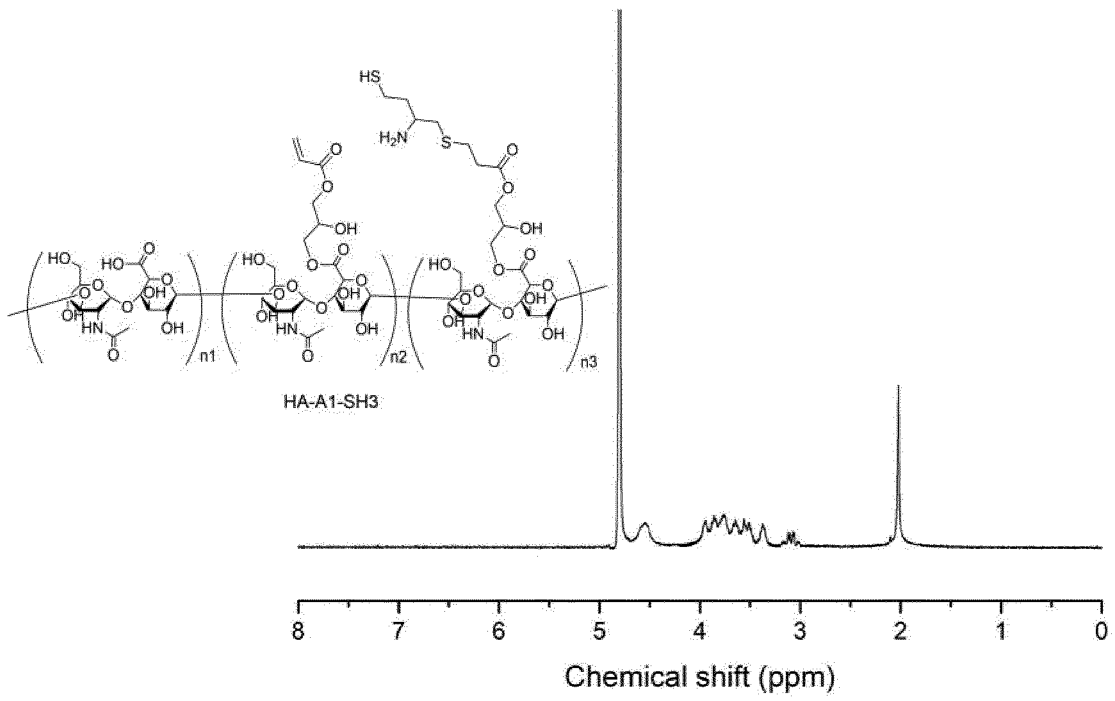
HA-A1-SH3
8 7 6 5 4 3 2 1 0
Chemical shift (ppm)

FIG. 35

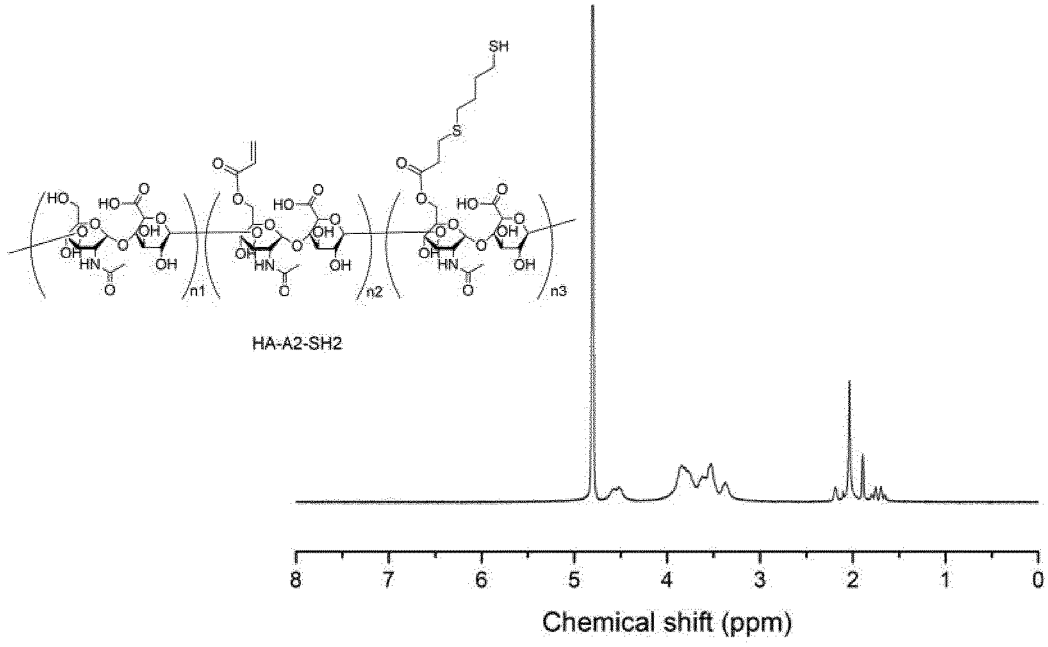


HA-A2-SH2

FIG. 36

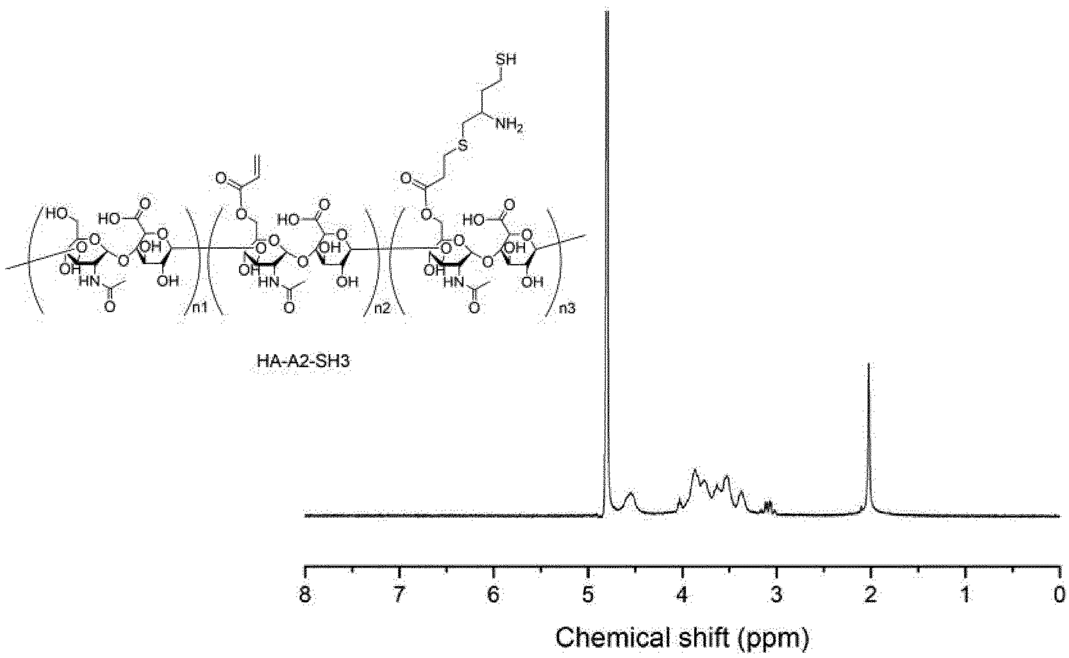


HA-A2-SH3

FIG. 37

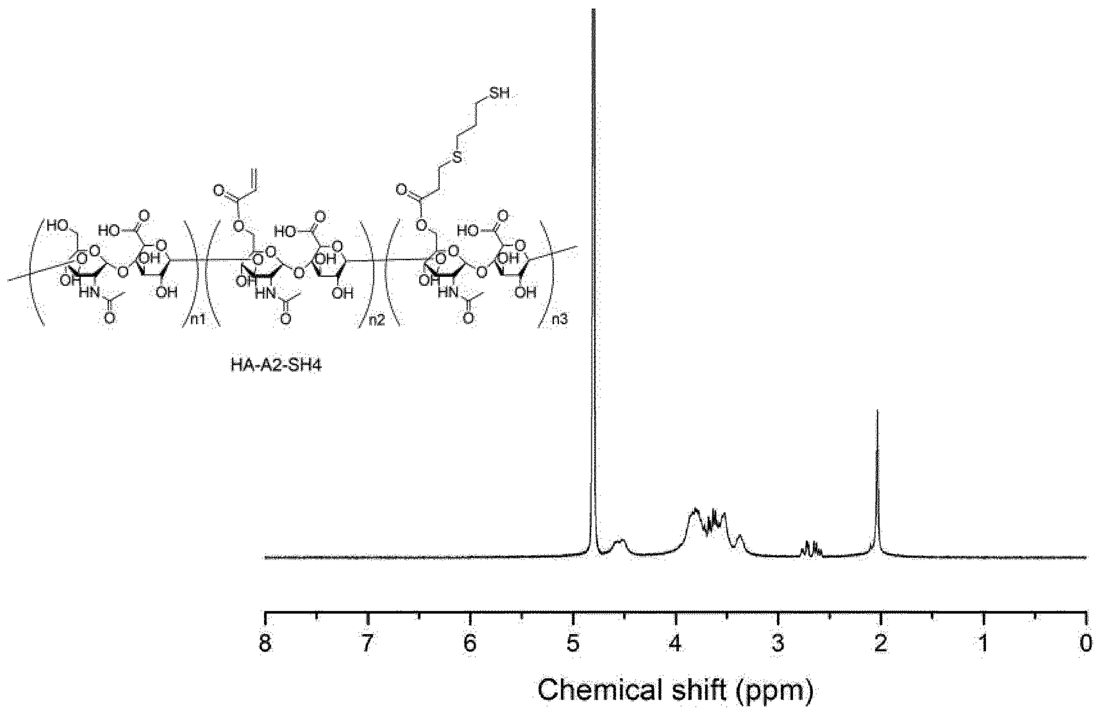


HA-A2-SH4

FIG. 38

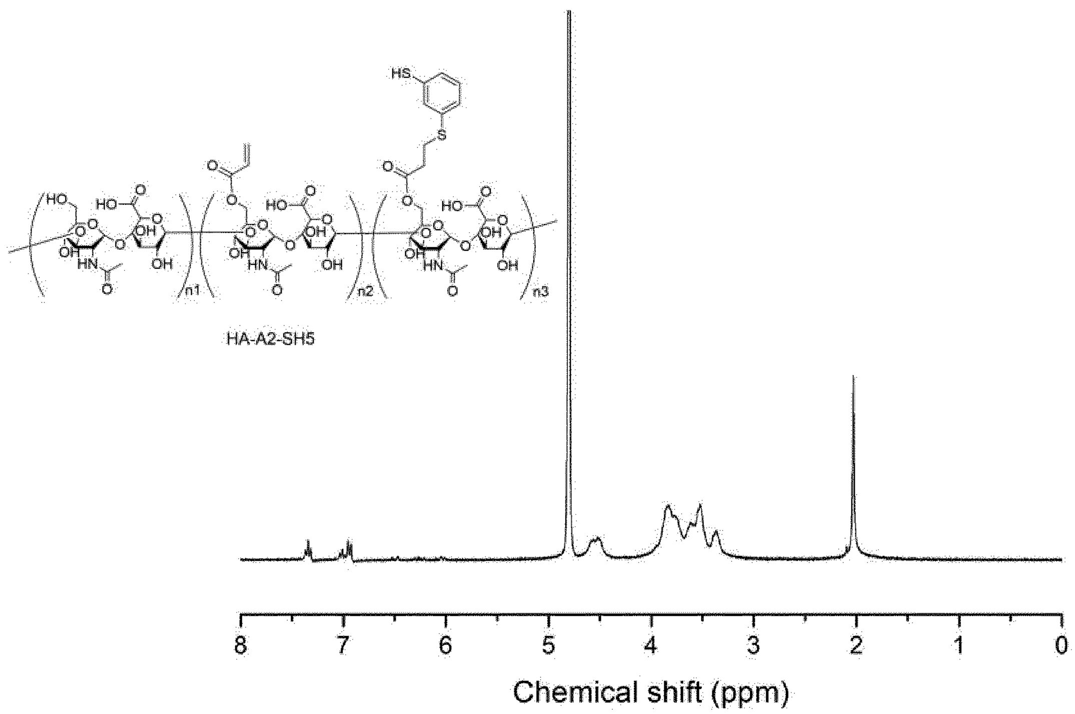


HA-A2-SH5

FIG. 39

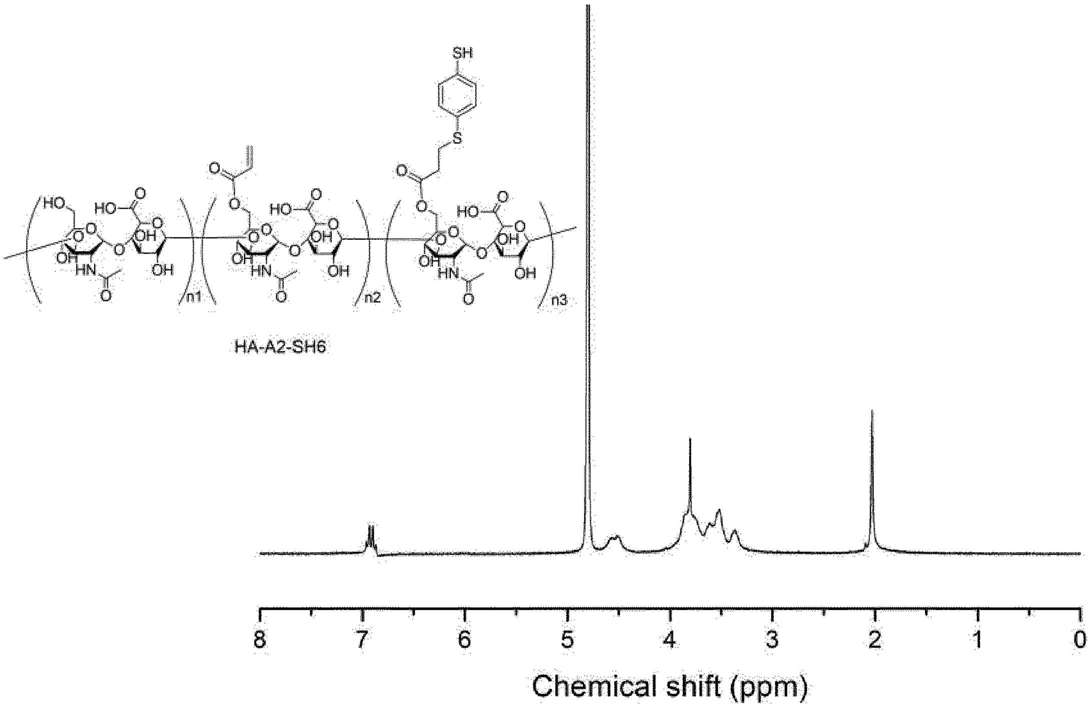
HA-A2-SH6
8 7 6 5 4 3 2 1 0
Chemical shift (ppm)

FIG. 40

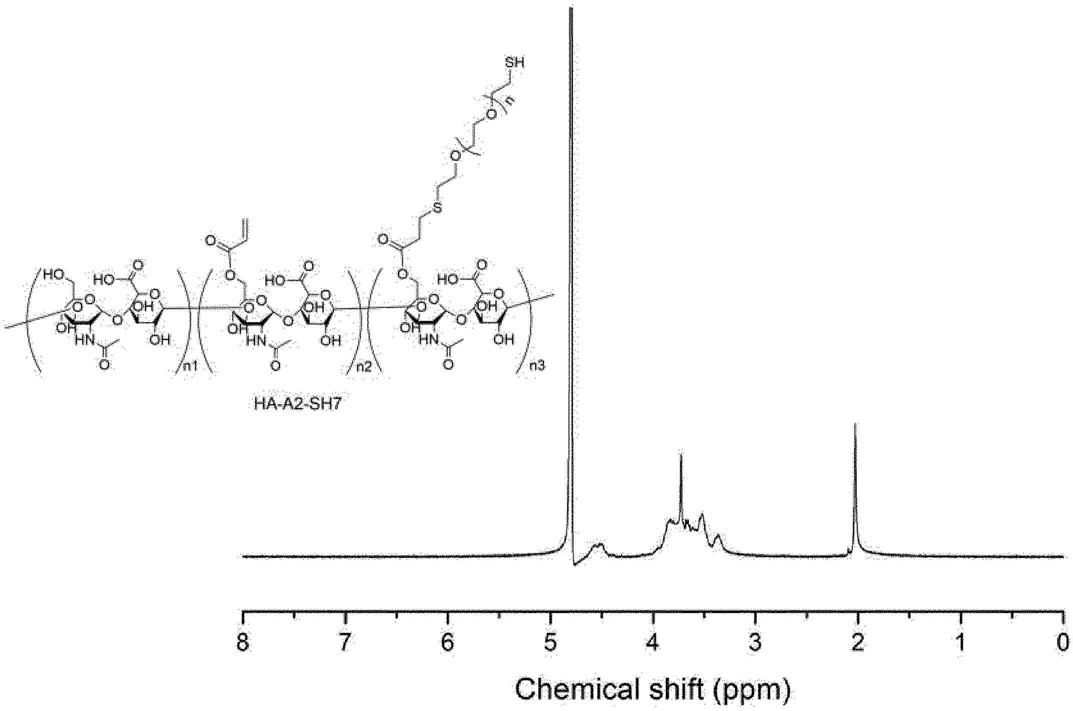
HA-A2-SH7
8 7 6 5 4 3 2 1 0
Chemical shift (ppm)

FIG. 41

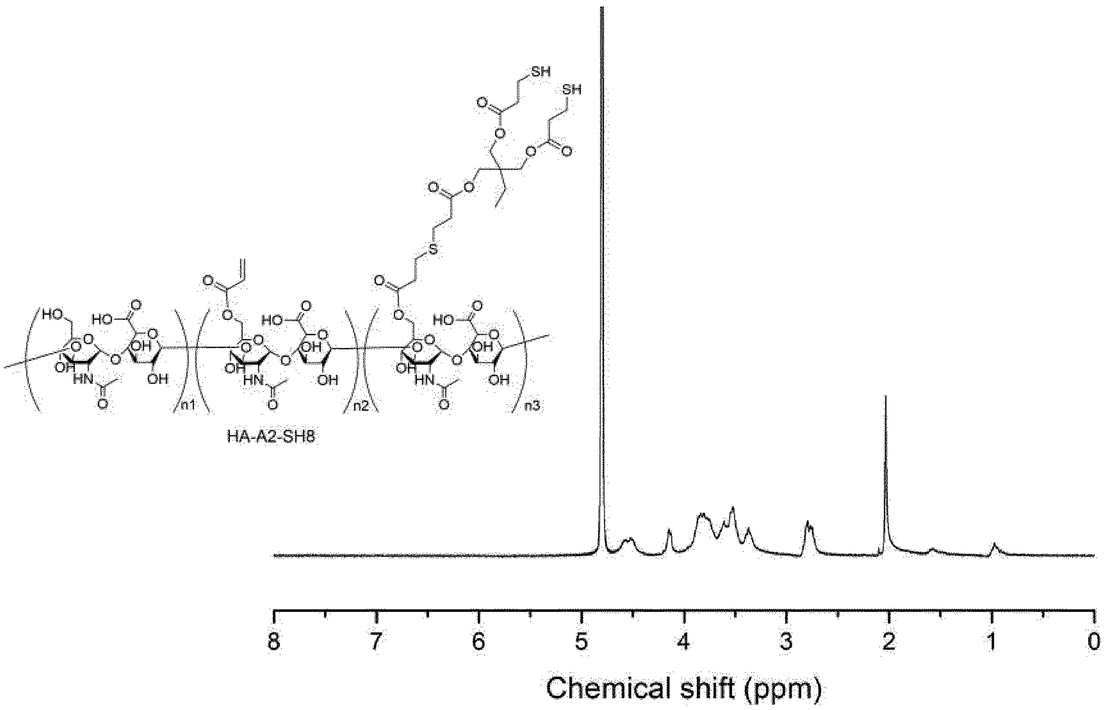
HA-A2-SH8
8 7 6 5 4 3 2 1 0
Chemical shift (ppm)

FIG. 42

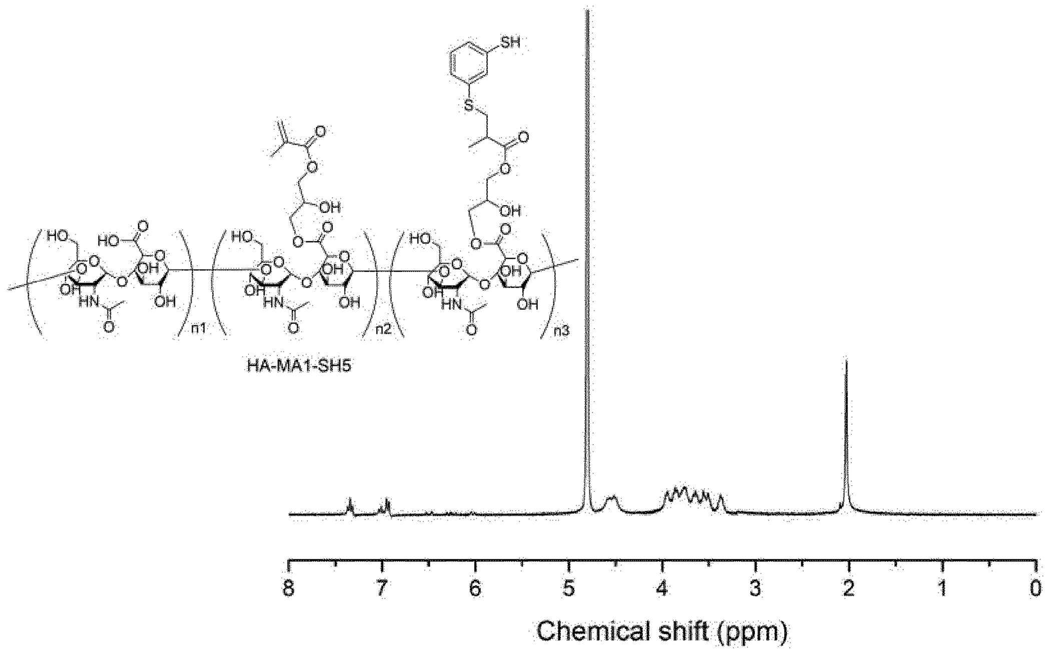
HA-MA1-SH5
8 7 6 5 4 3 2 1 0
Chemical shift (ppm)

FIG. 43

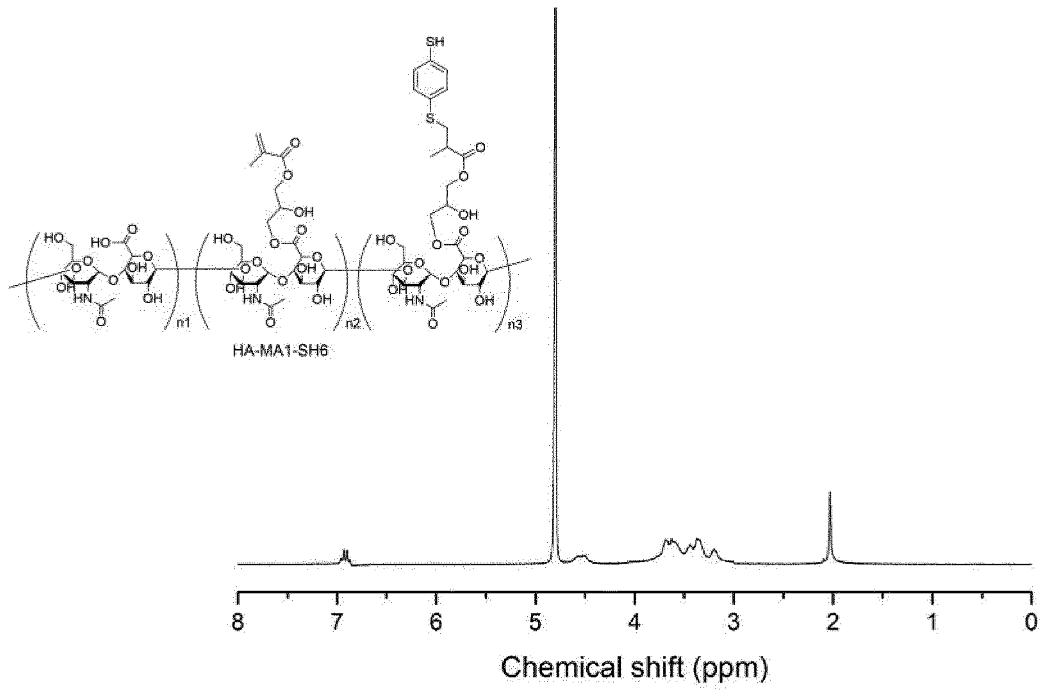
HA-MA1-SH6


FIG. 44

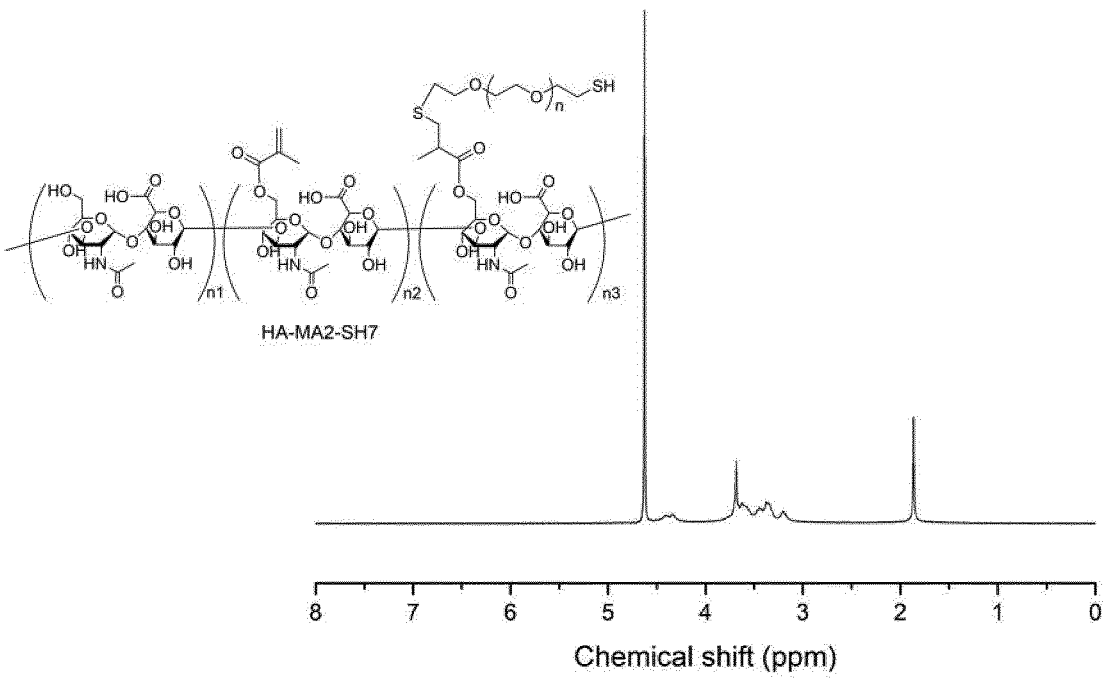
HA-MA2-SH7


FIG. 45

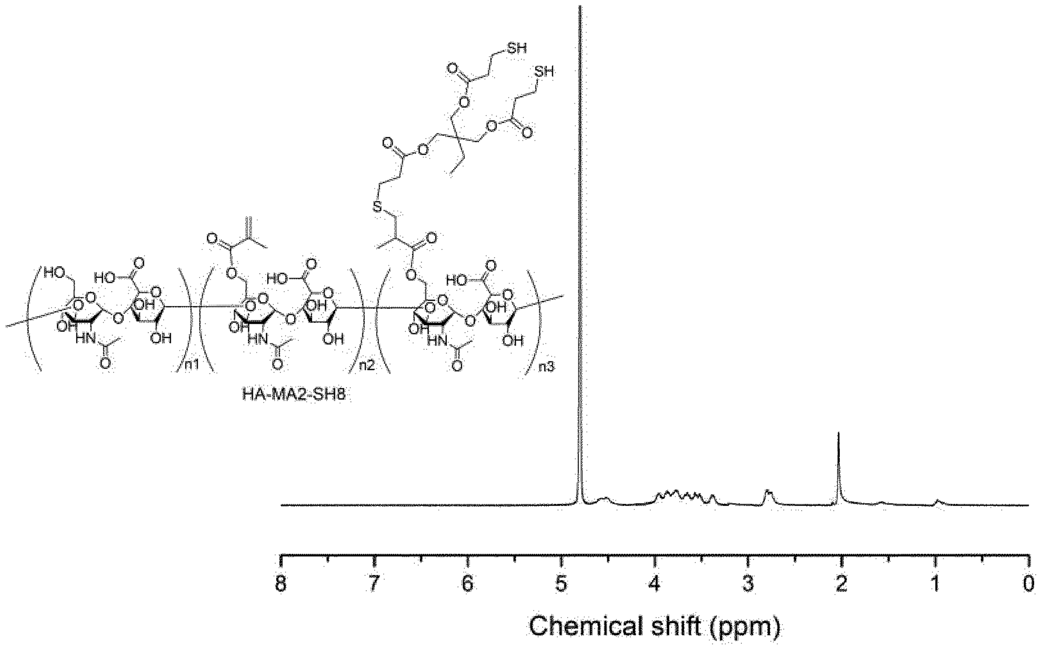


HA-MA2-SH8

FIG. 46

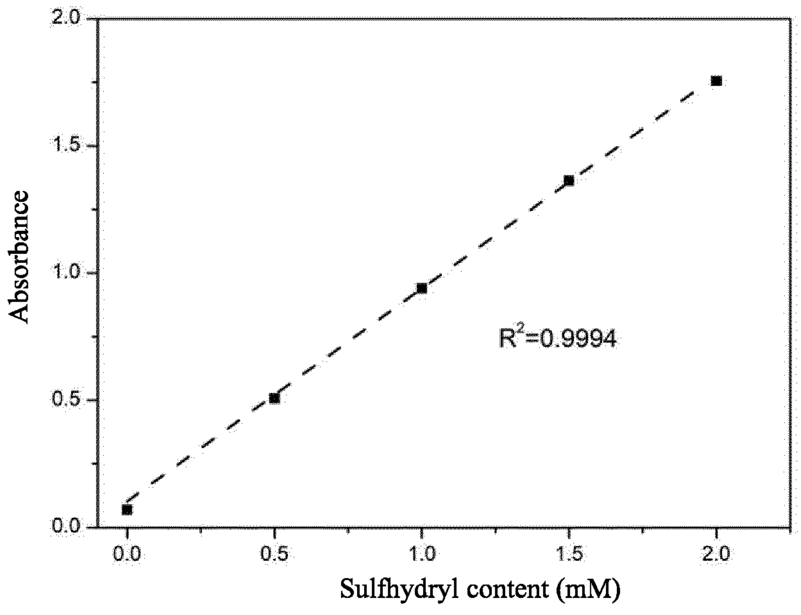


FIG. 47

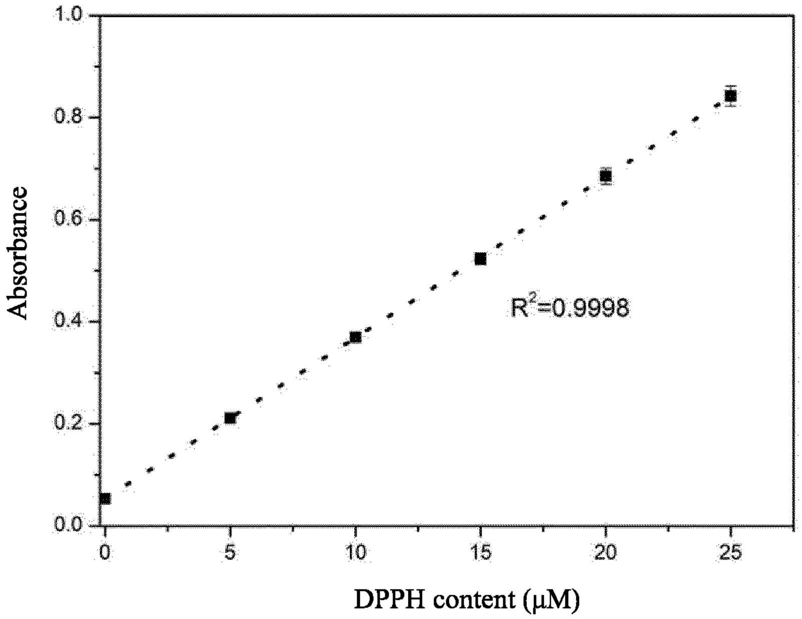

1.0
0.8
0.6
0.4
0.2
0.0
Absorbance
$R^2$=0.9998
0
5
10
15
20
25
DPPH content (μM)


FIG. 48

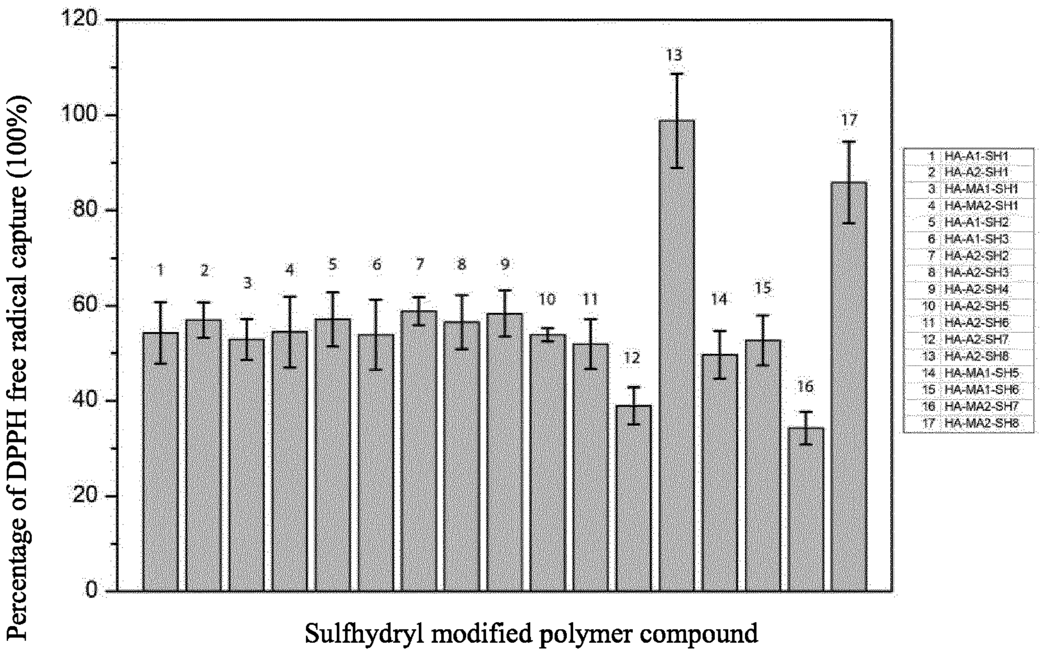

120
100
80
60
40
20
0
Percentage of DPPH free radical capture (100%)
Sulfhydryl modified polymer compound
1 HA-A1-SH1
2 HA-A2-SH1
3 HA-MA1-SH1
4 HA-MA2-SH1
5 HA-A1-SH2
6 HA-A1-SH3
7 HA-A2-SH2
8 HA-A2-SH3
9 HA-A2-SH4
10 HA-A2-SH5
11 HA-A2-SH6
12 HA-A2-SH7
13 HA-A2-SH8
14 HA-MA1-SH5
15 HA-MA1-SH6
16 HA-MA2-SH7
17 HA-MA2-SH8


FIG. 49

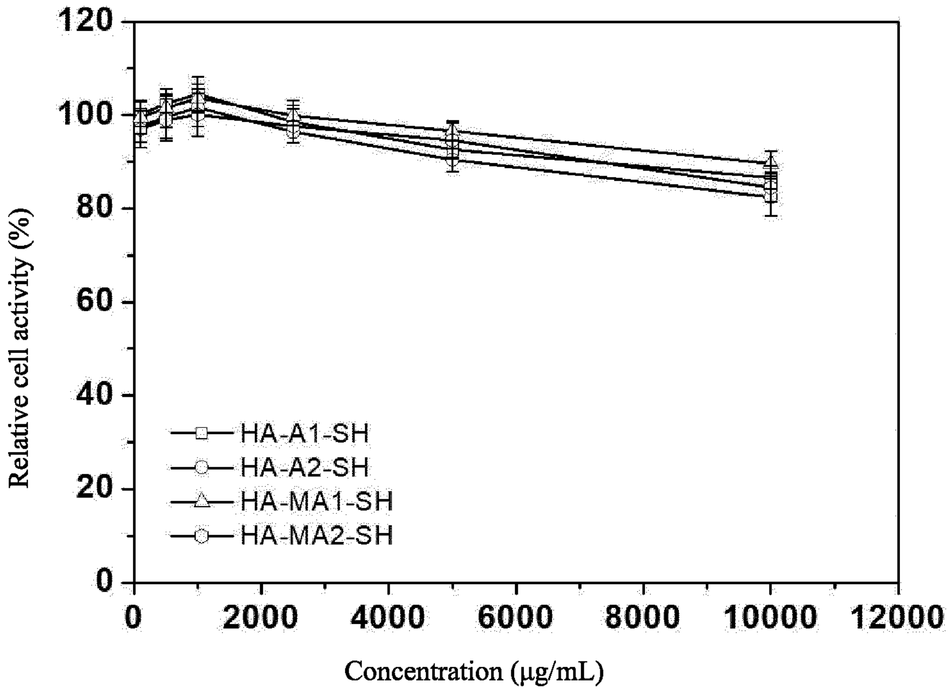
120
100
80
60
40
20
0
Relative cell activity (%)
HA-A1-SH
HA-A2-SH
HA-MA1-SH
HA-MA2-SH
0
2000
4000
6000
8000
10000
12000
Concentration (μg/mL)

FIG. 50

## INTERNATIONAL SEARCH REPORT

International application No.
**PCT/CN2020/079821**

**A. CLASSIFICATION OF SUBJECT MATTER**

C08B 37/08(2006.01)i

According to International Patent Classification (IPC) or to both national classification and IPC

**B. FIELDS SEARCHED**

Minimum documentation searched (classification system followed by classification symbols)

C08B

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, USTXT, CNKI, 万方, 读秀, 百度, web of science, Google scholar, STN: 李朗乎, 王文新, wang wenxin, wang wen-xin, 透明质酸, 玻璃酸, 玻尿酸, 糖醛酸, HA, 巯基, 氢硫, 硫醇, 硫酚, 丙烯酸, 丙烯酰, 烯, 双键, 聚合, 自由基, 迈克尔加成, 麦克尔加成, 点击化学, 点击, 二硫苏糖醇, 丁二硫醇, 丙二硫醇, 苯二甲硫醇, 苯二硫酚, 巯基聚乙二醇, 三羟甲基丙烷基-三（3-巯基丙酸酯）, BLAFAR LIMITED , hyaluron+, acrylic+, acrylat+, mercapt+, thiophenol+, sulfhydryl+, thiol+, +diol, +thiol, thio+, ene? dithiothreitol?, +dithiol, mercaptopolyethylene glycol, trimethylolpropane-tris"("3-mercaptopropionate")", Michael addition+, Click chemi+

**C. DOCUMENTS CONSIDERED TO BE RELEVANT**

| Category* | Citation of document, with indication, where appropriate, of the relevant passages | Relevant to claim No. |
|---|---|---|
| PX | US 2019365902 A1 (MANN BRENDA K) 05 December 2019 (2019-12-05)<br>description paragraphs 2-10, 36 and embodiment 6 | 1-10 |
| X | WO 2016050788 A1 (OREAL) 07 April 2016 (2016-04-07)<br>description page 4, lines 5-12, page 9 line 35- page 14 line 13, page 19 lines 34-37, page 22 lines 29-41, page 23 lines 12-25, page 27 line 25- page 29 line 11, embodiment 1a' | 1-10 |
| X | WO 2016050786 A1 (OREAL) 07 April 2016 (2016-04-07)<br>description, page 4 paragraph 7- page 8 paragraph 1, page 17 paragraphs 5-6, page 22 paragraph 8- page 23 paragraph 8, page 25 paragraph 5- page 27 paragraph 1, embodiment 1a" | 1-10 |
| X | CN 104140541 A (BEIJING UNIVERSITY OF CHEMICAL TECHNOLOGY) 12 November 2014 (2014-11-12)<br>description, paragraphs 4-35 | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 July 2020** | **06 August 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2020/079821**

| C. DOCUMENTS CONSIDERED TO BE RELEVANT | | |
|---|---|---|
| Category* | Citation of document, with indication, where appropriate, of the relevant passages | Relevant to claim No. |
| X | Panita Maturavongsadit et al. ""Promotion of In Vitro Chondrogenesis of Mesenchymal Stem Cells Using In Situ Hyaluronic Hydrogel Functionalized with Rod-Like Viral Nanoparticles"" 《*Biomacromolecules*》, Vol. 17, 21 March 2016 (2016-03-21), ISSN: 1525-7779, pp. 1930-1938 | 1-10 |
| X | Badriprasad Ananthanarayanan et al. ""Elucidating the mechanobiology of malignant brain tumors using a brain matrix-mimetic hyaluronic acid hydrogel platform"" *Biomaterials,* Vol. 32, 05 August 2011 (2011-08-05), ISSN: 0142-9612, pp. 7913-7923 | 1-10 |
| X | Christopher B.Rodell et al. ""Injectable and Cytocompatible Tough Double-Network Hydrogels through Tandem Supramolecular and Covalent Crosslinking"" 《*Adv. Mater.*》, Vol. 28, 01 August 2016 (2016-08-01), ISSN: 0935-9648, pp. 8419-8424 | 1-10 |
| X | Jungju Kim et al. ""Characterization of low-molecular-weight hyaluronic acid-based hydrogel and differential stem cell responses in the hydrogel microenvironments"" 《*Journal of Biomedical Materials Research Part A*》, Vol. 88A, No. 4, 02 April 2008 (2008-04-02), ISSN: 1549-3296, pp. 967-975 | 1-10 |
| X | H.Obata et al. ""Synthesis and evaluation of hyaluronic acid hydrogels modified with various crosslinkers as biodegradable polymers"" 《*J.APPL.POLYM.SCI.*》, Vol. 134, No. 43, 11 July 2017 (2017-07-11), ISSN: 0021-8995, pages 454453（1-7） | 1-10 |
| X | CN 104224688 A (BEIJING UNIVERSITY OF CHEMICAL TECHNOLOGY) 24 December 2014 (2014-12-24) description, paragraphs 6-23 | 1-10 |
| X | CN 101351490 A (SEOUL NATIONL UNIVERSITY OF TE) 21 January 2009 (2009-01-21) description embodiment 4, embodiment 21, page 14 paragraph 2- page 16 paragraph 1, page 31 paragraph 1 | 1-10 |
| X | KR 20070073008 A (UNIV IND & ACAD COLLABORATION) 10 July 2007 (2007-07-10) description, examples of manufacturing 1-2, page 2 paragraph 4 - page 5 paragraph 6, page 8 paragraphs 4-6 | 1-10 |
| X | WO 2019217765 A1 (UNIV JOHNS HOPKINS) 14 November 2019 (2019-11-14) description embodiment 1, page 66 line 6- page 67 line 20 | 1-10 |
| X | CN 106478841 A (HAINAN UNIVERSITY) 08 March 2017 (2017-03-08) description, paragraphs 9-35 | 1-10 |
| X | CN 105732989 A (WUHAN TEXTILE UNIVERSITY) 06 July 2016 (2016-07-06) description, paragraphs 4-10 | 1-10 |
| A | CN 104774903 A (ZHOU, Guangqian) 15 July 2015 (2015-07-15) entire document | 1-10 |
| A | CN 109666168 A (WENG, Qiumei) 23 April 2019 (2019-04-23) entire document | 1-10 |
| A | CN 108676178 A (UNIVERSITY OF JINAN) 19 October 2018 (2018-10-19) entire document | 1-10 |
| A | CN 107200854 A (WUHAN TEXTILE UNIVERSITY) 26 September 2017 (2017-09-26) entire document | 1-10 |
| A | CN 107899075 A (ZHEJIANG UNIVERSITY) 13 April 2018 (2018-04-13) entire document | 1-10 |

Form PCT/ISA/210 (second sheet) (January 2015)

**INTERNATIONAL SEARCH REPORT**

International application No.
**PCT/CN2020/079821**

**C. DOCUMENTS CONSIDERED TO BE RELEVANT**

| Category* | Citation of document, with indication, where appropriate, of the relevant passages | Relevant to claim No. |
|---|---|---|
| A | CN 107095859 A (SICHUAN UNIVERSITY) 29 August 2017 (2017-08-29)<br>entire document | 1-10 |
| A | CN 109475573 A (PURDUE RESEARCH FOUNDATION) 15 March 2019 (2019-03-15)<br>entire document | 1-10 |

Form PCT/ISA/210 (second sheet) (January 2015)

**INTERNATIONAL SEARCH REPORT**

International application No.
**PCT/CN2020/079821**

**Box No. II Observations where certain claims were found unsearchable (Continuation of item 2 of first sheet)**

This international search report has not been established in respect of certain claims under Article 17(2)(a) for the following reasons:

1. ☑ Claims Nos.: **10**（部分）
because they relate to subject matter not required to be searched by this Authority, namely:

[1] The technical solution in claim 10 of a use in the field of "biomedicine and medical and cosmetic plastic surgery" relates to a method for treatment of the human or animal body by therapy or surgery, which belongs to excluded subject matter, thus not complying with PCT Rule 39.1(iv).

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**INTERNATIONAL SEARCH REPORT**
**Information on patent family members**

International application No.
**PCT/CN2020/079821**

| Patent document cited in search report | | | Publication date (day/month/year) | Patent family member(s) | | | Publication date (day/month/year) |
|---|---|---|---|---|---|---|---|
| US | 2019365902 | A1 | 05 December 2019 | None | | | |
| WO | 2016050788 | A1 | 07 April 2016 | FR | 3026299 | B1 | 25 November 2016 |
| | | | | FR | 3026299 | A1 | 01 April 2016 |
| WO | 2016050786 | A1 | 07 April 2016 | FR | 3026298 | A1 | 01 April 2016 |
| | | | | FR | 3026298 | B1 | 01 December 2017 |
| CN | 104140541 | A | 12 November 2014 | None | | | |
| CN | 104224688 | A | 24 December 2014 | CN | 104224688 | B | 10 October 2017 |
| CN | 101351490 | A | 21 January 2009 | WO | 2007083870 | A1 | 26 July 2007 |
| | | | | KR | 100849185 | B1 | 30 July 2008 |
| | | | | US | 2009238875 | A1 | 24 September 2009 |
| | | | | JP | 2009518498 | A | 07 May 2009 |
| | | | | KR | 20070076742 | A | 25 July 2007 |
| KR | 20070073008 | A | 10 July 2007 | KR | 100737954 | B1 | 13 July 2007 |
| WO | 2019217765 | A1 | 14 November 2019 | US | 2020030496 | A1 | 30 January 2020 |
| CN | 106478841 | A | 08 March 2017 | CN | 106478841 | B | 19 February 2019 |
| CN | 105732989 | A | 06 July 2016 | CN | 105732989 | B | 06 November 2018 |
| CN | 104774903 | A | 15 July 2015 | None | | | |
| CN | 109666168 | A | 23 April 2019 | None | | | |
| CN | 108676178 | A | 19 October 2018 | None | | | |
| CN | 107200854 | A | 26 September 2017 | None | | | |
| CN | 107899075 | A | 13 April 2018 | None | | | |
| CN | 107095859 | A | 29 August 2017 | CN | 107095859 | B | 10 March 2020 |
| CN | 109475573 | A | 15 March 2019 | US | 2017354758 | A1 | 14 December 2017 |
| | | | | US | 2019184024 | A1 | 20 June 2019 |
| | | | | WO | 2017218532 | A1 | 21 December 2017 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 201911130065
- CN 101511875 A
- CN 101200504 A
- CN 103613686 A


### Non-patent literature cited in the description


- *Biomacromolecules,* 2002, vol. 3, 1304
- *Biomaterials,* 2008, vol. 29, 1388
- *J Biomed Mater Res A.,* 2007, vol. 80, 916
- *Journal of Controlled Release,* 2007, vol. 119, 245
- *Acta Biomaterialia,* 2012, vol. 8, 3643
- *International Journal of Pharmaceutics,* 2015, vol. 478, 383